(19) Europäisches Patentamt / European Patent Office / Office européen des brevets

(11) **EP 4 397 480 A1**

(12) **EUROPEAN PATENT APPLICATION**
published in accordance with Art. 153(4) EPC

(43) Date of publication:
**10.07.2024 Bulletin 2024/28**

(51) International Patent Classification (IPC):
**B32B 7/06** (2019.01) **B32B 27/20** (2006.01)
**B42D 25/30** (2014.01) **B44C 1/17** (2006.01)
**G06K 19/06** (2006.01) **G06K 19/14** (2006.01)
**G07D 7/2033** (2016.01) **H04L 9/32** (2006.01)
**G06F 21/64** (2013.01) **G06F 21/73** (2013.01)

(21) Application number: **22864571.9**

(52) Cooperative Patent Classification (CPC):
**B32B 7/06; B32B 27/20; B42D 25/30; B44C 1/17;
G06K 19/06; G06K 19/14; G07D 7/2033;
H04L 9/32;** G06F 21/64; G06F 21/73

(22) Date of filing: **30.08.2022**

(86) International application number:
**PCT/JP2022/032610**

(87) International publication number:
**WO 2023/032989 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.08.2021 JP 2021140038**
**15.03.2022 JP 2022040489**
**28.03.2022 JP 2022052102**

(71) Applicant: **TOPPAN INC.**
**Tokyo 110-0016 (JP)**

(72) Inventors:
• **IRIE, Saki**
**Tokyo 110-0016 (JP)**
• **KODA, Soko**
**Tokyo 110-0016 (JP)**
• **DOI, Ryuji**
**Tokyo 110-0016 (JP)**
• **MITSUI, Kazunari**
**Tokyo 110-0016 (JP)**

(74) Representative: **Hoffmann Eitle**
**Patent- und Rechtsanwälte PartmbB**
**Arabellastraße 30**
**81925 München (DE)**

(54) **TRANSFER FOIL, TRANSFER ARTICLE, DISPLAY BODY, METHOD AND DEVICE FOR VERIFYING AUTHENTICITY OF DISPLAY BODY, AND INDIVIDUAL AUTHENTICATION METHOD**

(57) In this transfer foil, a transfer material layer and a support body for releasably supporting the transfer material layer are laminated. A first release strength at a first temperature when the transfer material layer is released from the support body is 0.1 gf/mm or more and 0.3 gf/mm or less. A difference between the first release strength and a second release strength at a second temperature that is higher than the first temperature and lower than a transfer temperature when the transfer material layer is released from the support body is 0.05 gf/mm or more and 0.2 gf/mm or less.

FIG.1

HOT STAMPING MACHINE

EP 4 397 480 A1

**Description**

[Technical Field]

The present invention relates to a transfer foil, a transfer article, a display, a method and device for verifying authenticity of a display, and an individual authentication method.

[Background Art]

Conventionally, hologram transfer foils are hot stamped on authentication bodies such as ID cards, cash vouchers, banknotes, passports, and driver's licenses to prevent counterfeiting. When hot stamping a hologram, a transfer foil is hot pressed onto a transfer target using a heated die, which transfers a releasable transfer material layer of the transfer foil onto the transfer target in the shape of the die.

However, when hot stamping a transfer foil, burrs can sometimes be formed on the outer edge of the external shape of the die. This is because the heat of the die is also transferred outside the region to be transferred, which softens the transfer material, and causes a portion of the transfer material at the outer edge of the transfer region of the die part to be transferred along with the transfer material on the die part.

Although the burrs resulting from such hot stamping are not noticeable when they are small, the burrs become clearly visible when they become sufficiently large, which causes a reduction in the appearance quality of the product.

While the burrs formed by hot stamping have such a disadvantage, they are random and the external shape of the burrs is unique for each transfer foil. Therefore, it is impossible to reproduce burrs with exactly the same external shape, making it difficult to manufacture counterfeit articles. On the other hand, the burrs become noticeable when they become longer, which causes a reduction in the appearance quality. However, individual authentication becomes difficult when there are no burrs or the burrs are too small.

Furthermore, for example, a display (hereinafter referred to as an "identifier display") is known that is applied to pages, cards, banknotes, tickets, tags, labels, and in particular, pages of booklets such as passports, cards that include personal information such as driver's licenses, national ID (identification) cards, residence cards, and personal authentication cards, product tags, sensing tags, and brand protection labels.

In particular, passports, driver's licenses, and various ID cards such as national ID cards often display a facial photograph or text in order to allow visual identification of the personal information. This is because if the identifier is simply printed on the display, it can be easily tampered with or counterfeited.

As an anti-counterfeiting method of a display, PTL 4 describes an anti-counterfeiting technique that improves the anti-tampering property of a display by transferring a hologram transfer foil to the display.

PTL 5 describes a technique for additional anti-counterfeiting that uses reproduced information that is displayed on a hologram by irradiating the hologram with light of a specific wavelength for authenticity verification.

However, the anti-counterfeiting technique described in PTL 4 is already widely known, and a hologram that emits a simple iridescent diffracted light may be easily counterfeited.

Furthermore, in the authentication verification technique described in PTL 5, it is necessary to irradiate light of a specific wavelength for authenticity verification, which requires installation of an irradiation device in the authentication verification device that irradiates the light of a specific wavelength. This causes an increase in the cost of the authentication verification device.

In addition, if the authentication verification device is obtained and reverse-engineered by a counterfeiter, the method that is applied for authenticity verification, such as which wavelength is used for authenticity verification, may become known, and the display or the authentication verification device itself may be imitated.

Furthermore, conventionally, some authentication bodies are hot stamped with a hologram transfer foil for anti-counterfeiting. In such hot stamping of a hologram, a transfer article is obtained by hot pressing a transfer foil onto a transfer target using a heated die, which transfers a releasable transfer material layer of the transfer foil onto the transfer target in the shape of the die.

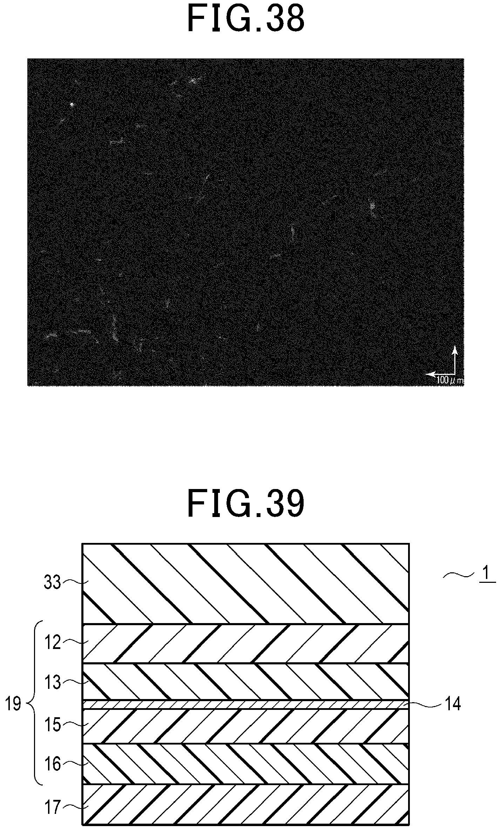

Fig. 39 is a side cross-sectional view showing a typical laminated structure of a transfer foil.

A typical transfer foil 1 illustrated in Fig. 39 is formed by laminating a substrate 33, a surface protective layer 12 such as a release layer, an optical formation layer 13 such as a hologram layer, a reflective layer 14 preferably formed of aluminum, a lower protective layer 15 such as a mask layer, a cushion layer 16, and an adhesive layer 17 in this order. The surface protective layer 12, the optical formation layer 13, the reflective layer 14, the lower protective layer 15, the cushion layer 16, and the adhesive layer 17 may be collectively referred to as a functional layer 19. The functional layer 19 can serve as a transfer material layer. In other words, the transfer material layer can be the functional layer 19.

This type of transfer foil 1 is rolled up and held in a roll during manufacturing. At this time, because of tight winding, the upper surface of the substrate 33 shown in Fig. 39 comes into contact with the lower surface of the adhesive layer 17, and the substrate 33 becomes adhered to the adhesive layer 17.

As a result, when the transfer foil 1 that has been rolled up is unrolled for transfer, the substrate 33 is not properly released from the adhesive 17, and blocking occurs in which the substrate 33 is peeled off from the surface protective layer 12 by the adhesive layer 17.

Therefore, a filler is disposed on the lower surface of the adhesive layer 17 shown in Fig. 39 so that blocking does not occur. As a result, when the transfer foil 1 is rolled up into a roll, the filler is interposed between the substrate 33 and the adhesive layer 17, and the adhesive effect of the adhesive 17 toward the substrate 33 is weakened, which eases the blocking.

However, when hot stamping is performed after the transfer foil 1 having the filler is disposed on the lower surface of the adhesive layer 17 is unrolled for transfer, the filler is pressed from the lower surface of the adhesive layer 17 toward the inner side of the transfer foil 1. As a result, the reflective layer 14 is pushed up, and pinhole-shaped voids can sometimes occur in the reflective layer 14.

This type of pinholes are randomly generated by chance, and are unique and cannot be reproduced.

[Citation List]

[Patent Literature]

PTL 1: JP 2018-183991 A
PTL 2: JP 2018-183992 A
PTL 3: WO 2018/194178
PTL 4: JP H6-67592 A
PTL 5: JP 4677683 B

[Summary of Invention]

A first object of the present invention is to provide a transfer foil that is formed such that, by setting the physical properties of a transfer material layer at room temperature and at a sticking temperature, being a temperature of the transfer material at the time of hot stamping, to an appropriate range, burrs are formed in an appropriate range so as to not extend too far from the transferred region but also not be so short that individual authentication becomes difficult, a display on which the transfer foil has been placed, and a verification method capable of easily verifying the authenticity of an individual display on which a transfer foil has been placed.

A second object of the present invention is to provide an authentication verification device that does not use special equipment for authenticity verification such as an irradiation device that irradiates light of a specific wavelength, and which makes tampering or counterfeiting of a display difficult even when reverse-engineered, and a method for verifying authenticity applied to the same.

A third object of the present invention is to provide an individual authentication method that uses the characteristics of pinholes formed in a transfer foil in individual authentication of a transfer article.

However, in reality, such pinholes are not always formed, and sometimes may not be formed. On the other hand, when large pinholes are formed, because the appearance quality of the transfer article is reduced, it cannot be used as a product. As a result, it is not easy to form pinholes that are appropriate for use in individual authentication without reducing the quality of the transfer article.

As a result, a fourth object of the present invention is to provide a transfer foil in which it is possible to form pinholes that can be used in individual authentication while performing control that prevents the appearance quality of the transfer article from being affected.

A fifth object of the present invention is to provide a transfer article formed by transferring such a transfer foil.

[Solution to Problem]

To achieve the first object above, the present invention adopts the following means.

A first aspect of the present invention is a transfer foil formed by laminating a transfer material layer and a support body for releasably supporting the transfer material layer, wherein a first release strength at a first temperature when the transfer material layer is released from the support body is 0.1 gf/mm or more and 0.3 gf/mm or less, and a difference between the first release strength and a second release strength at a second temperature that is higher than the first temperature and lower than a transfer temperature when the transfer material layer is released from the support body is 0.05 gf/mm or more and 0.2 gf/mm or less.

A second aspect of the present invention is the transfer foil according to the first aspect, wherein the transfer material layer is composed of a multilayer structure in which a surface protective layer, an optical formation layer, a reflective layer, a lower protective layer, a cushion layer, and an adhesive layer are laminated from the support body side.

A third aspect of the present invention is the transfer foil according to the second aspect, wherein the optical formation layer is a urethane resin having a thickness of 0.5 $\mu$m or more and 2.0 $\mu$m or less.

A fourth aspect of the present invention is the transfer foil according to the second or third aspect, wherein the reflective layer has a thickness of 30 nm or more and 200 nm or less.

A fifth aspect of the present invention is the transfer foil according to the first aspect, wherein a breaking elongation at room temperature is 1% or more and 30% or less.

A sixth aspect of the present invention is the transfer foil according to the first aspect, wherein the first temperature is room temperature.

A seventh aspect of the present invention is the transfer foil according to the first aspect, wherein the second temperature is 70°C.

An eighth aspect of the present invention is a display comprising a first region containing individual information, and a second region in which unique information is recorded as a unique outer shape of an individual authentication sticker, wherein the individual information and the unique outer shape are used for individually verifying authenticity of the display.

A ninth aspect of the present invention is the display according to the eighth aspect, wherein the individual authentication sticker is disposed at an interface of a substrate forming the display.

A tenth aspect of the present invention is the display according to the ninth aspect, wherein the individual authentication sticker is embedded inside the substrate.

An eleventh aspect of the present invention is the display according to the ninth aspect, wherein the individual information is an identification number of the substrate.

A twelfth aspect of the present invention is the display according to the eighth aspect, wherein the individual authentication sticker, after being transferred onto the transfer foil according to the first aspect, is formed on the transfer material layer that has been released from the support body, and at least a portion of an outline is formed by burrs remaining on the transfer material layer at the time of the release.

A thirteenth aspect of the present invention is the display according to the eighth aspect, wherein at least part of the first region and the second region are disposed so as to overlap each other.

A fourteenth aspect of the present invention is a method for verifying authenticity of the display according to the eighth aspect, the method being capable of enabling authenticity verification for each individual, and comprising: registering an association between the individual information and the unique information in advance in a database; acquiring the individual information and the unique information from the display; and determining that the display is authentic when an association between the acquired individual information and unique information matches an association registered in the database, and determining that the display is not authentic when there is no match.

To achieve the second object above, the present invention adopts the following means.

A fifteenth aspect of the present invention is an authentication verification device that verifies authenticity of a display, wherein the display includes a first region and a second region, a certification code is formed in the first region, and a sticker is attached to the second region, the certification code includes an identifier, a feature amount obtained from feature information of the sticker can be referenced from the certification code, and the authentication verification device comprises a camera that captures the display, a cutting circuit that cuts out the first region and the second region from the capture data of the captured display, a reading circuit that reads the certification code from the first region that has been cut out, an acquisition circuit that acquires the feature information from the second region that has been cut out, and a matching circuit that performs authenticity verification of a display, being a target of the authenticity verification, by acquiring a feature amount from the certification code that has been read by the reading circuit, and matching the acquired feature amount and a feature amount generated from the feature information that has been acquired by the acquisition circuit.

A sixteenth aspect of the present invention is the authentication verification device according to the fifteenth aspect, further comprising a detection circuit that detects an edge portion of the second region that has been cut out, and extracts an edge portion region containing the edge portion.

A seventeenth aspect of the present invention is the authentication verification device according to the sixteenth aspect, wherein the acquisition circuit acquires, as the feature information, an area ratio of a light region and a dark region determined from grayscale binarization processing of the edge portion region.

An eighteenth aspect of the present invention is the authentication verification device according to the sixteenth aspect, wherein the acquisition circuit acquires, as the feature information, a shape formed by the edge portion.

A nineteenth aspect of the present invention is the authentication verification device according to the sixteenth aspect, wherein the acquisition circuit acquires, as the feature information, a line segment length of the edge portion.

A twentieth aspect of the present invention is the authentication verification device according to the sixteenth aspect, wherein the acquisition circuit acquires, as the feature information, an area ratio of the edge portion region that is inside and outside the edge portion.

A twenty-first aspect of the present invention is the authentication verification device according to the sixteenth aspect, further comprising a partitioning circuit that divides the edge portion region into a plurality of cells.

A twenty-second aspect of the present invention is the authentication verification device according to the twenty-first aspect, wherein a size of a cell obtained from partitioning by the partitioning circuit and a shape of the cell are randomly determined.

A twenty-third aspect of the present invention is the authentication verification device according to the twenty-first aspect, wherein a size of a cell obtained from partitioning by the partitioning circuit and a shape of the cell are determined in advance.

A twenty-fourth aspect of the present invention is the authentication verification device according to the fifteenth aspect, further comprising a database that stores a pair consisting of the certification code and the feature information of the sticker when the display is manufactured, wherein the feature information stored in the database includes image data of the second region.

A twenty-fifth aspect of the present invention is the authentication verification device according to the fifteenth aspect, further comprising a database that stores a pair consisting of the certification code and the feature information of the sticker when the display is manufactured, wherein the feature information stored in the database does not include image data of the second region.

A twenty-sixth aspect of the present invention is the authentication verification device according to the twenty-first aspect, wherein the acquisition circuit acquires, as the feature information, an area ratio of a light region and a dark region determined from grayscale binarization processing of at least one cell among a plurality of cells divided by the partitioning circuit.

A twenty-seventh aspect of the present invention is the authentication verification device according to the twenty-first aspect, wherein the acquisition circuit acquires, as the feature information, a shape formed by the edge portion in at least one cell among a plurality of cells divided by the partitioning circuit.

A twenty-eighth aspect of the present invention is the authentication verification device according to the twenty-first aspect, wherein the acquisition circuit acquires, as the feature information, a line segment length of the edge portion in at least one cell among a plurality of cells divided by the partitioning circuit.

A twenty-ninth aspect of the present invention is the authentication verification device according to the twenty-first aspect, wherein the acquisition circuit acquires, as the feature information, an area ratio of at least one cell among a plurality of cells divided by the partitioning circuit that is inside and outside the edge portion.

A thirtieth aspect of the present invention is the authentication verification device according to any one of the seventh to ninth aspects, wherein the partitioning circuit divides at least one cell among the plurality of cells into a plurality of subcells, and the acquisition circuit acquires, as the feature information, an area ratio of a light region and a dark region determined from grayscale binarization processing of at least one subcell among a plurality of subcells divided by the partitioning circuit. This is the authentication verification device of the twenty-first aspect.

A forty-ninth aspect of the present invention is a verification device that performs authenticity verification of a display, in which the display includes a first region and a second region, the first region is formed with a certification code or a chip module provided with a terminal or an antenna storing the certification code, the second region has a sticker attached thereto that encloses a trace recording layer having feature information caused by a defect, fluctuations, or an error at the time of manufacturing, in which the trace recording layer is any one of an aliphatic compound, an aromatic compound, a metal, a glass, a crystal, or a composite thereof, and the certification code includes an identifier that is capable of querying the feature information, ciphertext obtained by encrypting a hash value of the feature information with a private key, or both. The verification device includes: a camera that captures the display; a cutting circuit that cuts out image data of the first region and image data of the second region from capture data of the display that has been captured by the camera; a reading circuit that reads the certification code from capture data of the first region that has been cut out, or electrically reads the certification code using a contact point of the chip module or by electromagnetic wave communication; an acquisition circuit that acquires capture data of the trace recording layer from capture data of the second region that has been cut out; and a matching circuit that performs authenticity verification of a display, being a target of the authenticity verification, by querying the feature information stored in a server with the identifier of the certification code read by the reading circuit and acquiring feature data under a set verification condition, or decrypting ciphertext of the certification code using a public key, and matching the feature information acquired from capture data of the trace recording layer acquired by the acquisition circuit. Here, the trace recording layer can serve as a reflective layer.

A fiftieth aspect of the present invention is a verification method performed by the verification device according to the forty-ninth aspect, wherein the certification code includes an identifier capable of querying the feature information, the identifier includes a token that records identification information of an owner of the display, and the matching circuit certifies authenticity of the display by acquiring verification data corresponding to identification information recorded in the token from an authenticity certification database, referring to the identification information of the owner that is recorded in the token, and receiving a verification result for the owner of the display.

To achieve the third object above, the present invention adopts the following means.

A thirty-second aspect of the present invention is an individual authentication method for performing individual authentication of a transfer article that is formed by transferring a foil based on feature information of pinholes formed in the foil at the time of transfer.

A thirty-third aspect of the present invention is the individual authentication method according to the thirty-second aspect, wherein the feature information includes at least one of a location, a shape, a size, a number, and a total area of the pinholes.

A thirty-fourth aspect of the present invention is the individual authentication method according to the thirty-second aspect, wherein the feature information includes at least one of a shape, a size, a number, and a total area of the pinholes in a specified region of the foil.

A thirty-fifth aspect of the present invention is the individual authentication method according to the thirty-fourth aspect, wherein there exists a plurality of the specified regions.

A thirty-sixth aspect of the present invention is the individual authentication method according to the thirty-fourth aspect, wherein the specified regions are not demetallized.

To achieve the fourth object above, the present invention adopts the following means.

A thirty-seventh aspect of the present invention is a transfer foil that is formed by laminating at least a reflective layer and an adhesive layer, wherein the adhesive layer contains a filler, and random pinholes are formed in the reflective layer due to the filler when a transfer article is transferred.

A thirty-eighth aspect of the present invention is the transfer foil according to the thirty-seventh aspect, wherein the filler is patterned and is included in the adhesive layer.

A thirty-ninth aspect of the present invention is the transfer foil according to the thirty-seventh aspect, wherein the filler consists of a plurality of types of fillers having different particle sizes.

A fortieth aspect of the present invention is the transfer foil according to the thirty-ninth aspect, wherein the plurality of types of fillers consists of three types of fillers, being a large diameter filler, a medium diameter filler, and a small diameter filler.

A forty-first aspect of the present invention is the transfer foil according to the thirty-seventh aspect, wherein the filler has a particle size of 2 to 15 $\mu$m, and a concentration in the adhesive layer of 3 to 10% by weight.

A forty-second aspect of the present invention is the transfer foil according to the thirty-seventh aspect, wherein feature information of the random pinholes is unique for each transfer article.

A forty-third aspect of the present invention is the transfer foil according to the forty-second aspect, wherein the feature information includes at least one of a location, a shape, a size, a number, and a total area of the pinholes.

A forty-fourth aspect of the present invention is the transfer foil according to the forty-second aspect, wherein the feature information is used for individual authentication of each transfer article.

To achieve the fifth object above, the present invention adopts the following means.

A forty-fifth aspect of the present invention is a transfer article formed by transferring a foil formed having random pinholes.

A forty-sixth aspect of the present invention is the transfer foil according to the forty-fifth aspect, wherein feature information of the random pinholes is unique for each transfer article.

A forty-seventh aspect of the present invention is the transfer foil according to the forty-sixth aspect, wherein the feature information includes at least one of a location, a shape, a size, a number, and a total area of the pinholes.

A forty-eighth aspect of the present invention is the transfer foil according to the forty-sixth aspect, wherein the feature information is used for individual authentication of each transfer article.

[Brief Description of Drawings]

Fig. 1 is a side cross-sectional view showing a laminated structure of a transfer foil according to the present embodiment.

Fig. 2 is an enlarged image of a transfer foil manufactured under regulated conditions.

Fig. 3 is an enlarged image of a transfer foil manufactured under regulated conditions.

Fig. 4 is an enlarged image of a transfer foil manufactured under regulated conditions.

Fig. 5 is an enlarged image of a transfer foil manufactured outside regulated conditions.

Fig. 6 is a plan view showing a configuration example of a display according to the present embodiment.

Fig. 7 is a plan view showing a square tube mold plate used at the time of transfer in Example 1.

Fig. 8 is a conceptual diagram showing a laminated structure of a display (personal authentication medium).

Fig. 9A is a diagram showing a detection example by an example of a burr detection device, and a perspective view of a display (personal authentication medium).

Fig. 9B is a diagram showing a detection example by another example of a burr detection device, and a side view of a display (personal authentication medium).

Fig. 10 is a schematic diagram showing an example of a burr detection result in Example 1.

Fig. 11 is a plan view showing a rounded rectangular mold plate used at the time of transfer in Example 2.

Fig. 12 is a schematic diagram showing an example of a burr detection result in Example 2.

Fig. 13 is a flowchart for describing registration in a database in a method for verifying authenticity according to the present embodiment.

Fig. 14 is a flowchart showing a flow of the method for verifying authenticity according to the present embodiment.

Fig. 15 is a plan view showing a typical display.

Fig. 16 is an electronic circuit configuration diagram showing an example of an authentication verification device to which the method for verifying authenticity according to the embodiment of the present invention is applied.

Fig. 17 is a diagram showing various stored programs.

Fig. 18 is a perspective view showing an example of an authentication verification device of a dedicated device.

Fig. 19 is a perspective view showing an example of an authentication verification device that is realized by a smartphone on which a dedicated application has been installed.

Fig. 20 is a perspective view showing another example of an authentication verification device that is realized by being built into a housing as a dedicated device.

Fig. 21A is a flowchart showing a flow of registration processing of a verification record of a display performed by an authentication verification device.

Fig. 21B is a flowchart showing another flow of registration processing of a verification record.

Fig. 22 is a plan view showing an example of a second region containing one edge portion.

Fig. 23 is a plan view showing an example of a second region containing two edge portions.

Fig. 24 is a diagram showing an example of capture data including a second region.

Fig. 25A is a diagram showing an example of a planar image illustrating an edge portion region.

Fig. 25B is a diagram showing an example of a light region and a dark region determined from grayscale binarization processing.

Fig. 25C is a diagram showing an edge portion with a white line.

Fig. 25D is a plan view showing an example in which an edge portion region has been divided into a plurality of cells.

Fig. 26A is a plan view showing another example in which an edge portion region has been divided into a plurality of cells.

Fig. 26B is a diagram showing another example of a light region and a dark region determined from grayscale binarization processing.

Fig. 26C is a diagram showing an edge portion with a white line.

Fig. 26D is a plan view showing an example in which a cell has been divided into a plurality ($10 \times 10$) subcells of the same size.

Fig. 27 is a flowchart showing an operation example when authenticity verification is performed by an authentication verification device to which a method for verifying authenticity according to an embodiment of the present invention is applied.

Fig. 28 is a side cross-sectional view showing a laminated structure of a transfer foil according to an embodiment of the present invention.

Fig. 29A is an image captured with an optical microscope showing outline fluctuations (a reflection capture example with an optical microscope (150x) of a transfer foil with an etched reflective layer).

Fig. 29B is an image captured with an optical microscope showing outline fluctuations (a reflection capture example with an optical microscope (150x) of a transfer foil with an etched reflective layer transferred onto paper).

Fig. 30 is an image of a reflective layer obtained when a transfer foil containing a filler in the adhesive layer is subjected to hot press transfer.

Fig. 31 is an image of a reflective layer obtained when a transfer foil not containing a filler in the adhesive layer is subjected to hot press transfer.

Fig. 32 is a conceptual diagram for describing an individual authentication method according to the present embodiment.

Fig. 33 is a table summarizing the conditions and results of transfer experiments performed in the present examples.

Fig. 34 is an image showing pinholes formed in the reflective layer as a result of transfer under the conditions of Experiment 1.

Fig. 35 is an image showing pinholes formed in the reflective layer as a result of transfer under the conditions of Experiment 2.

Fig. 36 is an image showing pinholes formed in the reflective layer as a result of transfer under the conditions of Experiment 3.

Fig. 37 is an image showing pinholes formed in the reflective layer as a result of transfer under the conditions of Experiment 4.

Fig. 38 is an image showing pinholes formed in the reflective layer as a result of transfer under the conditions of Experiment 5.

Fig. 39 is a side cross-sectional view showing a typical laminated structure of a transfer foil.

[Description of Embodiments]

Embodiments of the present invention will be described below with reference to the drawings. The drawings are schematic or conceptual, and the relationship between the thickness and width of each part, the size ratios between the parts, and the like, are not necessarily the same as those in reality. Furthermore, even when the same parts are shown, the dimensions and ratios may be shown differently depending on the drawing. In the present specification and in each figure, the same components as those already described with respect to previous figures are denoted by the same reference numerals, and detailed explanations will be omitted as appropriate.

[First Embodiment]

(Transfer Foil)

First, a transfer foil according to a first embodiment of the present invention will be described.

The transfer foil according to the present embodiment may be, for example, an individual authentication sticker, and is formed with burrs whose size is appropriately controlled to an extent such that the optical characteristics of the individual authentication sticker are not significantly reduced.

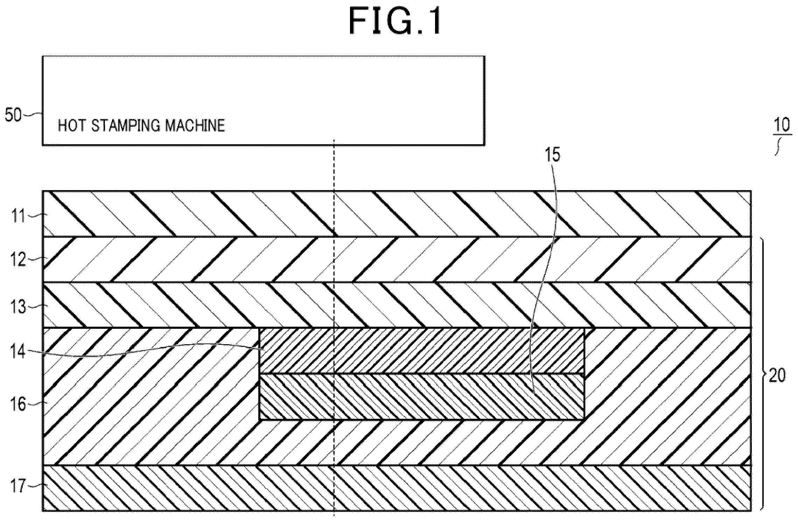

Fig. 1 is a side cross-sectional view showing a laminated structure of a transfer foil according to the present embodiment.

The transfer foil 10 is formed by laminating a transfer material layer 20, and a support body 11 for releasably supporting the transfer material layer 20.

The transfer material layer 20 is composed of a multilayer structure in which a surface protective layer 12, an optical formation layer 13, a reflective layer 14, a lower protective layer 15, a cushion layer 16, and an adhesive layer 17 are laminated from the support body side 11. The reflective layer 14 and the lower protective layer 15 are filled inside the cushion layer 16.

The transfer foil 10 is stamped (hot stamped) from the support body 11 side using a hot stamping machine 50 at a high temperature (for example, a die surface temperature of 110 to 125°C). At the time of transfer, the temperature of the transfer foil 10 is considered to be around 70°C. The temperature of the transfer foil 10 during the stamping is the second temperature. As a result of the stamping, the portion of the transfer material layer 20 in the stamped region of the transfer foil 10 is selectively transferred to a transfer region. The transfer material layer 20 that has been transferred to the transfer region can be an individual authentication sticker. When the transfer foil 10 is stamped, the transfer material layer 20 is released from the support body 11. That is, the region where the transfer material layer 20 has been transferred by stamping is the transfer region. At the outer edge of the transfer portion, there is an outer edge region where the transfer material layer 20 is intentionally not transferred.

Although burrs are generated in the outer edge region of the transfer material layer 20 at the time of release, in the present embodiment, the size of the burrs of the transfer material layer 20 can be controlled to be within a predetermined range by regulating the transfer temperature, the transfer time, the film tension of the transfer foil 10, the release strength when the transfer material layer 20 is released from the support body 11, the thickness and material of the optical formation layer 13, the thickness of the reflective layer 14, and the break elongation as described below.

The transfer temperature (die surface temperature) of the hot stamping machine 50 is 115 to 130°C, the transfer time is 0 seconds to 1 second, and the film tension at the time of transfer is preferably 0.2 to 5.0 N/cm. If the transfer temperature is too low, poor adhesion will occur, and if the transfer temperature is too high, the burr size will be too long. If the transfer time is too long, the burr size will be too long. If the film tension at the time of transfer is too low, the transfer material layer will not break, and if the film tension is too high, the support body of the transfer foil will become stretched.

In terms of the release strength, the release strength at room temperature is set to 0.1 gf/mm or more and 0.3 gf/mm or less. Further, the difference in the release strength at the second temperature (sticking temperature), which is lower than the transfer temperature of approximately 110 to 125°C, and the release strength at room temperature is set to 0.05 gf/mm or more and 0.2 gf/mm or less. Here, room temperature can be defined as 23 ± 1°C. Furthermore, the second temperature can be defined as 70 ± 1°C. For example, the value obtained by subtracting the release strength at the second temperature of 70°C from the release strength at room temperature of 23°C can be set to 0.05 gf/mm or more and 0.2 gf/mm or less.

The surface protective layer 12 can be a layer containing a thermoplastic polymer and a release modifier. The thermoplastic polymer of the surface protective layer 12 can be a resin having a glass transition temperature of 90°C or higher and 130°C or lower.

As long as the glass transition temperature Tg of the release modifier is room temperature (25°C) or lower, the release modifier is preferably a material whose melting point Tm is in the range of 90°C or higher and 130°C or lower, which is the glass transition temperature Tg of the thermoplastic polymer. In the case of an amorphous resin having no melting point Tm, a material having a flow initiation temperature higher than the glass transition temperature Tg of the thermoplastic polymer is preferable.

As a result of using a release modifier having the above physical properties, distortions are likely to occur in the release layer at the transfer temperature, making it easier to control the burrs. The thermoplastic polymer can be one of an acrylic polymer, a polyester, a polyamide, or a polyimide, or a copolymer, mixture, or composite of any of these polymers.

The release modifier can be a powder, a wax, or an oil. The powder can be silica powder, polyethylene powder, fluorine powder, or silicone powder. The wax can be polyethylene wax, paraffin wax, silicone wax, or carnauba wax. The oil can be silicone oil. The release strength can be reduced by adding a large amount of the release modifier.

Furthermore, a breaking strength modifier can be included. The breaking strength modifier can be an ester resin. An example of the ester resin is a cellulose ester. As a result of adding a breaking strength modifier to the binder, the breaking strength can be lowered by creating a sea-island structure.

The release strength and the breaking strength at room temperature and the second temperature can be adjusted according to the amount of polyester or polyethylene added.

The surface protective layer 12 can be formed by being coated on the support body 11. The coating may be applied by gravure coating, microgravure coating, or die coating.

The reason the release strength is regulated as described above is because, when the release strength at room temperature is less than 0.1 gf/mm, the outer edge region also tends to be released and the burrs extending from the transfer region tend to become long, and when the release strength at room temperature is greater than 0.3 gf/mm, the burrs are not formed or are too short. In other words, in terms of the release strength, as long as the release strength at room temperature (for example, 23°C) is 0.1 gf/mm or more and 0.3 gf/mm or less, burrs having an appropriate length are formed at the time of stamping.

Similarly, when the value obtained by subtracting the release strength at the second temperature from the release strength at room temperature is less than 0.05 gf/mm, the outer edge region also tends to be released and the burrs tend to become long, and when the value is greater than 0.2 gf/mm, the burrs are not formed or are too short. In other words, as long as the value obtained by subtracting the release strength at 70°C from the release strength at 23°C is 0.05 gf/mm or more and 0.2 gf/mm or less, burrs having an appropriate length can be formed.

The support body 11 can be a plastic film. The plastic film can be a stretched film. That is, the support body 11 can be an elongated plastic film. The plastic film can be a single unit or a laminate of a PET film, a polypropylene film, or a polyethylene film. The support body 11 may be made of resin-coated plastic.

The thickness of the support body 11 formed of the stretched plastic film can be 25 $\mu$m or more and 50 $\mu$m or less. If the thickness is less than 25 $\mu$m, the film is likely to tear during transport. If the thickness is more than 50 $\mu$m, the transfer properties deteriorate because it is difficult for heat to be transmitted below the surface protective layer. Therefore, as long as the thickness of the support body 11 formed of the stretched plastic film is 25 $\mu$m or more and 50 $\mu$m or less, the film has excellent transport properties and the burrs can have an appropriate length.

The optical formation layer 13 can be a resin layer with a thickness of 0.5 $\mu$m or more and 2.0 $\mu$m or less. The resin layer may contain inorganic particles, organic particles, or both. This resin can be a urethane resin, an acrylic urethane resin, or an acrylic resin. An optical formation layer made of a urethane resin easily adheres to the reflective layer. The urethane resin can be thermoplastic. Furthermore, the urethane resin can be ultraviolet light curable. The optical formation layer 13 may be a single layer or multilayered.

In terms of the thickness of the optical formation layer 13, when the thickness of the optical formation layer 13 is 0.5 $\mu$m or less, it is difficult to form an uneven shape having a sufficient depth at the interface between the optical formation layer 13 and the reflective layer by embossing, and when the thickness of the optical formation layer 13 is 0.5 $\mu$m or more, an uneven shape having a sufficient depth can be easily formed by embossing. Furthermore, when the thickness is greater than 2.0 $\mu$m, although it is easier to form long burrs, a thickness of 2.0 $\mu$m or less enables burrs having an appropriate length to be formed.

The uneven shape on the surface of the optical formation layer 13 has concave portions or convex portions, or concave portions and convex portions, and is capable of providing the transfer material layer with optical properties such as diffraction, light reflection suppression, isotropic or anisotropic light scattering, refraction, polarized and wavelength-selective reflection, transmission, and light reflection suppression.

As a result, the uneven shape on the surface of the optical formation layer 13 has an optical effect such as an iridescent expression, a dark color expression, a white color expression, a lens effect, or polarization selectivity. Furthermore, a target optical effect may be obtained by combining a plurality of optical effects. The regions having one or more optical effects may be arranged in contact with each other, adjacent to each other, close to each other, at regular intervals, alternately, or enclosed. These optical effects create an aesthetic appearance, and counterfeiting can be detected visually or by machine or the like due to a difference in the optical effects.

The surface of the optical formation layer 13 may be provided with a region having an uneven diffraction grating structure at a pitch of 0.5 $\mu$m or more and 2 $\mu$m or less, and having a depth of 0.05 $\mu$m or more and 0.5 $\mu$m or less. As a result, the optical formation layer 13 has the property of diffracting light.

The surface of the optical formation layer 13 may be provided with a moth-eye structure or a deep lattice structure at a pitch of 0.1 $\mu$m or more and 0.5 $\mu$m or less, and having a depth of 0.25 $\mu$m or more and 0.75 $\mu$m or less. As a result, the optical formation layer 13 can provide the transfer material layer 20 with the property of light reflection suppression, polarized light and wavelength-selective reflection, transmission, and light reflection suppression.

The surface of the optical formation layer 13 may be provided with a region having a non-periodic linear structure or a dot-like repetitive structure at an average pitch of 0.5 $\mu$m or more and 3 $\mu$m or less, and having a depth of 0.05 $\mu$m or more and 0.5 $\mu$m or less. As a result, the optical formation layer 13 can provide the transfer material layer 20 with the property of emitting isotropic or anisotropic scattered light.

The surface of the optical formation layer 13 may be provided with a region having a structure at an average pitch larger than 3 $\mu$m and having a depth greater than 0.5 $\mu$m. As a result, the optical formation layer 13 can provide the transfer material layer 20 with the property of light refraction.

The optical properties of the optical formation layer 13 can be perceived and detected by visual inspection and mechanical detection. As a result, the anti-counterfeiting and anti-tampering performance, and aesthetic appearance are improved. The uneven shape on the surface of the optical formation layer 1 may have a region with a plurality of different uneven shapes. The relief structure region can be displayed as a single image or a plurality of integrated images.

The image may be a single image or a combination of portraits, landmarks, marks, paintings, sculptures, objects, natural motifs, geometric patterns, signs, symbols, emblems, coat of arms, text, and codes.

The symbols and the emblems may be motifs such as flags, shields, swords, spears, crowns, stars, moons, hearts, logos, ribbons, lines, flowers, leaves, cereals, fruit, birds, wings, fish, arthropods, mammals, legendary creatures, reptiles, and amphibians.

The landmarks may be heritage sites, ruins, historical buildings, mountains, valleys, rocks, and monuments. The natural motifs may be living things, stars, moons, skies, mountains, valleys, and rocks. The living things may be flowers, leaves, cereals, fruit, birds, fish, arthropods, mammals, legendary creatures, reptiles, and amphibians.

The codes may be one-dimensional codes and two-dimensional codes. The one-dimensional codes may be barcodes and serial numbers, and combinations of the two. The two-dimensional codes include QR codes (registered trademark). These motifs may represent symbols. The symbols may represent countries, regions, states, groups, councils, treaties, alliances, unions, and an axis.

The thickness of the reflective layer 14 can be 30 nm or more to 200 nm or less. Within this range, the optical formation layer can have good following performance with respect to the uneven shape of the surface and have sufficient visible light reflectivity. The reflective layer may be formed by partially forming a base protective layer by printing, and then removing the portions where the base protective layer is not present by etching (demetallization).

As a result, the outline of the reflective layer can be patterned. The pattern of the outline of the reflective layer is easy to detect with a camera. Therefore, an alignment mark for detecting distortion during capture with a camera may be formed using a pattern of the outline of the reflective layer. Furthermore, a position detecting pattern may be formed by the pattern of the outline of the reflective layer.

In addition, a one-dimensional code or a two-dimensional code may be recorded using the outline pattern of the reflective layer. A one-dimensional code can be a character string or a barcode. A two-dimensional code can be a QR code. Moreover, these codes may be a ciphertext.

The ciphertext may be a ciphertext obtained by encrypting individual information described later. Furthermore, a ciphertext obtained by encrypting a hash value of a code recorded in the pattern of the outline of the reflective layer and individual information may be further recorded as cipher information.

As a result of using a ciphertext in this way, counterfeiting resistance can be further improved. Note that although public key cryptography is preferable for this encryption, private key cryptography may also be used. The applicable public key cryptography may be one of an RSA system, elliptic curve cryptography, or a hybrid thereof.

In addition, the public key cryptography may be lattice cryptography. The key length of the public key is preferably 1,024 bits, 2,048 bits, 3,072 bits, or 4,096 bits. The key length can be selected depending on the level of security required for the display.

Furthermore, when a ciphertext or a hidden code is generated using a common key cryptography, it can be used for online determination of authentication and counterfeit determination of a display, which will be described later.

Moreover, even when a ciphertext or a hidden code is generated using hybrid cryptography, it can be used for online determination of authentication and counterfeit determination of a display, which will be described later. A block cipher, a stream cipher, or a hybrid thereof can be applied as the common key method. The block ciphers that can be applied are AES, Camellia, or a hybrid thereof. A stream cipher that can be applied is RC4. The key length can be 128 bits, 192 bits, or 256 bits.

If the thickness of the reflective layer 14 is less than 30 nm, there is a concern that the visibility of the pattern on the transfer foil 10 will decrease and the decorativeness of the transfer article will be impaired, and if the thickness is greater than 200 nm, the following performance with respect to the uneven shape of the surface of the optical formation layer tends to deteriorate.

The reflective layer 14 is formed on a part or the entire surface of the optical formation layer 13. When the reflective layer 14 is formed on a portion of a relief layer 22, because an advanced processing technique is required to manufacture an optically variable device, and the motif becomes more elaborate, the transfer foil 10 has a higher anticounterfeiting effect.

The reflective layer 14 allows the optical properties generated in the optical formation layer 13 to be easily observed. The reflective layer 14 may display a structural color. Structural colors include changing colors, iridescent colors, and the like.

As the material of the reflective layer 14, a single metal or silicon, an alloy, or a compound thereof can be used. Examples of metals or silicon constituting the single metals, alloys, or compounds thereof are silica, aluminum, tin, chromium, nickel, copper, gold, or a combination thereof. The purity of these metals may be 99% or higher. The purity may be 99.99% (4 N) or higher. By setting the purity to 4N or higher, defects in the reflective layer 14 can be easily reduced.

The metal or silicon compound may be an oxide. The metal compound may be a sulfide, fluoride, or nitride. The thickness of the reflective layer 14 may be in a range of 10 nm or more and 500 nm or less. The reflective layer 14 can be formed by depositing an inorganic material under reduced pressure. The reflective layer 23 can be formed by physical vapor deposition (PVD) or chemical vapor deposition (CVD). The physical vapor deposition may be vacuum vapor deposition or sputtering.

The reflective layer 14 is single layered or multilayered. The multilayered reflective layer 14 can be a laminated body in which a single metal and a metal compound are alternately laminated, a multilayer body in which different single metals are alternately laminated, or a multilayer body in which different metal compounds are alternately laminated.

Examples of a laminated body in which a single metal and a metal compound are alternately laminated include a multilayer laminated body in which a silicon dioxide reflective layer is laminated on an aluminum layer. The multilayer reflective layer 14 can be formed by physical vapor deposition, chemical vapor deposition, or both. The physical vapor deposition may be performed by vacuum deposition, sputtering, or both.

The reflective layer may also be a layer of cured cholesric liquid crystal.

The elongation at break of the transfer foil 10 at room temperature can be 1% or more and 30% or less. If the elongation at break of the transfer foil 10 at room temperature is within this range, burrs of appropriate length can be generated during stamping.

If the elongation at break of the transfer foil 10 at room temperature is less than 1%, detectable burrs will not form, and above 30%, there is a concern that the burrs will become elongated.

The lower protective layer 15 can be patterned by printing. Because the appearance of the burrs changes depending on the position of the stamping edge portion formed by the hot stamping machine 50, it is preferable that the lower protective layer 15 is patterned rather than uniform, especially when the transfer foil 10 is used as individual authentication.

The cushion layer 16 is capable of adjusting the amount by which the spacer particles (described later) in the adhesive layer 17 sink downward. When the transfer foil 10 is being stored, the spacer particles hardly sink downward into the cushion layer 16, and gaps are maintained between the adhesive layer 17 and the support body 10 when rolled up into a roll. At the time of transfer, the spacer particles sink downward by a suitable amount into the cushion layer. The cushion layer 16 may make contact with the adhesive layer 17.

The cushion layer 16 may contain a soft resin and a deformation limiting agent. The soft resin and the deformation limiting agent have different flexibility. The mixing ratio of the soft resin and the deformation limiting agent can be in the range of 50:1 to 1:1. As a result of the heat and pressure during transfer, the soft resin in the cushion layer 16 is deformed and the spacer particles sink downward. At this time, the deformation limiting agent can suppress the deformation of the soft resin and prevent the spacer particles from sinking downward too much.

Because the cushion layer 16 has appropriate hardness before transfer, the spacer particles remain in the adhesive layer 17. In order to impart appropriate hardness to the cushion layer 16 before transfer, the soft resin may be a crystalline resin. The deformation limiting agent can also be a high glass transition temperature polymer, an inorganic powder, or a mixture thereof. The high glass transition temperature polymer preferably has a glass transition point of 60°C or higher, or has no glass transition point.

When the soft resin is a crystalline resin, the cushion layer 16 has appropriate hardness because the soft resin is in a crystalline state at room temperature before transfer. By using a polymer or inorganic powder with a high glass transition temperature as the deformation limiting agent, excessive softening of the cushion layer during transfer can be prevented.

When a high glass transition temperature polymer having a glass transition point of 60°C or higher and a softening temperature of 90°C or higher and 130°C or lower is used as the deformation limiting agent of the cushion layer 16, it is possible to control the occurrence of burrs when the transfer material layer 20 is partially transferred onto the transfer target. The high glass transition temperature polymer and the soft resin may have a two-phase phase-separated structure.

A two-phase phase-separated structure can be formed by applying a coating liquid in which a soft resin soluble in a solvent and a high glass transition temperature polymer are dissolved. The high glass transition temperature polymer can be a continuous phase or a dispersed phase. The continuous phase may have a porous structure.

The soft resin can be a dispersed phase or a continuous phase. The glass transition temperature of the high glass transition temperature polymer may be higher than the glass transition temperature of the soft resin.

As a result, during partial transfer, the high glass transition temperature polymer softens inside the outline of the heat transfer region, and does not soften outside the outline of the heat transfer region, and because stress is concentrated on the high glass transition temperature polymer at the outline of the heat transfer region, the resin is considered to reliably break at the outline.

The high glass transition temperature polymer may be mixed into the soft resin as a powder or dispersion. Furthermore, the soft resin may be a crystalline resin. High glass transition temperature polymers that can be used as a deformation inhibitor include vinyl chloride-vinyl acetate copolymers, cellulose polymers, phenol polymers, fluorine polymers, silicone polymers, acrylic polymers, melamine polymers, and epoxy polymers. Vinyl chloride-vinyl acetate copolymers have good adhesion to other resins.

The soft resin of the cushion layer 16 may be an acid-modified polyolefin resin. The acid-modified polyolefin resin may be a copolymer resin of ethylene and an acidic component. The copolymer of ethylene and an acidic component can be an ethylene (meth)acrylic acid copolymer resin (EMAA), an ethylene-vinyl acetate copolymer resin, an ethylene (meth)acrylate copolymer resin, or the like. A copolymer resin of ethylene and an acidic component tends to have appropriate flexibility and appropriate adhesion with adjacent layers.

As a result of acid modification, the acid-modified polyolefin resin can obtain good adhesion with the adjacent reflective layer, lacquer layer, and coating layer. This is because the acid-modified polyolefin bonds with the organic silane compounds and isocyanates of the adjacent reflective layer, lacquer layers, and coating layer.

Among acid-modified polyolefins, blocking does not easily occur in an ethylene (meth)acrylic acid copolymer resin (EMAA). The soft resin in the cushion layer 16 can have a softening temperature that is equal to or lower than the transfer temperature during transfer. Furthermore, the softening temperature of the resin of the cushion layer 16 can be in the range of 60°C or more and 110°C or less.

The acid value of the acid-modified polyolefin can be measured by a commonly used FT-IR method, titration method, or the like. The acid value of the acid-modified polyolefin can be in the range of 0.5 to 200.

The soft resin solution may use a dispersion in which a soft resin has been dispersed. In this case, the particle size of the dispersion can be about 30 μm.

The softening temperature the cushion layer 16 can be in the range of 60°C or more and 110°C or less.

An auxiliary agent may be added to the cushion layer 16. The amount of the auxiliary agent added can be in the range of 0.1 wt% to 10 wt%. The auxiliary agent can be a silane coupling agent. By adding a silane coupling agent, the silane coupling agent creates a silanol bond, which improves the stability of adhesion with the optical formation layer. The silanol bond also improves the heat resistance and solvent resistance of the cushion layer.

The resin component exhibiting adhesive properties with respect to the transfer target may include spacer particles and powder added to the resin component. The content ratio (weight ratio) of powder in the adhesive layer 17 can be in the range of 0.1% or more and 100% or less of the resin component.

An acrylic resin may be used as the resin component. The acrylic resin can be polymethyl methacrylate or the like. When the transfer foil 10 is applied to securities or the like, the material of the transfer target is often paper, polypropylene, polyethylene, or the like. When the resin component is an acrylic resin, it is possible to perform transfer with a small amount of heat, and transfer can be performed by heat pressurization over a short time when the transfer process is performed with respect to such a transfer target. This improves the transfer throughput.

In the transfer process according to the present invention, "heat pressurization over a short time" refers to heat pressurization at 110 to 125°C for 0.3 seconds to 0.6 seconds. Therefore, as the resin component of the adhesive layer 17, a thermoplastic resin other than acrylic resin having a melting point between 60°C and 130°C can be used. In this case, transfer can be performed by heat pressurization in an even shorter time.

Preferable thermoplastic resins other than acrylic resins include vinyl resins, polystyrene resins, polyurethane resins, and the like. The vinyl resin may be vinyl chloride, polyvinylidene chloride, polyvinyl alcohol, or the like.

The polystyrene resin can be polystyrene, styrene-acrylonitrile copolymer, polyethylene, ethylene-vinyl acetate copolymer, or the like, or may be a resin obtained by copolymerizing two or more of these.

In addition, the above resin may contain ester bonds, urethane bonds, ether bonds, amine bonds, silanol bonds, and the like, and part of the chemical structure of two or more types of resins having a functional group related to these bonds may be crosslinked.

The molecular weight can be adjusted by these bonds, and the softening temperature, the viscoelasticity, the solvent resistance, and the like, can be adjusted. Further, the thermoplastic resin may be a copolymer. Moreover, the thermoplastic resin may be modified.

The average particle diameter of the spacer particles can be in the range of 1 to 10 $\mu$m. In the present invention, the average particle diameter of the particles before coating can be measured using a laser diffraction/scattering particle size distribution measurement device (such as a Microtrac BlueRaytrac, manufactured by MicrotracBEL Corp.), and refers to the volume average particle diameter. After coating, the average particle diameter can be determined by the area average particle diameter from an image observed with an electron microscope.

The spacer particles may be formed by blending particle groups having two types of average particle diameters. At this time, the average particle diameter of the small spacer particles may be in the range of 1 to 10 $\mu$m, and the average particle diameter of the large spacer particles may be in the range of 10 $\mu$m to 30 $\mu$m.

When blending particle groups with two types of average particle diameters, the volume ratio of the particle group of large spacer particles can be larger than the volume ratio of the small spacer particles. The volume ratio of the particle group of large spacer particles to the particle group of small spacer particles can be 1:50 or more and 1:2 or less. Further, the spacer particles may be formed by blending particle groups having two or more types of average particle diameters.

Spacer particles can be regularly shaped particles or irregularly shaped particles. The regularly shaped particles can be spherical particles. The regularly shaped particles tend to maintain stable gaps. Elliptical particles are robust with respect to pressure. Spherical particles provide a constant response to pressure.

Irregularly shaped particles can reduce cost. Furthermore, the dispersion state of the particle diameter is preferably monodisperse such that the particle diameter is uniform. Monodisperse in the present invention generally means that the CV value (= standard deviation/average value) is 10% or less.

The spacer particles can be inorganic, a heat-resistant resin, a composite of inorganic particles and a heat-resistant resin, or a natural material. The inorganic compound can be silica, calcium carbonate, talc, or barium sulfate. The natural material can be mica, zeolite, mica, wood flour, or amber.

The heat resistant resin used as the material of the spacer particles is a synthetic resin or the like. The synthetic resin can be an acrylic resin, a urethane resin, a polyethylene resin, a polypropylene resin, or the like. Inorganic materials tend to have heat resistance and chemical resistance. Synthetic resins tend to have heat resistance and chemical resistance. Natural materials have a small environmental impact.

Furthermore, the composite of the inorganic particles and heat-resistant resin of the spacer particles can be a composite of the inorganic particles and heat-resistant resin listed above.

The volume ratio of the spacer particles to the resin component of the adhesive layer 17 can be in the range of 1% or more and 10% or less.

The powder has an average particle diameter at the nano-level. As the material of the inorganic powder, silica, various metals and their oxides, and the like, can be used. Moreover, the inorganic powder may be zeolite or mica. The inorganic powder does not deteriorate with solvents.

Furthermore, inorganic powders are low cost. The heat resistant resin used as the material of the heat resistant resin powder filler is a synthetic resin. The synthetic resin can be an acrylic resin, a urethane resin, a polyethylene resin, a polypropylene resin, or the like. Synthetic resins tend to have heat resistance and chemical resistance. Natural materials have a small environmental impact.

The average particle size of the inorganic powder and the heat resistant resin powder can be 10 to 15 nanometers (nm). The average particle diameter of the nano-level filler before coating can be measured using a dynamic light scattering particle size distribution measurement device (such as a NANOTRAC Wave, manufactured by MicrotracBEL Corp.), and refers to the volume average particle diameter. After coating, the average particle diameter can be determined by the area average particle diameter from an image observed with an electron microscope.

The inorganic powder and heat resistant resin powder can irregularly shaped particles. Furthermore, it is preferable to use particles in a polydisperse state in which the particle diameters of the inorganic powder are not uniform. Polydisperse in the present invention means that the CV value (= standard deviation/average value) is 10% or more.

In addition to the thermoplastic resin, spacer particles, and powder described above, the adhesive layer 17 may contain a polymer having a glass transition point of 60°C or higher. The glass transition point of the polymer can be 60°C or higher and 150°C or lower.

As the polymer, one type of resin may be used, or a mixture of a plurality of resins may be used. The resin can be a thermoplastic resin or a thermosetting resin. The polymer can be a homopolymer or a copolymer.

The polymer can be PMMA, polyurethane, polyvinyl chloride, polyvinyl acetate, polystyrene, or vinyl chloride-vinyl acetate copolymer. Furthermore, the polymer may contain a low molecular weight material such as a terpene resin, a rosin resin, or styrene maleic acid. The ratio of the thermoplastic resin of the resin component to the polymer having a glass transition point of 60°C or higher can be in the range of 50:1 to 5:1, and further, can be in the range of 40:1 to 6:1.

The adhesive layer 17 may contain breakage promoting particles. The breakage promoting particles facilitate breakage of the transfer body at the boundary between the transfer region and other regions when transferring the transfer material layer 20 from the transfer foil to the transfer target. If the transfer body becomes stretched due to insufficient breakage and stretches to the outside of the transfer region, resin waste will be generated from the stretched portion. The breakage promoting particles may be made of the same material, and have the same shape and the same CV value as the spacer particles, and can be particles having a particle diameter smaller than the combined layer thickness of the adhesive layer and the cushion layer.

The adhesive layer 17 can be formed by applying a coating liquid containing a resin component and spacer particles. The coating liquid may be a liquid in which the solid content is completely dissolved, or may be a liquid in which the solid content is dispersed, such as a dispersion or emulsion. Application can be performed by roll coating, reverse roll coating, gravure coating, reverse gravure coating, bar coating, rod coating, lip coating, die coating, or the like. Furthermore, printing may be applied to the coating. The coating liquid is preferably dried at a temperature equal to or lower than the melting point of the solid content.

An example in which the size of the burrs is controlled to be within a predetermined range by manufacturing the transfer foil 10 within the specified conditions above, and an example in which the size of the burrs could not be controlled to be within the predetermined range by manufacturing the transfer foil 10 outside the specified conditions will be described below.

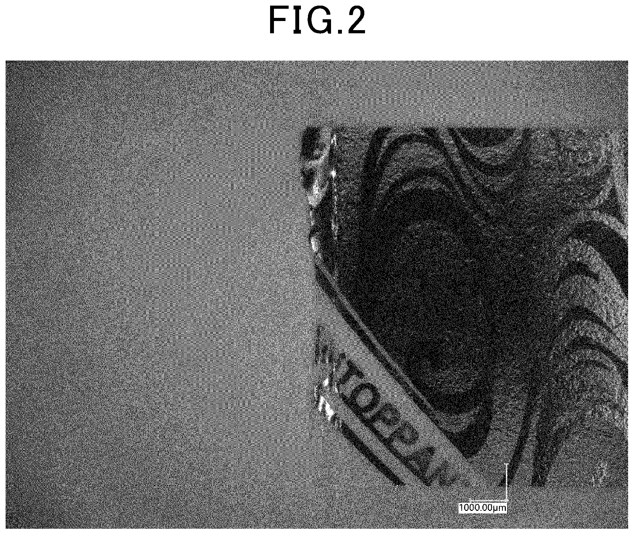

Figs. 2, 3 and 4 are enlarged images of a transfer foil manufactured under regulated conditions.

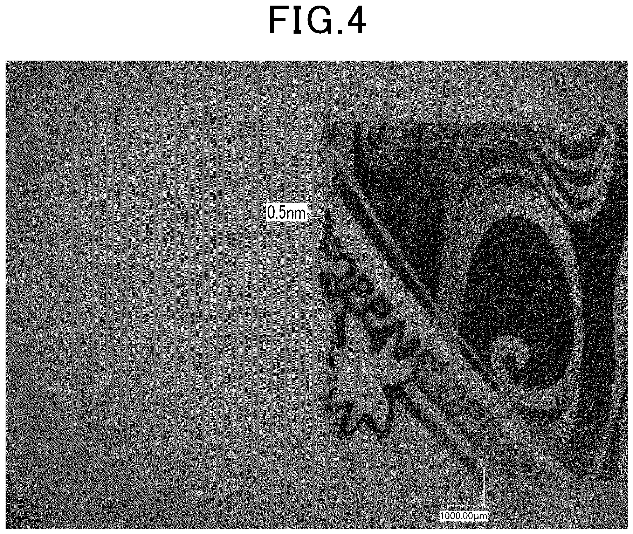

As shown in Figs. 2, 3, and 4, it was confirmed that the size of the burrs generated at the left edge portion of the transfer foil 10 was substantially uniform and was controlled to be within a predetermined range. In particular, Fig. 4 is an example in which the size of the burrs is a maximum of 0.5 mm.

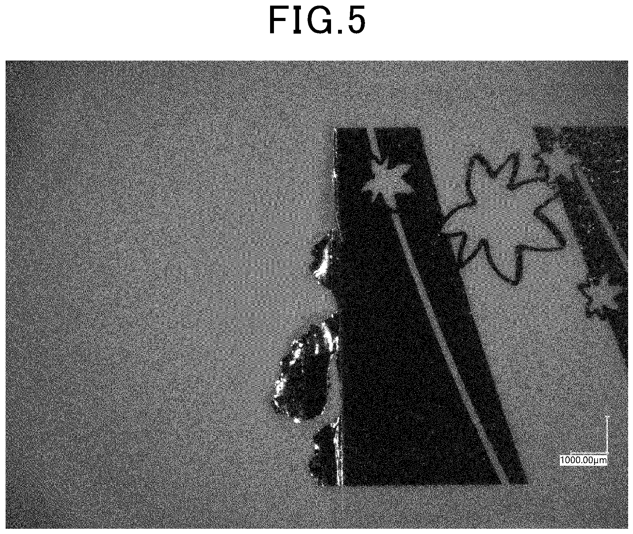

On the other hand, Fig. 5 is an enlarged image of a transfer foil manufactured outside regulated conditions.

Specifically, the transfer foil shown in Fig. 5 is an experimental result for comparison obtained when the release strength at a room temperature of 23°C and the value obtained by subtracting the release strength at 70°C from the release strength at 23°C are outside the specified conditions.

As shown in Fig. 5, it was confirmed that the burrs generated on the left edge portion of the transfer foil were non-uniform and could not be controlled to be within a predetermined range, with some parts protruding significantly. In particular, in the image shown in Fig. 5, burrs with a maximum length exceeding 1.5 mm were observed.

(Display)

Next, a display according to the present embodiment will be described.

The display according to the present embodiment can be used as a personal authentication medium on which the transfer foil 10 described above is placed. The display on which the transfer foil 10 described above is placed is preferably used for authenticity verification by the method for verifying authenticity described below.

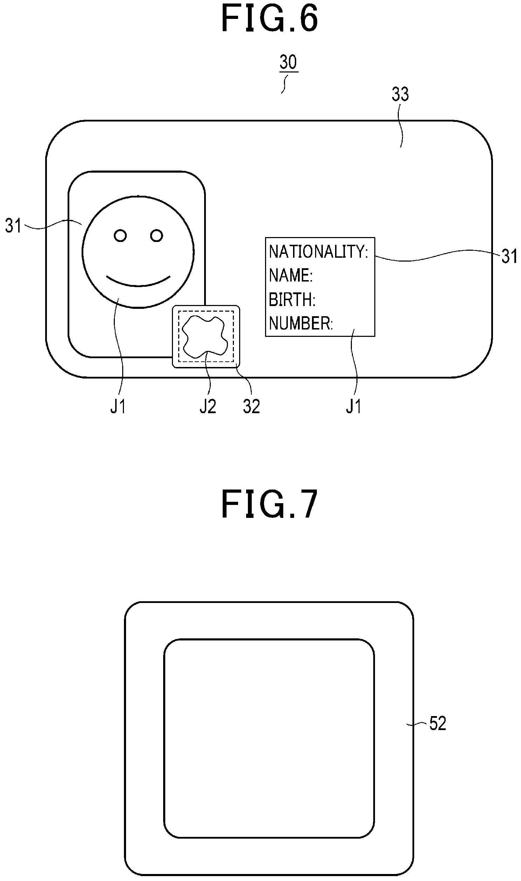

Fig. 6 is a plan view showing a configuration example of a display according to the present embodiment.

That is, the display 30 includes a first region 31 and a second region 32 on a substrate 33. The first region 31 includes first individual information 11, and the second region 32 includes second individual information J2. The first individual information J1 and the second individual information J2 are used in authenticity verification by the method for verifying authenticity described below.

The substrate 33 can be a resin sheet.

The first individual information J1 included in the first region 31 can be identification information about the substrate 33. Furthermore, the identification information about the substrate 33 can be the personal information of the owner of the display 30. The personal information of the owner can be, for example, the owner's name, date of birth, country of origin, place of birth, personal identification number, and the like, expressed in association with characters, numbers, symbols, and the like.

Moreover, in addition to characters, numbers, and symbols, image information such as a facial image of the owner or a fingerprint image can also be used. In addition, a ciphertext may be recorded in the first region 31. That is, individual information and a ciphertext may be recorded in the first region 31. Also, the individual information and the ciphertext may be recorded in a semiconductor chip built into the display.

The first individual information J1 can be formed by carbonizing the polycarbonate resin of the substrate 33 by the heat generated by a laser beam.

Furthermore, by forming the substrate 33 using a material that can be laser-engraved or printed, the first individual information J1 can be formed on the substrate 33 using a laser beam. An example of the material that can be laser-engraved is polycarbonate resin.

In addition, the display 30 can also be formed by forming the first individual information J1 on a resin sheet in advance, and then stacking a plurality of resin sheets and performing lamination processing.

For this reason, the substrate 33 is made of a material that can be laser-engraved or printed.

In this way, by forming the individual information inside the substrate 33, tampering of the display 30 can be made more difficult.

Fig. 6 shows an example in which the first region 31 and the second region 32 are partially overlapped. As a result of overlapping the first region 31 and the second region 32, it is possible to form the first individual information J1 and the second individual information J2 such that they are aligned. For example, if a positional displacement occurs in a connecting portion between the first individual information J1 and the second individual information J2 due to an act of counterfeiting or imitation, it becomes easy to determine that an act of counterfeiting or imitation has occurred.

When the first region 31 and the second region 32 overlap, it is not necessarily important that they overlap entirely, and as illustrated in Fig. 6, only a portion of the second region 32 may overlap the first region 31, or they may be adjacent to each other. As a result, an observer of the display 30 is able to view the first individual information J1 and the second individual information J2 separately, which improves the clarity.

An individual authentication sticker can be placed in the second region 32. The individual authentication sticker can be placed at the interface with the substrate 33. Moreover, the individual authentication sticker can also be embedded inside the substrate 33.

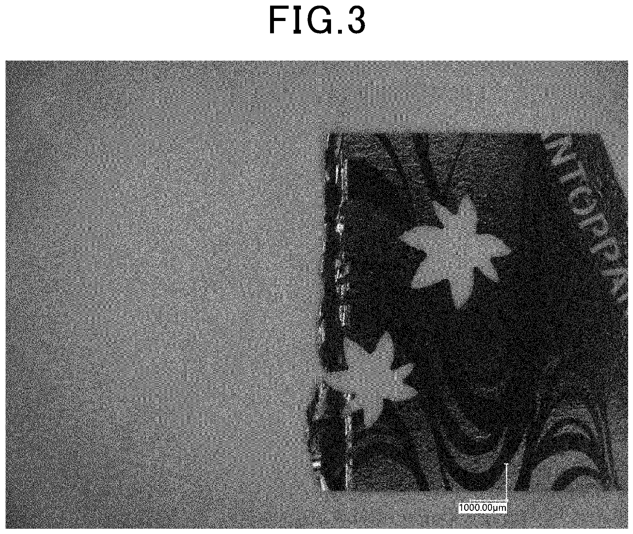

Further, the second individual information J2 included in the second region 32 can be the outline shape of the burrs of the authentication device individual authentication sticker. These burrs are, as illustrated in Figs. 2 and 3, formed in the transfer foil 10 when the transfer material layer 20 is released from the support body 11.

In this way, according to the present embodiment, it is possible to provide a transfer foil that is formed such that, by setting the physical properties of a transfer material layer at room temperature and at a sticking temperature, being a temperature of the transfer material at the time of hot stamping, to an appropriate range, burrs are formed in an appropriate range so as to not extend too far from the transferred region but also not be so short that individual authentication becomes difficult, a display on which the transfer foil has been placed, and a verification method capable of easily verifying the authenticity of an individual display on which a transfer foil has been placed.

Because the burrs have a unique external shape each time transfer is performed from the transfer foil, by hot stamping the transfer foil to the display, the burrs formed by the transfer foil can be preferably used in authenticity verification of the display.

Example 1 of First Embodiment

A transfer foil of Example 1 of the first embodiment will now be described.

As shown in Fig. 1, the transfer foil 10 with the support body 11 was prepared as follows.

Using a 38 μm-thick PET film as the support body 11, the surface protective layer 12 and the optical formation layer (ink) 13 were respectively coated by gravure printing to a thickness of 0.5 μm and 1 μm, and after the solvent contained in the ink was removed by volatilization, a metal cylindrical plate provided with a relief structure consisting of an uneven shape having a specific height and pitch was pressed to form an uneven shape on the surface of the optical formation layer 13.

Then, after laminating the reflective layer 14 on the molded relief structure surface using vacuum deposition, the lower protective layer 15, the cushion layer 16, and the adhesive layer (ink) 17 were respectively coated by gravure printing to a thickness of 1 μm, 1 to 2 μm, and 4 to 5 μm, and by volatilizing and removing the solvent contained in the ink, the transfer foil 10 with the support body 11 having the laminated cross-section shown in Fig. 1 was prepared.

Note that the specific product names and compositions of the support body 11, the surface protective layer (ink) 12, the optical formation layer (ink) 13, the reflective layer 14, the lower protective layer (ink) 15, the cushion layer (ink) 16, and the adhesive layer (ink) 17 are as follows. In the following, "parts" refers to parts by mass, and "ratio" refers to mass ratio.

(Support body 11)

Lumirror 38S10 (Toray Industries, Inc.)

(Surface protective layer (ink) 12)

| | |
|---|---|
| Olefin-based copolymer | 92 parts |
| Polyethylene resin | 5 parts |
| Cellulose ester | 3 parts |
| Toluene | 523 parts |
| Tetrahydrofuran | 378 parts |

(Optical formation layer (ink) 13)

| Urethane resin | 20 parts |
|---|---|
| Methyl ethyl ketone | 50 parts |
| Ethyl acetate | 30 parts |

(Reflective layer 14)

| Aluminum (Al) | Thickness 500 angstroms |
|---|---|

(Lower protective layer (ink) 15)

| Vinyl chloride-vinyl acetate copolymer | 66 parts |
|---|---|
| Polyethylene resin | 3 parts |
| Polyurethane resin | 8 parts |
| Dimethylacetamide (DMAC) | 23 parts |

(Cushion layer (ink) 16)

| Polyester resin | 12 parts |
|---|---|
| Silica dispersion liquid | 19 parts |
| Toluene | 10 parts |
| Butyl acetate | 59 parts |

(Adhesive layer (ink) 17)

| Acrylic resin | 494 parts |
|---|---|
| Polyester resin | 12 parts |
| Antifoaming agent | 3 parts |
| Nanosilica dispersion liquid | 322 parts |
| Silica | 24 parts |
| Methyl ethyl ketone | 125 parts |
| Toluene | 20 parts |

The transfer foil 10 with the support body 11 prepared as described above was placed on a printed white core substrate, the hot stamping machine 50 was used to transfer the transfer foil 10 onto the white core substrate, and then the support body 11 was removed from the transfer foil 10.

The transfer conditions were a transfer temperature of 120°C, a pressure of 330 kg/cm$^2$, and a transfer time of 1 second.

Fig. 7 is a plan view showing a square tube mold plate used at the time of transfer in Example 1 of the first embodiment.

A square tube mold plate 52 such as that shown in Fig. 7 was used at the time of transfer.

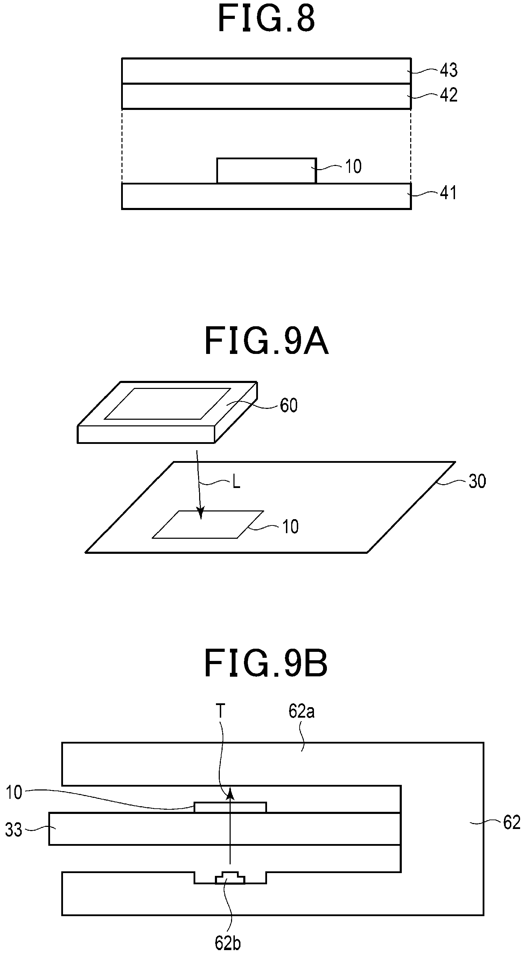

Fig. 8 is a conceptual diagram showing a laminated structure of a display (personal authentication medium) of Example 1 of the first embodiment.

16

As shown in Fig. 8, a laser colorable substrate 42 and a transparent substrate 43 were laminated on the white core substrate 41 to which the transfer foil 10 had been transferred, and after hot press lamination, punching processing was performed into a card shape, and a laser printing machine (developed product: fiber laser type, emission wavelength 1,064 nm) was used to perform laser printing to prepare the display (personal authentication medium) 30.

As the white core substrate 41, 400 μm thick LEXAN SD8B24 (SABIC Corporation) was used.

As the laser colorable substrate 42, 100 μm thick LEXAN SD8B94 (SABIC Corporation) was used.

As the transparent substrate 43, 100 μm thick LEXAN SD8B14 (SABIC Corporation) was used.

The hot press lamination conditions were a temperature of 190°C, a pressure of 80 N/cm$^2$, and a time of 25 minutes.

Fig. 9A is a diagram showing a detection example by an example of a burr detection device, and a perspective view of a display (personal authentication medium).

The burr detection device 60 illustrated in Fig. 9A is integrally configured by a capture unit, a detection unit, and a light-emitting unit (none of which are shown). The burr detection device 60 irradiates an inspection light L from the light-emitting unit (not shown) toward the transfer foil 10 in a direction perpendicular to the surface of the transfer foil 10, captures the reflected light at the capture unit (not shown), and detects the burrs at the detection unit (not shown) based on the capture result.

Fig. 9B is a diagram showing a detection example by another example of a burr detection device, and a side view of a display (personal authentication medium).

The burr detection device 62 illustrated in Fig. 9B is also integrally configured by a capture unit (not shown), a detection unit 62a, and a light-emitting unit 62b. Although the burr detection device 62, like the burr detection device 60, irradiates light toward the transfer foil 10 from the light-emitting unit 62b in a direction perpendicular to the surface of the transfer foil 10, unlike the burr detection device 60, the transmitted light T that has passed through the transfer foil 10 is captured by the capture unit (not shown), and the burrs are detected by the detection unit 62a based on the capture result.

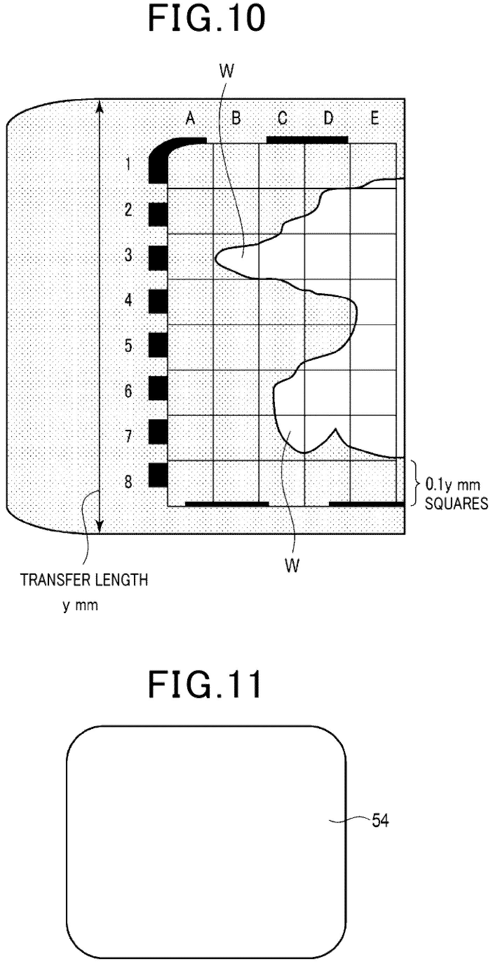

Fig. 10 is a schematic diagram showing an example of a burr detection result in Example 1 of the first embodiment.

As shown in Fig. 10, the transfer region is divided into 10% square regions (0.1 mm × 0.1 mm) based on the length of the short side of the transfer region, and for the burrs W protruding from the transfer region, the area ratio occupied by the burrs inside each region is calculated.

The regions are mapped to coordinates, and for example, the region having coordinates of "2" on the vertical axis and "C" on the horizontal axis can be expressed by the coordinate 2C. Note that the transfer region can be detected from the edge of the transfer foil 10. Further, the captured image of the transfer region is distorted due to the influence of the capture angle and camera lens aberrations, but this can be corrected by alignment marks.

The alignment marks can be formed by a planar pattern (demetallization) on the reflective layer 14 formed by partially removing the reflective layer 14 by etching. Although it is difficult to distinguish between the transfer region and the burr parts, because the area ratio of the burr parts when integrated in a direction perpendicular to the edge of the transfer region is known, the burr parts can be estimated from the image of the edge.

It is also possible to detect the burr parts with a device according to the position relative to a mark used for capture of the transfer foil 10. Furthermore, the region of the stamping can be detected by a pressure-sensitive material contained in the transfer foil 10.

It was experimentally verified that, as a result of the transfer foil having the properties described above, the length of the burrs W protruding from the transfer region was controlled to be 0.5 mm or less.

In addition, in order to obtain information regarding the outline shape of the burrs W protruding from the transfer region, a burr area ratio was calculated for each region of the outer edge of the transfer region (that is, each of the regions 1A to 8E shown in Fig. 10).

For example, in the case of region 2C, the burr area ratio α is expressed by the following formula.

$$\alpha \ [\%] = \beta \ / \ \gamma \ * \ 100$$

where β is the area of the part in which the transfer foil 10 remains in the region 2C, and γ is the base area of the region 2C.

The burr area ratio of each region protruding from the transfer region obtained as described above had a constant distribution, and the shape of the burrs was different for each display (personal authentication medium) 30. Furthermore, a result was obtained that showed that the average value of the burr area ratio for each row in the coordinates showed a constant distribution. In addition, a result was also obtained showing that the burr area ratio per region differs depending on the display (personal authentication medium) 30, that is, the outline shape of the burrs protrudes from the transfer region differs depending on the display (personal authentication medium) 30.

In this way, according to the present example, it was confirmed that the length of the burrs protruding from the transfer region could be controlled to be 0.5 mm or less, which did not significantly affect the optical characteristics.

Furthermore, it was confirmed that the outline shape of the burrs protruding from the transfer region was different for each display (personal authentication medium) 30.

Example 2 of First Embodiment

A transfer foil of Example 2 of the first embodiment will now be described.

In Example 2 of the first embodiment, the transfer foil 10 and the display (personal authentication medium) 30 were prepared using the same manufacturing method and manufacturing conditions as in Example 1, and the same detection device as in Example 1 was used to perform burr detection.

However, unlike Example 1, a rounded rectangular mold plate was used at the time of transfer.

Fig. 11 is a plan view showing a rounded rectangular mold plate used at the time of transfer in Example 2 of the first embodiment.

In Example 2 of the first embodiment, a rounded rectangular mold plate 54 such as that shown in Fig. 11 was used at the time of transfer.

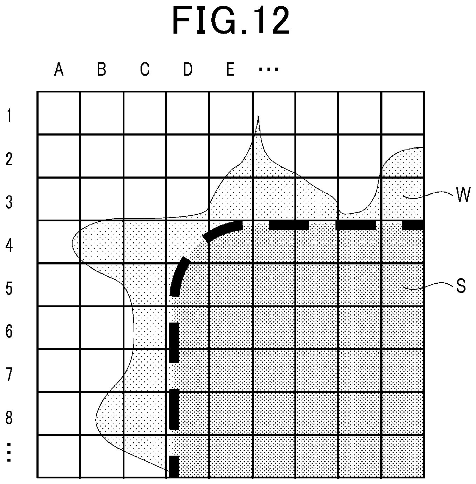

Fig. 12 is a schematic diagram showing an example of a burr detection result in Example 2 of the first embodiment.

From the result shown in Fig. 12, according to the present example, it was confirmed that the length of the burrs W protruding from the transfer region S could be controlled to be 0.5 mm or less, which did not significantly affect the optical characteristics.

Furthermore, it was confirmed that the outline shape of the burrs protruding from the transfer region was different for each display (personal authentication medium) 30.

Example 3 of First Embodiment

A transfer foil of Example 3 of the first embodiment will now be described.

In Example 3 of the first embodiment, the transfer foil 10 and the display (personal authentication medium) 30 were prepared using the same manufacturing method and manufacturing conditions as in Example 2, and the same detection device as in Example 1 was used to perform burr detection.

However, the specific materials of the support body 11, the surface protective layer 12, the reflective layer 14, the lower protective layer 15, and the adhesive layer 17 were as follows.

(Support body 11)

Lumirror 38S10 (Toray Industries, Inc.)

(Surface protective layer (ink) 12)

PMMA

(Optical formation layer (ink) 13)

Acrylic

(Reflective layer 14)

Aluminum (Al) Thickness 500 (Angstroms)

(Lower protective layer (ink) 15)

Polyester

(Cushion (ink) layer 16)

Silica
Barium sulfate
Polyester
Acrylic

(Adhesive layer (ink) 17)

Silica
Acrylic

Fig. 12 is a schematic diagram showing an example of a burr detection result in Example 3 of the first embodiment.

From the result shown in Fig. 12, according to the present example, it was confirmed that the length of the burrs W protruding from the transfer region S could be controlled to be 0.5 mm or less, which did not significantly affect the optical characteristics.

Furthermore, it was confirmed that the outline shape of the burrs W protruding from the transfer region was different for each display (personal authentication medium) 30.

According to the present embodiment including the above examples, it is possible to provide the transfer foil 10 with burrs whose length is appropriately controlled to be an extent such that the optical properties are not significantly reduced. Because the burrs have a unique outline shape for each transfer foil 10, when the transfer foil 10 is applied to the display 30, as will be described later, the burrs of the transfer foil 10 can be preferably used in the method for verifying authenticity of the display 30.

(Method for Verifying Authenticity)

Next, a method for verifying authenticity according to the first embodiment of the present invention will be described.

The method for verifying authenticity according to the present embodiment is capable of preferably performing authenticity verification of the display described above.

When using the method for verifying authenticity according to the present embodiment, it is necessary to register in advance, for each display 30, the association between the individual information J1 and the unique information in a database. The individual information J1 may be, for example, the first individual information J1 described using Fig. 6. The unique information is the outline shape of the burrs.

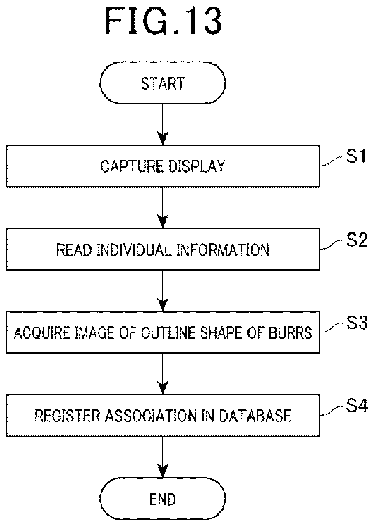

Fig. 13 is a flowchart for describing registration in a database in a method for verifying authenticity according to the first embodiment of the present embodiment.

The display (personal authentication medium) 30 is captured by a capture means such as a camera (S1).

Then, the individual information J1 is read by OCR or the like (S2).

Next, an image of the outline shape of the burrs, which is unique information, is acquired (S3).

Because the outline shape of the burrs is small compared to the individual information J1, it is preferable to use a camera having a higher sensitivity than the camera used in step S1 for acquiring the image of the outline shape of the burrs.

Then, the individual information J read in step S2, and the image of the outline shape of the burrs acquired in step S3 are associated and registered in a database (S4).

Next, the method for verifying authenticity will be described.

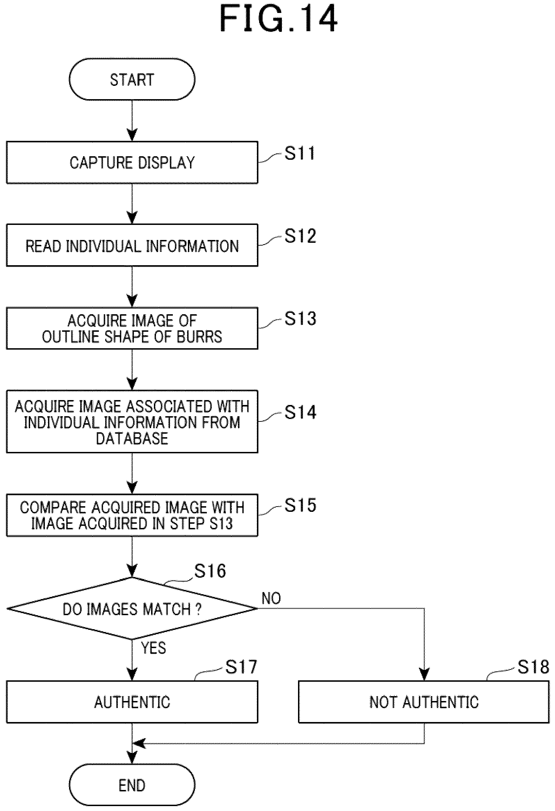

Fig. 14 is a flowchart showing a flow of the method for verifying authenticity according to the first embodiment of the present invention.

The display (personal authentication medium) 30, which is the target of authenticity verification, is captured by a capture means such as a camera (S11).

Then, the individual information J1 is read by OCR or the like (S12).

Next, an image of the outline shape of the burrs, which is unique information, is acquired (S13).

Because the outline shape of the burrs is small compared to the individual information J1, it is preferable to use a camera having a higher sensitivity than the camera used in step S11 for acquiring the image of the outline shape of the burrs.

Then, the outline shape of the burrs that is registered in association with the individual information J1 read in step S12 is acquired by referring to the database (S14), and the acquired outline shape is compared with the outline shape acquired in step S13 (S15).

As a result of the comparison, if both outline shapes match (S16:Yes), it is determined that the display 30 is authentic (S17).

On the other hand, as a result of the comparison in step S15, if both outline shapes do not match (S16:No), it is determined that the display 30 is not authentic (S18).

As described above, according to the method for verifying authenticity according to the present embodiment, authenticity verification of a display on which a transfer foil has been placed can be performed by using the outline shape of the burrs unique to each transfer foil.

Burrs are generated by chance, which makes it almost impossible to reproduce the outline shape of specific burrs, and therefore, even if a display is counterfeited, it is not possible to reproduce the outline shape of the burrs, and counterfeiting can be reliably detected.

[Second Embodiment]

(Configuration of Display)

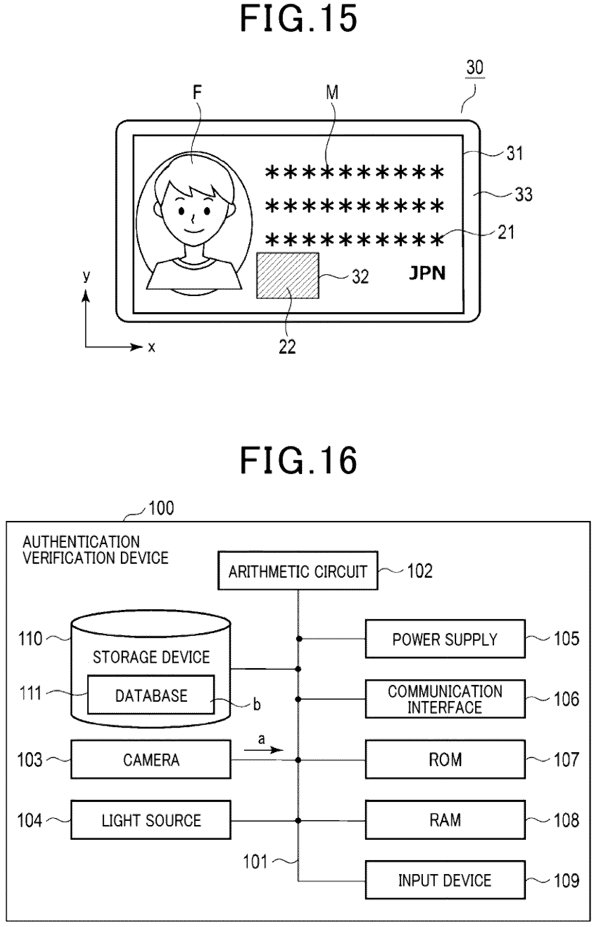

Fig. 15 is a plan view showing a typical display.

The display can be a page, a card, a banknote, a ticket, a tag, or a label, as described above. As illustrated in Fig. 15, in order to visually identify personal information, a facial photograph F of the owner and text M relating to the personal information of the owner are generally displayed.

The display 30 illustrated in Fig. 15 can have a first region 31 and a second region 32 on a substrate 33.

Further, a certification code 21 is formed in the first region 31. The certification code 21 includes an identifier. Furthermore, the certification code 21 can be recorded on a chip module built into the display. The chip module includes memory. The memory is capable of storing the certification code 21.

In this case, because of an external power source and communication interface, the chip module is preferably connected to a terminal, an antenna, or both. The terminal can be a gold terminal. The antenna can be any one of a loop antenna, a monopole antenna, or a dipole antenna.

The certification code 21 can be readable information, an image, or both. The readable information of the certification code 21 can be text that is a combination of characters, numbers, symbols, and the like. The readable information can be in a natural language. The readable information may be recorded as a digital code. The images can also be recorded as bitmap data. The readable information can be text. The text can consist of characters, numbers, and symbols.

The identifier of the certification code 21 can be a production number, a token, a manufacturing number of the display 30, personal information of the owner of the display 30, biometric information of the owner of the display 30, or a combination thereof. In other words, the identifier of the certification code 21 can include any one of a serial number, a token, a production number of the display 30, personal information of the owner of the display 30, or biometric information of the owner of the display 30.

A serial number, a token, a production number of the display 10, personal information of the owner of the display 30, or biometric information of the owner of the display 30 can be formed in the first region 31 of the display 30 as a readable certification code 21. The token can be a fungible token or a non-fungible token (NFT token).

In this case, specific examples of the personal information of the owner of the display 30 included in the identifier can be a name, a date of birth, a gender, a country of origin, a place of birth, and a personal identification number. Furthermore, the image of the certification code 21 can also include a facial photograph F, a signature, and a fingerprint image of the owner.

In addition, the readable information of the certification code 21 can also include a digital code that encodes a feature amount of the biometric information of the owner. The encoding at this time can be digital data obtained by sampling the feature amount. Moreover, it may be a hash code of the feature amount.

The material of the substrate 33 can be a polycarbonate. When the material of the substrate 33 is a polycarbonate resin, the certification code 21 can be recorded by scanning the substrate with a laser beam, and carbonizing the polycarbonate with the heat of the laser beam. In other words, the certification code 21 can be recorded by laser printing.

Furthermore, the certification code 21 can also be formed by printing on the polycarbonate resin instead of using a laser beam. The printing can be performed by thermal transfer printing or inkjet printing.

In the thermal transfer, the certification code 21 can be printed and recorded on the substrate 33 by partially heating the ink ribbon with a thermal head. In addition, the display 30 may be formed by printing the certification code 21 on a polycarbonate sheet in advance, and laminating a plurality of polycarbonate sheets on top of one another.

Also, the certification code 21 may be recorded by removing or altering a portion of the printing with a laser beam.

Therefore, the substrate 33 can be made of a laser printable material or a printable material.

As a result of enclosing the laser printing on the substrate 33 or printing the certification code 21 inside the display 30, when the display 30 is counterfeited or imitated, the certification code 21 recorded by laser printing or printing is destroyed at the same time as it is recorded, which makes it easy to determine that an act of counterfeiting or imitation has occurred.

Fig. 15 illustrates a display 30 in which the first region 31 and the second region 32 overlap each other. In this case, the first region 31 and the second region 32 are precisely aligned. Therefore, for example, if a displacement occurs in the connecting portion between the certification code 21 and the sticker 22 due to an act of counterfeiting or imitation, it becomes easy to determine that an act of counterfeiting or imitation has occurred.

Although the display 30 illustrated in Fig. 15 shows a state where the first region 31 and the second region 32 overlap each other, it is not necessary that the entire regions overlap each other, and only a portion of the second region 32 may overlap the first region 31, and they may also just be adjacent to each other without overlapping. As a result, the viewer of the display 30 is able to view the certification code 21 and the sticker 22 separately, which improves the visibility.

The sticker 22 is attached to the second region 32. This sticker 22 can record feature information as an optical characteristic distribution. In other words, the feature information can be a two-dimensional distribution of optical characteristics. The capture data can be obtained from the feature information by a camera capture performed in transmission, reflection, or both.

The sticker 22 can be formed by attaching a transfer material layer from a transfer foil by hot stamping. That is, the sticker 22 can be formed by hot pressing the transfer foil with a heated die and transferring it to the second region. Such a transfer foil is also called a hot stamping foil. As a result of capturing the sticker 22 with a camera, the feature amount can be acquired from the feature information of the sticker 22.

For example, by transferring a transfer foil having optical effects such as interference, scattering, and diffraction effects to the second region 32, the sticker 22 having feature information can be formed. Alternatively, the sticker 22 can also be formed by transferring an optically variable ink having an optical effect.

Further, the sticker 22 may be formed by transferring a pigment ink. The sticker 22 can be pasted to the second region 32 by hot press transfer of a transfer ink ribbon in which an optically variable ink or pigment ink is frame-sequentially formed on the color ink panels according to the size of the second region 32. The hot press transfer may be performed using a thermal head. An image of a facial photograph of the owner can be formed in the second region 12 by hot press transfer of a transfer ink ribbon using a thermal head according to the data of the facial photograph of the owner.

Furthermore, the transfer foil may form an image of a facial photograph of the owner in the second region 32 by hot press transfer of a transfer ink ribbon using a thermal head. In addition, the sticker 22 may be formed by forming an intermediate layer in which inks or optical structures are arranged and laminated in advance in the second region 32, and then partially removing the intermediate layer by laser engraving. Also, the sticker 22 may be formed by inkjet printing.

Therefore, it is desirable that the transfer foil forming the second region 32 is a transfer foil that has an optical effect. Specifically, the transfer foil uses a material or structure that has effects such as light diffraction, scattering, interference, absorption, resonance, phase shifts, and fluorescence. The optical effect allows the authenticity to be verified visually or with a camera.

For example, when the foil forming the second region 32 includes a diffraction grating structure, an effect that enables an image formed by an optical effect in which iridescent light is produced due to light diffraction or an image that exhibits a specific color under specific observation conditions to be observed, or an effect that enables a three-dimensional reproduced image to be observed can be achieved. In this case, authenticity can be visually verified by checking the presence or absence of a diffracted light image, or the presence or absence of an image that exhibits a specific color under specific observation conditions.

Furthermore, when a random uneven structure is included, the effect of a white appearance can be realized due to light scattering. When an uneven structure or multilayer film structure that interferes with light, or a special pigment such as pearl ink is included, it is possible to achieve a glittery visual observation effect or an optical effect that exhibits different colors depending on the observation angle.

As a result of including an uneven structure in the sub-wavelength region, such as a moth-eye structure, it is possible to achieve an optical effect of displaying a black or dark gray color by absorbing the light. In addition, an optical phase rotation effect can be achieved by using structural birefringence resulting from periodically providing a sub-wavelength structure, or by including a liquid crystal molecular material in the transfer foil.

Although the various optical effects described above may be formed on the entire surface of the transfer foil forming the second region 32, each of the optical effects may be partially arranged thereon. Furthermore, depending on the arrangement, specific information may be presented during visual observation.

When an embossed hologram is used as the transfer foil, the external shape of the reflective layer of the embossed hologram can be used as feature information. The feature information can include characters, numbers, symbols, patterns, fine patterning, and the like, that are formed on the embossed hologram.

Furthermore, the irregular uneven structure on the edge portion of the foil that has been formed by chance by removing a portion of the transfer foil by a laser light source, the shading of the removed area including smudges and the like, and the irregular shape of the metal layer of the edge portion of the transferred hologram foil can be used as the feature information. The sticker 22 is optically readable. The feature information includes unintentional information that occurs by chance. The entropy of the feature information is the sum of the entropy of the intended manufacturing information, the entropy of the manufacturing data, and the entropy of the processing information that occurs by chance. In other words, the entropy of the feature information is greater than the intended entropy during processing.

The intentional information can consist of material properties, machining marks, machining conditions, and work habits. When the feature information is only the intended manufacturing information, stickers 22 having the same feature information can be formed by reproducing the material characteristics, processing marks, processing conditions, and work habits.

However, when the feature information includes the processing information that occurs by chance, the feature information cannot be reproduced only from the material characteristics, processing marks, processing conditions, and work habits. The incidental processing information includes defects, fluctuations, and errors during manufacturing of the sticker 22 that is attached to the second region 32. The defects and manufacturing fluctuations of the sticker 22 include feature information. The sticker 22 encloses a trace recording layer (not shown) having feature information due to defects, fluctuations, and errors during manufacturing. The trace recording layer is an aliphatic compound, an aromatic compound, a metal, a glass, a crystal, or a composite thereof.

That is, the feature information can be an optical characteristic distribution that occurs by chance during manufacturing. Specific examples of defects in the sticker 22 include burrs, chips, pinholes, and ink smudges during transfer or laser engraving. The specific fluctuations during manufacturing of the sticker include misaligned or uneven transfer.

The defects in the sticker 22 provide individual feature information to the display 30. That is, the defects, fluctuations, and errors of the sticker, which is feature information, provide individual feature information to the display 30. Therefore, the certification code 21 that refers to the feature amount obtained from the feature information can be an individual code.

In addition, by irradiating the display 30 with a laser and laser engraving the second region 32, burrs, chips, and pinholes are produced by chance at the edge portion of the engraved region of the foil that forms the second region 32.

The shading of the removed area, the shape of the edge portion, and the pinholes are formed by chance and cannot be reproduced. Therefore, by using the shape of the burrs and chips, and pinholes as feature information, it is possible to obtain feature information that cannot be reproduced.

The optically variable ink of the sticker 22 can be a cholesteric liquid crystal ink, a magnetic ink, or a mixture thereof. The sticker 22 may be formed of an invisible ink. The invisible ink is an ultraviolet fluorescent ink, an infrared fluorescent ink, an infrared absorbing ink, an infrared transparent ink, or a mixture thereof. Furthermore, the sticker 22 may be formed using a foil containing an optically variable ink or invisible ink.

Next, an authentication verification device to which the method for verifying authenticity according to the second embodiment of the present invention is applied will be described.

(Authentication Verification Device)

(Configuration)

Fig. 16 is an electronic circuit configuration diagram showing an example of an authentication verification device to which the method for verifying authenticity according to the second embodiment of the present invention is applied.

The authentication verification device 100 includes an arithmetic circuit 102, a camera 103, a light source 104, a power source 105, a communication interface 106, a ROM 107, a RAM 108, an input device 109, and a storage device 110 that are connected to each other by a bus 101.

The power source 105 can be a DC power source. The DC power source may be, for example, a battery. The power source 105 supplies power to the arithmetic circuit 102, the camera 103, and devices of the authentication verification device 100.

The light source 104 illuminates the display 10 captured by the camera 103. The light source 104 can be a diffuse light epi-illumination light source or a ring illumination light source, and can provide bright field illumination or dark field illumination.

The camera 103 captures the display 10 that is being illuminated by the light source 104 and outputs capture data a. That is, the display 30 can be captured using the light emitted from the light source 104 as the inspection light. This camera can be a visible light camera, an infrared camera, a terahertz camera, or a millimeter wave camera. Furthermore, visible light, ultraviolet light, infrared light, and terahertz waves can be used as the lighting used for capture.

In other words, the light source for capture can be a visible light source, a black light, a heat source, a terahertz oscillator, or a millimeter wave oscillator. In particular, a visible light camera is preferable because a general-purpose camera can be used. A camera can also consist of an image sensor, a lens, a filter, a control circuit, and an image output circuit.

When the camera 103 captures the display 30 under dark-field illumination conditions, it becomes easier to obtain capture data that emphasizes the burrs and chips (described later) in the second region 32. Therefore, it is preferable that either the light source 104 is positioned at a 45 degree position with respect to the normal direction of the display 30, and capture by the camera 103 is performed along the normal direction of the display 30, or the display 30 is captured with the camera 103 under dark-field illumination conditions.

More preferably, the light source 104 is positioned at a 45 $\pm$ 30 degree position with respect to the normal direction of the display 30, and capture data that emphasizes the burrs, chips, and pinholes in the second region 32 is obtained by image processing such as an image integration calculation or an image difference calculation of an image captured by the camera 103 from a position along the normal direction of the display 30 and an image captured using the light source 104 positioned at a different angle with respect to the normal direction of the display 30.

Alternatively, by performing image processing on an image captured under dark-field illumination conditions and an image captured under bright-field illumination conditions, it is also possible to acquire capture data that further emphasizes the burrs, chips, and pinholes in the second region 32.

The number of times the camera 103 captures images may be a single time, or a plurality of times. Therefore, the capture data a may not only be a single piece of data, but may sometimes be a plurality of pieces of data. Furthermore, the number of captures may be switched according to a mode.

The capture data a output by the camera 103 is transmitted to the RAM 108 via the bus 101.

The ROM 107 and the storage device 110 store the various programs for realizing the functions of the authentication verification device 100 as binary code or source code.

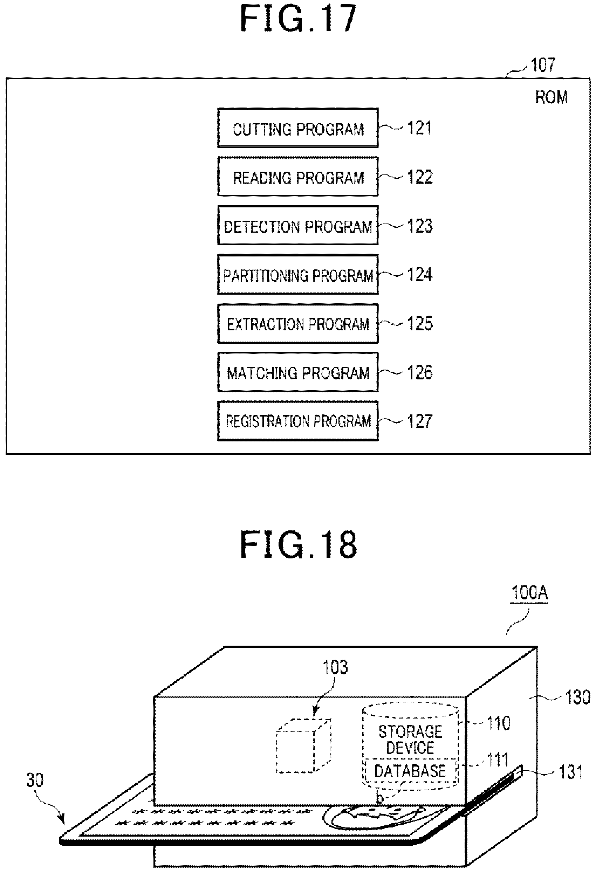

Fig. 17 is a diagram showing various stored programs.

The ROM 107 is a non-rewritable storage area, and stores a cutting program 121, a reading program 122, a detection program 123, a partitioning program 124, an extraction program 125, a matching program 126, and a registration program 127. These programs 121 to 127 cannot be rewritten.

The RAM 108 can be a DRAM or a DRAM board. RAM 108 provides a rewritable storage area.

The storage device 110 can be composed of one or more solid state drives (SSDs) or hard disk drives (HDDs). Alternatively, it may be a flash memory or a removable memory medium. The storage device 110 may be a virtual device composed of a plurality of storage devices. The storage device 110 stores the database 111.

The arithmetic circuit 102 can serve as the chip module and the IC module. The IC module has a one or more chip modules mounted on a base. The chip module can be a semiconductor integrated circuit. The arithmetic circuit 102 controls the operation of each portion of the circuit according to the programs 121 to 127 stored in the ROM 107.

The authentication verification device 100 can be a dedicated device. By using a dedicated device, the authentication verification device 100 can be optimized. The authentication verification device 100 may be incorporated into a housing alone or together with other devices. Alternatively, the authentication verification device 100 can also be realized by a general-purpose device such as a PC, a tablet terminal, or a smartphone on which a dedicated program is installed. By realizing the authentication verification device 100 using a general-purpose device, the authentication verification device 100 becomes inexpensive.

Fig. 18 is a perspective view showing an example of an authentication verification device of a dedicated device.

The authentication verification device 100A shown in Fig. 18 is realized by incorporating the authentication verification device 100 into a dedicated housing 130. In Fig. 18, only the camera 103 and the storage device 110 are shown inside the housing 130 for the sake of simplicity.

The housing 130 is provided with a slit 131 for inserting and positioning the display 30 to be captured by the camera 103. When capturing the display 30, as shown in Fig. 18, the display 30 is inserted into the slit 131 with the front side of the display 30 facing upward. Then, the state where the lower end of the display 30 makes contact with the back of the slit 131 becomes the capture point. The camera 103 captures the display 30 in this state, and outputs the capture data a.

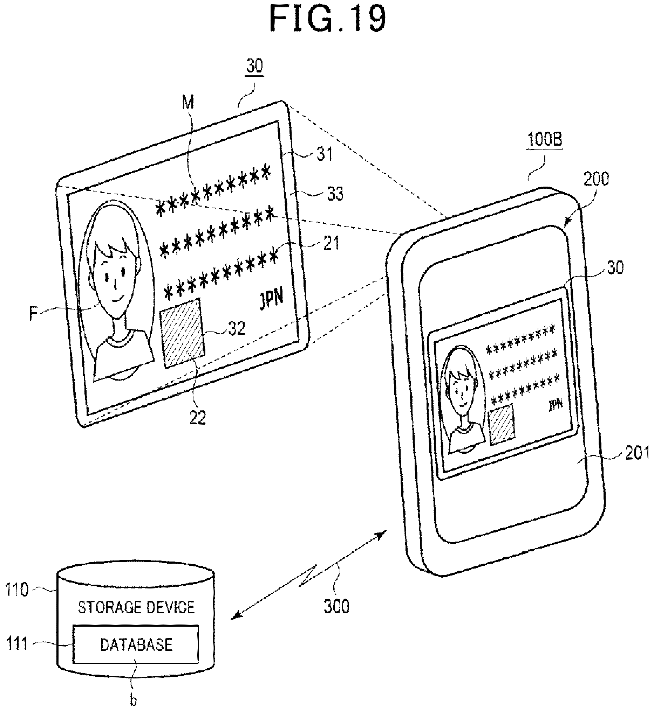

On the other hand, Fig. 19 is a perspective view showing an example of an authentication verification device that is realized by a smartphone on which a dedicated application has been installed.

The authentication verification device 100B shown in Fig. 19 realizes the functions of the authentication verification device 100 by installing a dedicated application on the smartphone 200. In this case, the input device 109 can be realized by a touch panel on the screen and a dedicated application interface displayed on the screen. Furthermore, in consideration of the storage capacity of the smartphone 200, the storage device 110 may be provided outside the smartphone 200.

The external storage device 110 may be connected to the smartphone 200 by a wired or wireless connection. In wireless connection, a connection may be made to a private or a public network. A global network can be the Internet.

When connecting to a public network, it is preferable to use encrypted communication for the communication. SSL can be used for encrypted communication. Alternatively, encryption may be performed at the application level. Encrypted communication can be easily achieved when performed at a higher level. When stricter security is required, encryption at a lower level may be used.

Public key cryptography can be applied to the encryption. Furthermore, the encryption may also combine common key cryptography. Alternatively, a quantum network may be used. RSA cryptography and lattice cryptography can be applied as the public key cryptography. AES, DES, and RC4 can be applied as the common key cryptography.

The key length of the common key can be 40 bits or more and 256 bits or less, such as 56, 128, 192, or 256 bits. The key length of the public key can be 1,024 bits or more and 2,048 bits or less. Alternatively, the key may be 1 Kbit or more and 1 Mbit or less.

When the authentication verification device 100B is the smartphone 200, the authentication verification device 100B can use the communication function of the smartphone 200 to access the storage device 110 via the communication network 300.

Furthermore, in the authentication verification device 100B, a camera device included in the smartphone 200 can be used as the camera 103. Fig. 19 also shows an example of a state in which the display 30 has been captured by the camera device of the smartphone 200, and then displayed on the display 201 of the smartphone 200.

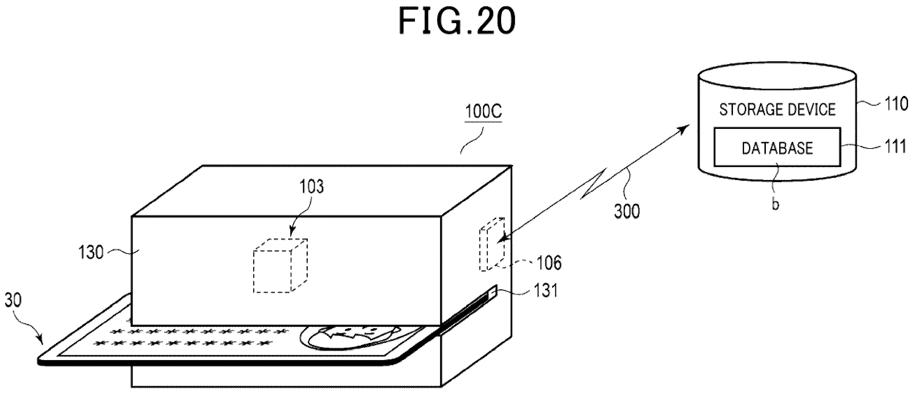

Note that, as shown in Fig. 18, even when the authentication verification device 100A is realized by incorporation into the housing 130 as a dedicated device, the storage device 110 can be externally provided. Such an example will be described using Fig. 20.

Fig. 20 is a perspective view showing another example of an authentication verification device 100C that is realized by being built into a housing as a dedicated device.

The authentication verification device 100C differs from the authentication verification device 100A in that the storage device 110 is not provided inside the housing 130 as a dedicated device, but instead has the storage device 110 externally provided as, for example, a cloud server in the same manner as Fig. 19.

The authentication verification device 100C uses the communication function of the communication interface 106 to access the storage device 110 via the communication network 300 such as the Internet or a communication carrier network.

(Registration of Verification Record)

In the authentication verification device 100 described above (including the authentication verification devices 100A, 100B and 100C), software and hardware function cooperatively such that, at the time of manufacturing of a new display 30, a feature amount is obtained from the feature information of the manufactured display 30, and a pair of digital data consisting of the feature amount and an identifier are stored and registered in the database 111 as a verification record.

Furthermore, when performing authenticity verification of the display 30, the feature amount can be called from the verification record stored in the database 111 by referring to the identifier, and then the feature amount can be used.

In addition, authenticity verification can be performed by matching the called feature amount with the feature amount acquired from the feature information of the display 30 to be authenticated. Registration of a verification record will be described below.

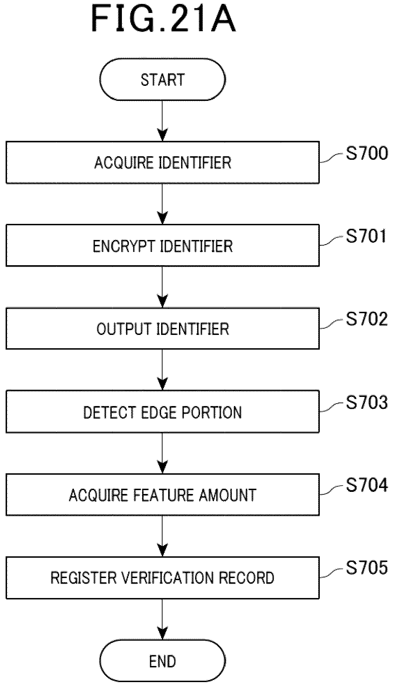

Fig. 21A is a flowchart showing a flow of registration processing of a verification record of the display 30 performed by the authentication verification device 100.

The camera 103 captures the manufactured display 30 while it is being illuminated by the light source 104, and outputs the capture data a of the display 30.

As illustrated in Fig. 15, the display 30 includes the first region 31 that contains a certification code 21, and the second region 32 that contains a sticker 22. Therefore, the capture data a captures the first region 31 containing the certification code 21 and the second region 32 containing the feature information.

The number of times the camera 103 captures images may be a single time, or a plurality of times. Therefore, the capture data a may not only be a single piece of data, but may sometimes be a plurality of pieces of data. Furthermore, the authentication verification device 100 may have a function that provides guidance so that capture can be performed correctly. In addition, the authentication verification device 100 may have a function that determines whether capture has been performed correctly.

Because the certification code 21 is formed by laser printing or printing, it can be easily read from the capture data a that has been captured under diffuse light epi-illumination or bright-field illumination. Furthermore, the feature information can be easily read from the sticker 22 even when the capture data a has been captured in a state where the light source 104 is obliquely illuminated, such as under ring illumination or dark-field illumination.

Therefore, when the camera 103 captures images a plurality of times, different capture conditions can be used in which the light source 104, for example, performs diffuse light epi-illumination for the first capture, and performs ring illumination or both bright-field illumination and dark-field illumination for the second capture.

As a result, the camera 103 can obtain, for a single display 30, a plurality of capture data a, each of which have been captured under different capture conditions. Furthermore, especially for the second region 32, an image captured using transmitted light can also be obtained as the capture data a.

The capture data a output by the camera 103 is transmitted to the ROM 107 via the bus 101.

The cutting program 121 cuts out the image data of the first region 31 and the image data of the second region 32 from the capture data a that has been output to the ROM 107. A cutting circuit can be constructed from the cutting program 121, the ROM 107, the RAM 108, the arithmetic circuit 102, and the bus 101.

As mentioned above, in the display 30, the position information where the first region 31 and the second region 32 are formed is determined in advance. Therefore, the cutting program 121 performs the cutting according to the position information.

Alternatively, the position information data of the second region 32 may be embedded in advance in the first region 31 of the display 30, and the cutting program 121 may cut out the first region 31 and the second region 32 by reading the position information data.

In addition, an information processing model for automatically cutting out the first region 31 and the second region 32 may be created in advance, and the cutting program 121 can cut out the first region 31 and the second region 32 according to the information processing model.

The reading program 122 reads the certification code 21 from the first region 31 that has been cut out by the cutting program 121. As mentioned above, the certification code 21 is an identifier k that is given in advance to each display 30. A reading circuit can be constructed from the reading program 122, the ROM 107, the RAM 108, the arithmetic circuit 102, and the bus 101.

When text is used as the identifier k, the text can be read by applying optical character recognition software to the reading program 122 and recognizing the text using the optical character recognition software.

In addition, when a facial photograph of the owner of the display 30 is used as the identifier k, the facial photograph can be recognized by applying a facial recognition algorithm or a machine learning facial recognition model to the reading program 122, and acquiring the feature amount of the facial photograph.

Moreover, when a signature of the owner is formed on the display 30 as the identifier k, the handwriting can be identified by applying a handwriting identification algorithm or a machine learning handwriting identification model to the reading program 122, and acquiring the feature amount of the handwriting.

The reading program 122 acquires the identifier k as described above (S700). When determining the authenticity via a public network, the reading program 122 further encrypts (S701) and outputs (S702) the acquired identifier k.

It is desirable to use public key cryptography for encryption. In public key cryptography, the encryption described above and the decryption of the encrypted identifier k can be performed using a public key, and because the key used for encryption is not known at the time of decryption, it is highly secure and convenient. Furthermore, both public key cryptography and common key cryptography can be used. RSA cryptography and lattice cryptography can be applied as the public key cryptography. The key length of the public key can be 1,024 bits or more and 2,048 bits or less. Alternatively, the key may be 1 Kbit or more and 1 Mbit or less.

The detection program 123 can detect the edge portion 40 of the second region 12 that has been cut out by the cutting program 121 using, for example, one of the Sobel method, the Canny method, and the Laplacian method. Alternatively, the detection program 123 can also detect the edge portion 40 of the second region 32 using an information processing model created in advance (S703). The information processing model for the identifier k can be obtained by machine learning. A detection circuit can be constructed from the detection program 123, the ROM 107, the RAM 108, the arithmetic circuit 102, and the bus 101.

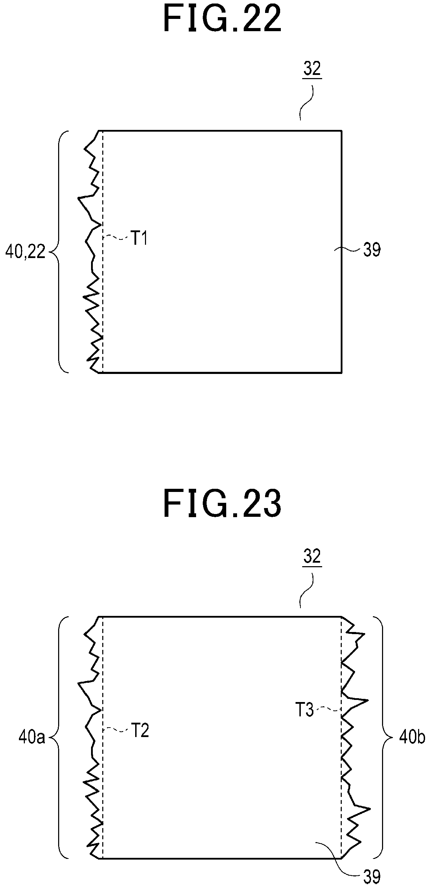

Then, the detection program 123 extracts an edge portion region from the detected edge portion 40. An example of the edge portion region that is extracted by the detection program 123 will be described using Fig. 22 and Fig. 23.

Fig. 22 is a plan view showing an example of a second region 32 containing one edge portion 40.

The second region 32 illustrated in Fig. 22 is composed of an edge portion 40 and a non-edge portion 39 that is separated by the dotted line T1.

The non-edge portion 39 corresponds to the shape of, for example, a transfer plate, a heated region, or a laser application region used to form the second region 32. Therefore, by design, that is, ideally, the second region 32 coincides with the non-edge portion 39. However, no matter how carefully the second region 32 is produced, as shown in Fig. 22, an edge portion 40 with irregular foil burrs and chips is formed. That is, the edge portion 40 is a region formed by chance, and the uneven shape and size cannot be reproduced and is unique to each display 30.

Focusing on this point, the authentication verification device 100 acquires the characteristics of the edge portion 40 (for example, the shape, area ratio of the shading, area transition, and length of the edge portion) as the feature amount s of the display 30 (S704).

Fig. 23 is a plan view showing an example of a second region 32 containing two edge portions.

The edge portion 40 may, as illustrated in Fig. 22, be generated on only one side of the second region 32. Furthermore, for example, as shown in Fig. 23, edge portions 40 may be generated on two sides of the second region 32. Alternatively, the edge portions 40 may be generated on all sides of the second region 32. Moreover, the edge portions 40 may be generated on some of the sides of the second region 32.

The second region 32 illustrated in Fig. 23 is composed of an edge portion 40a, a non-edge portion 39, and an edge portion 40b that are separated by the dotted line T2 and the dotted line T3.

Like the case of Fig. 22, the non-edge portion 39 corresponds to the shape of a transfer plate, a heated region, or a laser application region used to form the second region 32.

On the other hand, the edge portion 40a is a region formed on one side of the second region 32, and the edge portion 40b is a region formed on another side of the second region 32 with foil burrs and chips and the like. Because the edge portions 40a and 40b are also regions that are formed by chance, the irregular shape and size of the edge portions 40a and 40b cannot be reproduced and are unique to each display 30. Therefore, the characteristics of the edge portions 40a and 40b (for example, the shape, area ratio of the shading, area transition, and length of the edge portion) can also be used the feature amount s of the display 30.

Although Fig. 23 shows an example in which the two edge portions 40a and 40b face each other, the two edge portions 40a and 40b are not limited to facing each other, and for example, may be formed on two sides that are adjacent to each other. Furthermore, information obtained from the edge portions formed on three or four sides having such an irregular, uneven shape can also be used as the feature amount s of the display 30.

In addition, the shape of the second region 32 is not limited to a square shape as shown in Figs. 22 and 23, and may be a polygon, a circle, an ellipse, or a geometric pattern. Further, the features of the edge portion 40 can be used as the feature amount s in the same manner.

In order to obtain the feature amount s of the edge portions 40, in the authentication verification device 100, the detection program 123 detects an edge portion region 71 including the edge portions 40 from image data including the second region 32.

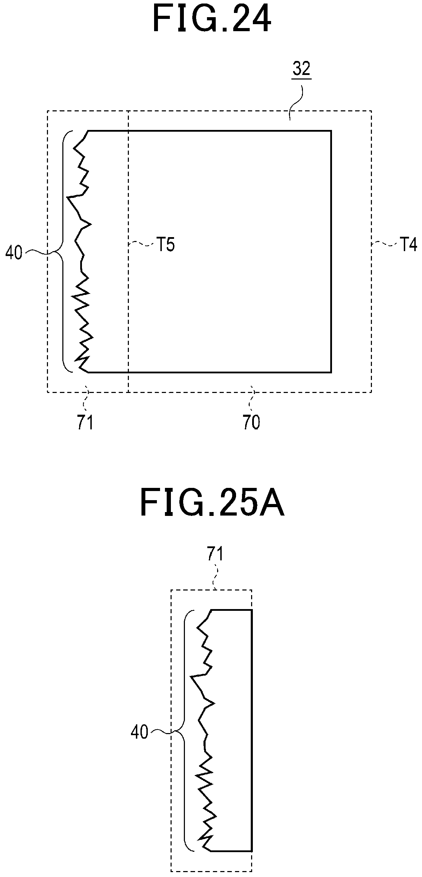

The detection of an edge portion region 71 by the detection program 123 will be described below using Fig. 24.

Fig. 24 is a diagram showing an example of capture data T4 including a second region 32.

As shown in Fig. 24, the detection program 123 sets an enclosing region 70 that encloses the second region 32. The enclosing region 70 only needs to surround the second region 32, and does not have to be particularly large.

Then, the detection program 123 sets, as illustrated by the dotted line T5, a dividing line (hereinafter the dividing line is also referred to as "T5") for dividing the enclosing region 70 into an edge portion region 711 including the edge portion 40 and the other region. The dividing line T5 may be a straight line or a curved line as long as it is set so that the edge portion region 71 at least includes the edge portion 40. Furthermore, the size of the edge portion region 71 defined by the dotted line T5 does not need to be particularly large.

Note that in Fig. 24, the dividing line T5 is illustrated to be parallel to the side of the non-edge portion 39 facing the edge portion 40, but the dividing line T5 does not have to be parallel to the side of the non-edge portion 39 facing the edge portion 40.

When such a dividing line T5 is set, the detection program 123 detects the edge portion 40 side of the dividing line T5 as the edge portion region 71.

Fig. 25A is a diagram showing an example of a planar image illustrating an edge portion region 71 that has been detected by the detection program 123.

The extraction program 125 acquires a feature amount s from the second region 32 that has been cut out, that is, from the edge portion region 71. An extraction circuit can be constructed from the extraction program 125, the ROM 107, the RAM 108, the arithmetic circuit 102, and the bus 101.

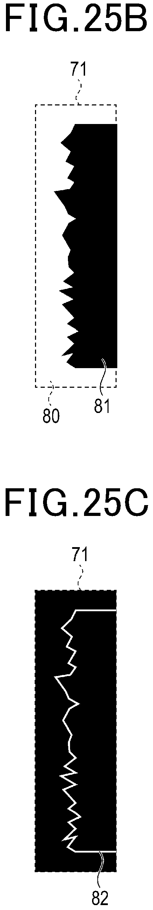

For example, the extraction program 125 is capable of acquiring, as the feature amount s, an area ratio of a light region and a dark region determined from grayscale binarization processing of the edge portion region 71. This will be described using Fig. 25B. Fig. 25B is a grayscale diagram obtained by performing grayscale binarization processing on the image shown in Fig. 25A. The light region 80 is shown in white, and the dark region 81 is shown in black. The extraction program 125 obtains the area ratio between the light region 80 and the dark region 81 as the feature amount s.

Furthermore, the extraction program 125 can also acquire the shape formed by the edge portion 40 as feature information. This will be described using Fig. 25C. Fig. 25C shows the edge portion 40 obtained from the image shown in Fig. 25A with a white line 82.

The extraction program 125 acquires the shape determined by the white line 82 as feature information. In addition, by acquiring an inflection point from the shape and performing fitting on the acquired inflection point, the coefficient information included in a specific function such as a linear function can also be acquired as the feature information.

Further, the extraction program 125 can also acquire the length of the white line 62 shown in Fig. 25C, that is, the line segment length of the edge portion 40, as feature information.

In addition, the extraction program 125 can also obtain the area ratio between the inside of the edge portion 40 and the outside of the edge portion 40 in the edge portion region 71 as the feature amount s. In the case of Fig. 25C, the inside of the edge portion 40 is the region surrounded by the white line 82 (which matches the dark region 81 in Fig. 25B), and the outside of the edge portion 40 is the other region (which matches the light region 80 in Fig. 25B).

Furthermore, the extraction program 125 can also acquire the feature amount s from the edge portion region 71 that has been partitioned into cells by the partitioning program 124.

Therefore, the partitioning performed by the partitioning program 124 will be described below.

The partitioning program 124 divides the edge portion region 71 into a plurality of cells having a shape and size determined in advance. A partitioning circuit can be constructed from the partitioning program 124, the ROM 107, the RAM 108, the arithmetic circuit 102, and the bus 101.

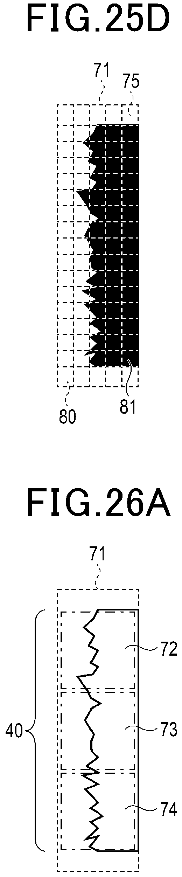

Fig. 25D is a plan view showing an example in which an edge portion region 51 has been divided into a plurality of cells by the partitioning program 124.

The plan view shown in Fig. 25D shows a state in which the edge portion region 71 shown in Fig. 25A is divided into 5 × 17 cells 55 as a result of partitioning into square cells of the same predetermined size.

The extraction program 125 calculates, for each of the plurality of cells 75 divided by the partitioning program 124 in this manner, the area ratio between the light region and the dark region determined by the grayscale binarization processing. In addition, the transition of the area ratio over the plurality of cells 75 can also be acquired as the feature amount s. Note that the grayscale binarization processing has already been described using Fig. 25B, so a duplicate description will be avoided here.

Fig. 26A is a plan view showing another example in which an edge portion region 71 has been divided into a plurality of cells by the partitioning program 124.

The plan view shown in Fig. 26A shows a state in which the edge portion region 71 shown in Fig. 25A is divided into 1 × 3 cells 72, 73 and 74 as a result of the partitioning program 124 dividing the edge portion region 71 into square cells of a predetermined size. The size and shape of cells 72, 73 and 74 may be the same or different, as long as they are predetermined.

The extraction program 125 can also acquire, for any cell (such as the cell 72) among the plurality of cells 72, 73 and 74 that have been divided in this manner by the partitioning program 124, an area ratio between the light region and the dark region determined by grayscale binarization processing, the shape of the edge portion 40, and the line segment length of the edge portion 40 as the feature amount s. Specific examples for each will be described below.

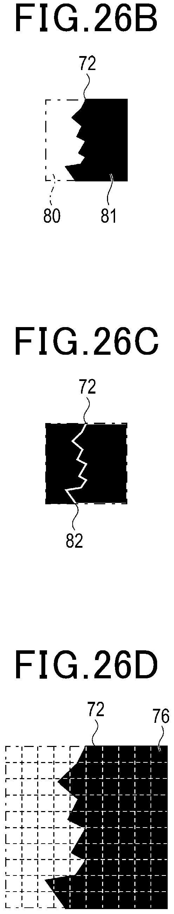

Fig. 26B is a diagram illustrating a light region 80 and a dark region 81 determined from grayscale binarization processing of the cell 72. The extraction program 125 can obtain the area ratio between the light region 80 and the dark region 81 as the feature amount s.

Fig. 26C is a diagram showing the edge portion 40 of the cell 72 with a white line 82. The extraction program 125 acquires the shape exhibited by the white line 82 as the feature amount s. Further, by acquiring an inflection point from the shape and performing fitting on the acquired inflection point, the coefficients included in a specific function such as a linear function can also be acquired as the feature amount s.

Also, the extraction program 125 can also acquire the area ratio between the inside of the edge portion 40 in the cell 72 (the right of the white line 82 in Fig. 26C) and the outside of the edge portion 40 (the left of the white line 82 in Fig. 26C) as the feature amount s.

The partitioning program 124 can also further divide any cell into a plurality of subcells of the same size according to a predetermined shape and size. This will be described using Fig. 26D.

Fig. 26D is a plan view showing an example in which the cell 72 has been divided into a plurality (10 × 10) of subcells 76 of the same size by the partitioning program 124.

Accordingly, the extraction program 125 can also acquire the feature amount s from the plurality of subcells 56 obtained by partitioning performed by the partitioning program 124. For example, as shown in Fig. 26D, the extraction program 125 acquires, for each of the plurality of subcells 76 divided by the partitioning program 124, the area ratio between the light region and the dark region determined by the grayscale binarization processing in the same manner as described above. In addition, the transition of the area ratio over the plurality of subcells 56 can also be acquired as the feature amount s.

In this way, by acquiring the feature amount s based on the subcells obtained by partitioning performed by the partitioning program 124, as described below, the security of the authentication verification device 100 can be further improved.

That is, in the examples shown in Figs. 25A to 25D, the entire edge portion region 71 is used to acquire the feature information. In this method, if it becomes known that the feature information is formed from the edge portion 40, there is a concern that the authenticity verification algorithm may be known. Therefore, as shown in Fig. 26A, the edge portion region 71 is divided into a plurality of cells (for example, the cells 72, 73 and 74) by the partitioning program 124, and by randomly selecting any one of these cells (for example, the cell 72) and extracting feature information from the selected cell (for example, the cell 72), the possibility that the authenticity verification algorithm will become known becomes lower, and the security can be enhanced.

Although Fig. 26A shows an example in which the edge portion region 71 is divided into the three cells 72, 73 and 74, the partitioning program 124 can also divide the edge portion region 71 into two or four or more cells. The partitioning program 124 can also randomly determine the shape, number, and size of the cells to be divided.

The extraction program 125 can also further select an arbitrary plurality of cells from among the cells divided by the partitioning program 124, acquire the feature amount s from each selected cell by any of the methods described above, and further calculate a difference, a remainder, a ratio, or the like between acquired feature amounts s, and use the calculation result as the feature amount s. In this way, the processing that acquires the feature amount s can be made more complicated, and the feature information used to acquire the feature amount s is less likely to become known, which makes it more difficult to counterfeit the sticker 22.

The extraction program 125 acquires the feature amount s from the feature information of the sticker 22 using various methods in this manner, and outputs the feature amount s. There may be a plurality of feature amounts s.

Therefore, the extraction program 125 can, for example, acquire each of the feature amounts s using all of the methods described above, and output all of the acquired feature amounts s as the feature amounts s. The detection program 123, the partitioning program 124, and the extraction program 125 may serve as the acquisition program. An acquisition circuit can be constructed from the acquisition program, the RAM 108, the arithmetic circuit 102, and the bus 101.

The acquisition program acquires the capture data of the trace recording layer enclosed by the sticker 22 in the second region 32 from the capture data of the second region 32 that has been cut out by the cutting program 121. In this case, the matching program 126 queries the feature information stored in a server (not shown) using the identifier of the certification code 21 read by the reading program 122 and acquires the feature data under set verification conditions, or decrypts the ciphertext of the certification code 21 using a public key, and performs authenticity verification of the display 30 by matching with the feature information acquired from the capture data of the trace recording layer acquired by the acquisition circuit.

The registration program 127 registers a pair consisting of the identifier k read by the reading program 122 and one or more feature amounts s output from the extraction program 125 in the database 111 as a verification record b (S705). The verification record b may be encrypted. Furthermore, the identifier k to be stored may be encrypted, and the feature amount s to be stored may be encrypted.

As a result, the attack resistance can be improved. It is desirable to use public key cryptography for encryption. In public key cryptography, the encryption described above and the decryption of the encrypted identifier k, feature amount s, and verification record b can be performed using a public key, and because the key used for encryption is not known at the time of decryption, it is highly secure and convenient.

Furthermore, both public key cryptography and common key cryptography can be used. RSA cryptography and lattice cryptography can be applied as the public key cryptography. AES, DES, and RC4 can be applied as the common key cryptography. The key length of the common key can be 40 bits or more and 256 bits or less, such as 56, 128, 192, or 256 bits.

The key length of the public key can be 1,024 bits or more and 2,048 bits or less. Alternatively, the key may be 1 Kbit or more and 1 Mbit or less. At this time, the encryption and the plurality of verification records b can be stored in the database 111 as a verification table. Furthermore, the plurality of verification records b may be stored as a distributed ledger in the cloud. In this case, the verification records b can be stored in a list in a blockchain. A registration circuit can be constructed from the registration program 127, the ROM 107, the RAM 108, the arithmetic circuit 102, and the bus 101.

In addition to the pair consisting of the identifier k and the feature amount s relating to the display 30, the verification record b may also include a production number, a lot number, a serial number, or the like that is assigned at the time of manufacturing the display 30. For example, a passport number in the case where the display 30 is a passport, or a driver's license number in the case of a driver's license, can be further associated and included as a uniquely assigned number.

Note that the encryption (S701) and output (S702) processing of the identifier by the reading program 122, and the processing of the detection of the second region (S703) and acquisition of the feature amount s (S704) that involves the detection program 123, the extraction program 125, and in some cases, the partitioning program 124, can be executed in parallel or executed in the reverse order. This will be described using Fig. 7B.

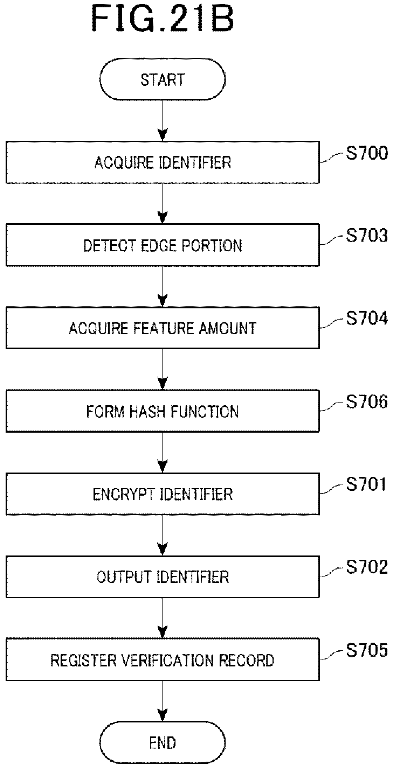

Fig. 21B is a flowchart showing another flow of registration processing of a verification record b.

Fig. 21B shows the flow of processing in which encryption (S701) and output (S702) of the identifier are performed after detecting the edge portion (S703) and acquiring the feature amount s (S704). The processing in each of these steps has already been described, and in order to avoid redundant description, step S706, which is not shown in Fig. 21A, will be described below.

In step S706, the feature amount s obtained in the process of performing step S704 can be processed by the reading program 122 to form a hash function to be used at the time of encryption. Then, in the subsequent step S701, the reading program 122 encrypts the identifier k using the hash function. As a result, when the identifier k of the certification code 21 in the database 111 is tampered with by replacement with the feature amount of another display, the encrypted identifier k becomes inconsistent and the tampering can be detected. In addition, the feature amount s may be encrypted using the identifier k as a key.

Here, RSA cryptography and lattice cryptography can be applied as the public key cryptography used in the encryption. AES, DES, and RC4 can be applied as the common key cryptography used for encryption. The key length of the common key can be 40 bits or more and 256 bits or less, such as 56, 128, 192, or 256 bits. The key length of the public key can be 1,024 bits or more and 2,048 bits or less. Alternatively, the key may be 1 Kbit or more and 1 Mbit or less.

Furthermore, it is also possible to generate a ciphertext that is encrypted from the feature amount s using the secret key of the public key cryptography, and form a certification code containing the ciphertext on the display. In this case, the feature amount s can be decrypted from the ciphertext of the certification code 21 using the public key of the public key cryptography, and the feature amount s and the feature amount s obtained from the feature information of the sticker 22 can be matched. Because the feature information includes information that occurs by chance as described above, it is not possible to form a sticker 22 having feature information that matches the certification code 21.

In addition, because the ciphertext of the feature amount s containing the certification code 21 cannot be generated without knowing the secret key, it is not possible to form a certification code 21 that matches the feature amount s obtained from the feature information of the sticker 22. The certification code 21 may include a ciphertext obtained by further encrypting a pair consisting of an identifier k and an encrypted feature amount s using the secret key. As a result, because a person who does not know the secret key cannot form the certification code 21 that includes the encrypted identifier k together with the feature amount s, tampering of the identifier k itself can be prevented. That is, the identifier k can be authenticated.

Here, RSA cryptography and lattice cryptography can be applied as the public key cryptography. The key length of the public key can be an encrypted 1,024 bits or more and 2,048 bits or less. Alternatively, the key may be 1 Kbit or more and 1 Mbit or less.

Furthermore, the NFT token described above is a unique and non-substitutable data unit recorded in a blockchain, and the identification information of the owner of the display 30 can be recorded as unique data of the NFT token. The matching program 126 is capable of certifying that the target display 30 is authentic by acquiring verification data corresponding to the identification information that is recorded in the NFT token from an authenticity certification database (not shown), referring to the identification information of the owner that is recorded in the NFT token, and receiving a verification result for the owner of the display 30.

As a result, ownership transfer data, an identifier of the owner, data of the certification code 21, and a hash of the data block recording previous ownership transfers, as well as the owner verification and authenticity verification held by the data block, can also be managed by a blockchain.

(Authenticity Verification)

Next, the authenticity verification of the display 30 performed by the authentication verification device 100 will be described.

When performing authenticity verification of the display 30, the authentication verification device 100 illuminates the display 30 with the light source 104 in order to acquire an image of the display 30 with the camera 103.

The illumination by the light source 104 can be performed using diffuse light epi-illumination, ring illumination, bright-field illumination, dark-field illumination, and the like, in the same manner as when registering the verification record b.

As a result, the camera 103 can perform capture using a variety of different capture conditions for a single display 30, and output the capture data a. Furthermore, especially for the second region 32, an image obtained by performing capture using transmitted light can also be output as the capture data a.

The capture data a output by the camera 103 is transmitted to the ROM 107 via the bus 101.

The cutting program 121 cuts out the image data of the first region 31 and the image data of the second region 32 from the capture data a that has been output to the ROM 107.

The reading program 122 reads the certification code 21 from the first region 31 that has been cut out by the cutting program 121. The certification code 21 is an identifier k such as text, a facial photograph, or handwriting that is uniquely assigned to each display 30 in advance, and as described above, can be read by optical character recognition software, automatic facial recognition software or an automatic facial recognition model, or handwriting identification software or a handwriting identification model.

As described with reference to Fig. 22 or Fig. 23, the detection program 123 detects the edge portion 40 of the second region 32 that has been cut out by the cutting program 121, and as described with reference to Fig. 24 and Fig. 25A, detects the edge portion region 71 containing the edge portion 40.

The extraction program 125 acquires the feature information as described above from the image data of the edge portion region 71 detected by the detection program 123 (for example, see Fig. 25A) or the cells divided by the partitioning program 124 (for example, see Fig. 26A), and outputs the feature information as the feature amount s.

The matching program 126 performs authenticity verification of the display 30 by comparing a pair consisting of the identifier k read from the certification code 21 by the reading program 122 and the feature amount s output from the extraction program 125 with the verification record b stored in the database 111. Furthermore, authenticity verification of the display 30 may be performed by encrypting the feature amount s with a private key and recording it on the display 30 as the certification code 21, and comparing the feature amount s obtained by decrypting the certification code 21 with a public key with the feature amount of the feature information of the sticker 22. This allows authenticity verification to be performed offline.

Here, RSA cryptography and lattice cryptography can be applied as the public key cryptography. The key length of the public key can be 1,024 bits or more and 2,048 bits or less. Alternatively, the key may be 1 Kbit or more and 1 Mbit or less. A matching circuit can be constructed from the matching program 126, the ROM 107, the RAM, the arithmetic circuit, and the bus.

Prior to the authenticity verification, the matching program 126 searches a verification table in the database 111 for a verification record b that includes an identifier k that matches the identifier k read from the certification code 21 by the reading program 122. Then, when a verification record b including an identifier k that matches the identifier k read by the reading program 122 is retrieved, it is confirmed whether any one of the one or more feature amounts s included in the retrieved verification record b matches the feature amounts s output from the extraction program 125.

Whether a match exists can be determined such that a match occurs when a degree of similarity between the feature amount s output from the extraction program 125 and the one or more feature amounts s included in the verification record b is a certain value or higher, and a match does not occur when the value is less than the certain value. The degree of similarity can be a cosine degree of similarity. Furthermore, the degree of similarity can be calculated from the distance between feature vectors obtained by projecting the feature amounts onto a feature space. In this case, the degree of similarity can be calculated as 1 minus the distance between the feature vectors.

When any one of the one or more of feature amounts included in the verification record b matches the feature amount s output from the extraction program 125, the matching program 126 determines that the display 30 is authentic.

On the other hand, when a verification record b including an identifier k that matches the identifier k read by the reading program 122 is not retrieved from the database 111, that is, when a verification record b that matches the identifier k read by the reading program 122 is not registered in the database 111, the matching program 126 determines that the display 30 is not authentic.

Furthermore, even when a verification record b that matches the identifier k is retrieved from the database 111, if any one of the one or more feature amounts included in the retrieved verification record b does not match the feature amount s output from the extraction program 125, the matching program 126 determines that the display 30 is not authentic.

Next, an operation example at the time authenticity verification is performed by the authentication verification device to which the method for verifying authenticity according to the second embodiment of the present invention configured as described above is applied will be described.

(Example of Operation During Authenticity Verification)

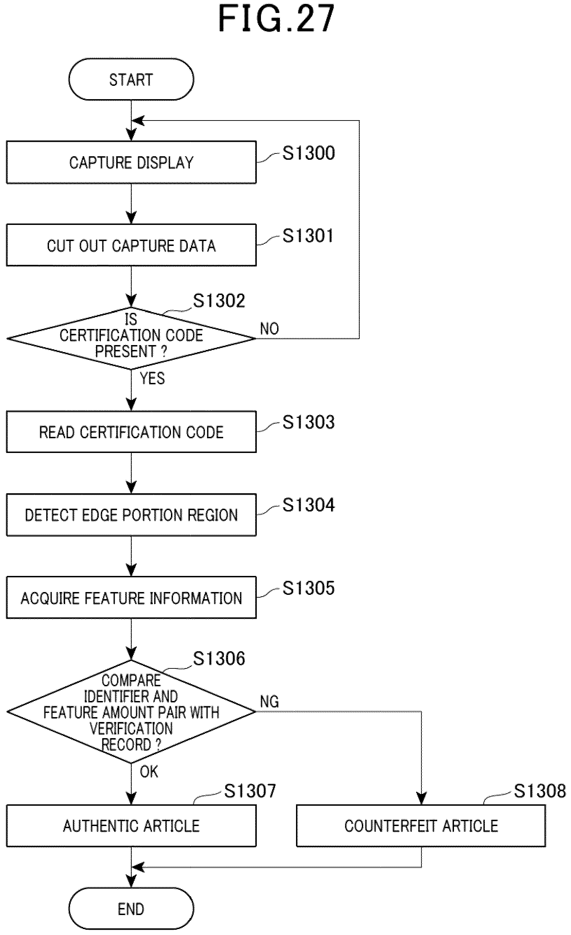

Fig. 27 is a flowchart showing an operation example when authenticity verification is performed by an authentication verification device to which a method for verifying authenticity according to the second embodiment of the present invention is applied.

When authenticity verification of the display 30 is performed, in the authentication verification device 100, the display 30 is captured by the camera 103, and the capture data a is output (S1300).

In the display 30, the position information where the first region 31 and the second region 32 are formed is determined in advance. Therefore, the image data of the first region 31 and the image data of the second region 32 are cut out from the capture data a by the cutting program 121 according to the position information (S1301).

Then, the reading program 122 attempts to read the certification code 21 from the first region 31 that has been cut out. When a readable certification code 21 is present in the first region 31 (S1302:Yes), the certification code 21 is read from the first region 31 by the reading program 122 (S1303).

The certification code 21 that has been read is handled as the identifier k of the display 10. If the certification code 21 read at this time has a check digit, the check digit is used to check whether the reading was performed correctly. Furthermore, if there is an error correction code, and an error occurs due to the code, an attempt is made to correct the error.

On the other hand, if there is no readable certification code 21 in the first region 31 (S1302:No), the processing returns to step S1300, and the display 30 is captured again by the camera 103.

After step S1303, the detection program 123 detects the edge portion 40 in the second region 32, and further detects the edge portion region 71 including the edge portion 40 (S1304).

Next, feature information is acquired from the edge portion region 71 by the extraction program 125 (S1305). In this case, the edge portion region 71 is divided into cells by the partitioning program 124, and further divided into subcells in some cases, and the extraction program 125 can also acquire feature information from the cells or subcells. The acquired feature information is treated as the feature amount s of the display 30.

Next, a pair consisting of the identifier k obtained in step S1303 and the feature amount s obtained in step S1305 is compared with the verification record b that is stored in the database 111 by the matching program 126 (S1306).

For this purpose, the matching program 126 first retrieves a verification record b that includes an identifier k that matches the identifier k obtained in step S1303 from the database 111. Then, when a verification record b including an identifier k that matches the identifier k read by the reading program 122 is retrieved, the matching program 126 further confirms whether any one of the one or more feature amounts s included in the verification record b matches the feature amount s output from the extraction program 125.

When any one of the one or more of feature amounts included in the verification record b matches the feature amount s output from the extraction program 125 (S 1306:OK), the matching program 126 determines that the display 30 is authentic (S1307).

On the other hand, when a verification record b including an identifier k that matches the identifier k read by the reading program 122 is not retrieved from the database 111, that is, when a verification record b that matches the identifier k read by the reading program 122 is not registered in the database 111 (S1306:NG), the matching program 126 determines that the display 30 is not authentic (S1308).

Furthermore, even when a verification record b that matches the identifier k is retrieved from the database 111, if any one of the one or more feature amounts included in the retrieved verification record b does not match the feature amount s output from the extraction program 125 (S1306:NG), the matching program 126 determines that the display 30 is not authentic, for example a counterfeit article (S1308).

Note that Fig. 27 shows an example in which the processing for acquiring the feature information (S1304 and S1305) is performed after the processing for reading the certification code 21 (S1302 and S1303), but it is also possible to perform the processing for acquiring the certification code 21 after performing the processing for reading the feature information, and further, to perform the processing for reading the certification code 21 and the processing for acquiring the feature information in parallel.

When there is no certification code 21 (S1302:No), the processing returns to S1300 and capture of the display 30 is performed again, but a limit to the number of times the processing returns to S1300 may or may not be provided.

As described above, the authentication verification device 100 to which the method for verifying authenticity according to the second embodiment of the present invention has been applied uses, as the feature amount s, information that cannot be reproduced, such as the irregular uneven structure on the edge portion of a foil that is formed by chance when a portion of the hologram foil is removed by a laser light source, the shading of the removed area including smudges and the like, and the shape of the edge portion. As a result, because the feature amount s can be acquired by only performing image processing of the capture data a, the authentication verification device 100 is capable of performing highly reliable authenticity verification of the display 30 by using the capture function and the information processing function.

In this way, because the processing according to the authenticity verification is completed by image processing, the authentication verification device 100 to which the method for verifying authenticity according to the second embodiment of the present invention has been applied does not have to include special equipment for authenticity verification such as an irradiation device that irradiates light of a specific wavelength. Furthermore, even when reverse engineered, the principle of the authenticity verification will not be known, making counterfeiting very difficult.

Since the certification code of the authentication verification device 100 is matched with the feature amount of an optical characteristic distribution that occurs by chance when manufacturing the sticker, and because a discrepancy occurs between the certification code and the sticker when the certification code is formed on a display having a different attached sticker, tampering and counterfeiting can be made difficult. Therefore, it is possible to provide a high level of security.

Next, a modification of the authentication verification device 100 will be described.

(Modification of Second Embodiment)

In the second embodiment described above, the verification record b of a single display 30 includes only one identifier k, but includes one or more feature amounts s acquired under different conditions.

At the time of authenticity verification, authenticity verification of the display 30 is performed by confirming whether any one of the one or more feature amounts s match the feature amount s output from the extraction program 125.

In such a case, because there is no need to include the capture data in the verification record b, the capacity of the database 111 can be kept low. However, at the time of authenticity verification, because it is necessary to acquire the feature amount s under the conditions used when acquiring any one of the feature amounts s included in verification record b, it is necessary to know the conditions used at the time of acquiring any one of the feature amounts s included in the verification record b in advance.

In contrast, in the present modification, the verification record b does not include the feature amounts s at the time of registration, but instead includes, for example, image data of the edge portion region 71 such as that shown in Fig. 25A.

Then, at the time of authenticity verification, the matching program 126 searches the database 111 for a verification record b that includes an identifier k that matches the identifier k read by the reading program 122. Further, when a matching verification record b exists, the partitioning program 124 divides the image data of the edge portion region 71 included in the verification record b into cells under random conditions, or further divides the cells into subcells, and the extraction program 125 uses the method described above to acquire the feature amount s from an arbitrary cell or subcell.

In addition, the partitioning program 124 also divides the image data of the edge portion region 71 detected from the display 30 for authenticity verification under the same conditions, and the extraction program 125 uses the same method to acquire the feature amount s.

Finally, the matching program 126 compares both of the feature amounts s, and when there is a match, determines that the display 30 is authentic.

In this way, by using the feature amount s acquired under random conditions and methods in the authenticity verification, even if the authentication verification device 100 is reverse engineered, there is no concern that the authenticity verification algorithm will be known, and tampering or counterfeiting with respect to the authentication verification device 100 becomes very difficult.

[Third Embodiment]

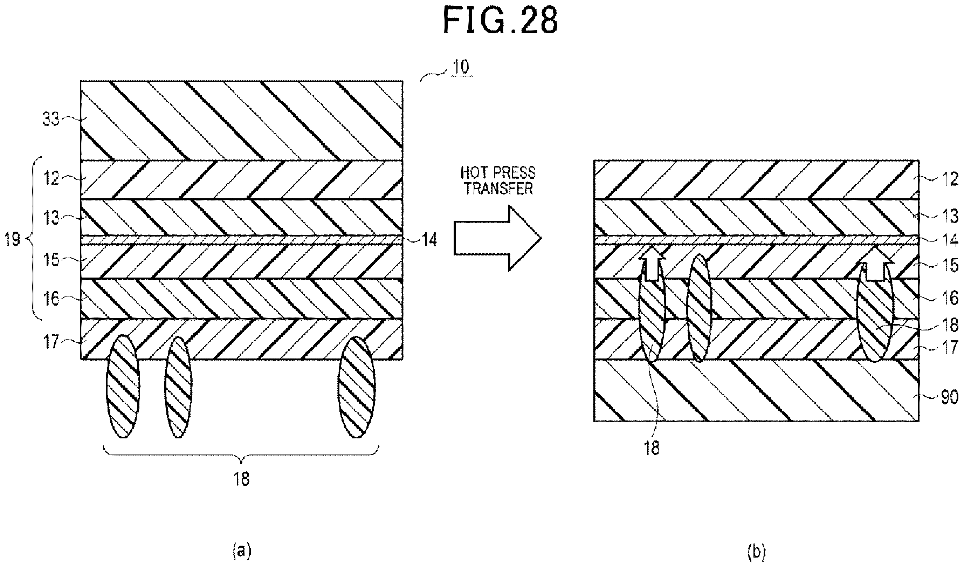

Fig. 28 is a side cross-sectional view showing a laminated structure of a transfer foil according to a third embodiment of the present invention.

The description of the laminated structure of the transfer foil 10 before hot press transfer shown in Fig. 28(a) will avoid redundant explanation with respect to those parts that are the same as the transfer foil 1 described using Fig. 39.

The substrate 33 can be composed of a plastic film. The plastic material can be a single unit of PET, polypropylene, or polyethylene film, or a laminate thereof. The substrate 33 may also be made of a film in which such a plastic is coated with a resin.

The surface protective layer 12 is formed by coating the substrate 33. The coating may be applied by gravure coating, microgravure coating, or die coating. The thickness of the surface protective layer 12 formed by such a coating can be, for example, 0.2 to 1.0 $\mu$m.

The optical formation layer 13 can be composed of a single layer or a multilayer resin layer having a thickness of 0.5 $\mu$m to 1.5 $\mu$m. The resin layer can contain inorganic particles, organic particles, or both. As the resin, for example, a thermoplastic resin, a thermosetting resin, or an ultraviolet light or electron beam curable resin can be used.

As the thermoplastic resin, for example, an acrylic resin, an epoxy resin, a cellulose resin or a vinyl resin can be used.

As the thermosetting resin, for example, a urethane resin, a melamine resin, or a phenol resin obtained by adding polyisocyanate as a crosslinking agent to a polyol having a reactive hydroxyl group, such as an acrylic polyol or a polyester polyol, can be used.

As the ultraviolet light or electron beam curable resin, for example, an epoxy acrylic resin, an epoxy methacrylic resin, a urethane acrylate resin, or a urethane methacrylate resin can be used.

As a result of the surface of the optical formation layer 13 having an uneven shape, the transfer foil 10 can be provided with optical properties such as diffraction, light reflection suppression, isotropic or anisotropic light scattering, refraction, polarized and wavelength-selective reflection, transmission, and light reflection suppression. Consequently, an optical effect such as an iridescent expression, a dark color expression, a white color expression, a lens effect, or polarization selectivity can be achieved.

Furthermore, a desired optical effect can be obtained by combining a plurality of optical effects. In addition, the combined optical effects, which are obtained by arranging regions having the respective optical effects such that they are adjacent, close together, at regular intervals, alternating, enclosed, or the like, not only create an aesthetic appearance but also provide an effect of enabling counterfeiting to be detected visually or by machine or the like due to a difference in appearance.

The reflective layer 14 allows the optical properties generated in the optical formation layer 13 to be easily observed. The reflective layer 14 may display a structural color. Structural colors include changing colors, iridescent colors, and the like. Therefore, the reflective layer 14 is formed of a single metal or silicon, an alloy, or a compound thereof, and has a thickness of 0.02 to 0.06 $\mu$m. Within this range, the optical formation layer 13 also can have good following performance with respect to the uneven shape of the surface and have sufficient visible light reflectivity.

Examples of metals or silicon constituting the single metals, alloys, or compounds forming the reflective layer 14 are silica, aluminum, tin, chromium, nickel, copper, gold, or a combination thereof. The purity of these metals may be 99% or higher. The purity may be 99.99% (4 N) or higher. By setting the purity to 4N or higher, defects in the reflective layer 14 can be easily reduced. The reflective layer 14 can be formed on a part or the entire surface of the optical formation layer 13.

The lower protective layer 15, which functions as a mask layer, has a thickness of, for example, 0.8 to 1.5 $\mu$m, and can be patterned by printing. When the lower protective layer 15 is partially formed by printing, the parts of the reflective layer 14 where the lower protective layer 15 is not present can also be removed by etching (demetallization).

As a result, the outline of the reflective layer 14 can be patterned. Because the outline pattern of the reflective layer 14 can be easily detected by a camera, the outline pattern can be used to form an alignment mark that enables distortions to be detected when performing capture with a camera, to form a position detecting pattern, or to record a one-dimensional code or a two-dimensional code. A one-dimensional code can be a character string or a barcode. Two-dimensional codes include QR codes (registered trademark). Moreover, these codes may be a ciphertext. The ciphertext may be a ciphertext obtained by encrypting individual information.

Furthermore, a ciphertext obtained by encrypting a hash value of a code recorded in the outline pattern and the individual information may be further recorded as cipher information. In addition, the outline formed by etching has fluctuations formed at the time of processing. The outline fluctuations of the reflective layer may be used as a feature amount that occurs by chance.

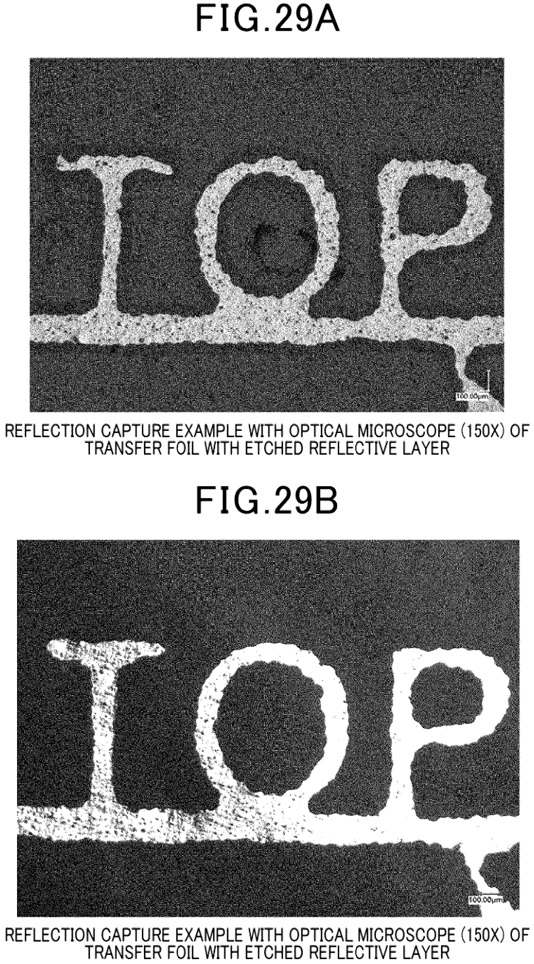

Also, the outline of the mask layer also has fluctuations formed at the time of processing. The outline fluctuations of the mask layer may be used as a feature amount that occurs by chance. Moreover, an offset occurs between the outline of the mask layer and the outline of the reflective layer. The offset can be used as a feature amount that occurs by chance. Figs. 29A and 29B are images of the outline fluctuations that have been captured by an optical microscope. The etching and mask layer fluctuations are present to an extent that cannot be observed with the naked eye.

The transfer foil can be etched (demetallized) by immersion in sodium hydroxide (concentration 0.5% to 2%) for 20 seconds to 2 minutes. Furthermore, a lift-off method may be used in which the reflective layer is formed after forming the mask layer, and the reflective layer on the mask layer is removed.

The cushion layer 16 can be formed of an acid-modified polyolefin resin. The acid-modified polyolefin resin may be a copolymer resin of ethylene and an acidic component. The copolymer of ethylene and an acidic component can be an ethylene (meth)acrylic acid copolymer resin (EMAA), an ethylene-vinyl acetate copolymer resin, an ethylene (meth)acrylate copolymer resin, or the like. A copolymer resin of ethylene and an acidic component tends to have appropriate flexibility and appropriate adhesion with adjacent layers.

As a result of acid modification, the acid-modified polyolefin resin can obtain good adhesion with the adjacent reflective layer, lacquer layer, and coating layer. This is because the acid-modified polyolefin bonds with the organic silane compounds and isocyanates of the adjacent reflective layer, lacquer layers, and coating layer.

Among acid-modified polyolefins, blocking does not easily occur in an ethylene (meth)acrylic acid copolymer resin (EMAA). The soft resin in the cushion layer 16 can have a softening temperature that is equal to or lower than the transfer temperature during transfer. Furthermore, the softening temperature of the resin of the cushion layer 16 can be in the range of 60°C or more and 110°C or less.

The adhesive layer 17 can be formed, for example, by applying a coating liquid containing a resin component. The thickness may be, for example, 3 to 6 $\mu$m. The coating liquid may be a liquid in which the solid content is completely dissolved, or may be a liquid in which the solid content is dispersed, such as a dispersion or emulsion. Application can be performed by roll coating, reverse roll coating, gravure coating, reverse gravure coating, bar coating, rod coating, lip coating, die coating, or the like. Furthermore, printing may be applied to the coating. The coating liquid is preferably dried at a temperature equal to or lower than the melting point of the solid content.

The adhesive layer 17 contains a filler 18. The filler 18 can be monodisperse spherical silica particles.

The filler 18 is composed of a plurality of types of fillers having different particle sizes. As the plurality of types of fillers having different particle sizes, for example, it is preferable to use three types of fillers having different particle sizes, such as a large diameter filler, a medium diameter filler, and a small diameter filler.

The filler 18 may have a particle size of, for example, 2 to 15 $\mu$m. That is, even the large diameter filler has a particle size of 15 $\mu$m or less, and the small diameter filler has a particle size of 2 $\mu$m or more.

The large diameter filler can also contribute to preventing the blocking described above. Therefore, although it is sufficient to add only a large diameter filler to the adhesive layer 17 if the purpose is only to prevent blocking, it is not possible to form random pinholes without affecting the appearance quality of the transfer article 90.

Therefore, in the present embodiment, in order to form random pinholes but not affect the appearance quality of the transfer article 90, a plurality of types of fillers 18 having different particle sizes are added to the adhesive 17, including not just a large diameter filler, but a medium diameter filler and also a small diameter filler. Note that in Fig. 28, the large diameter filler, the medium diameter filler, and the small diameter filler are collectively shown as the filler 18 in order to avoid complication.

As mentioned above, because the thickness of the adhesive layer 17 is 3 to 6 $\mu$m, the large diameter filler is not completely enclosed by the adhesive layer 17, and is contained in the adhesive layer 17 in a state where a portion protrudes from the adhesive layer 17.

The concentration of the filler 18 in the adhesive layer 17, that is, the total concentration of the large diameter filler, the medium diameter filler, and the small diameter filler in the adhesive layer 17 may be, for example, 3 to 10% by weight. The large diameter filler, the medium diameter filler, and the small diameter filler may be appropriately patterned and included in the adhesive layer 17.

When the transfer foil 10 having such a configuration is hot press transferred onto the transfer article 90, as shown in Fig. 28(b), the filler 18 pushes up the reflective layer 14, and random pinholes are formed in the reflective layer 14.

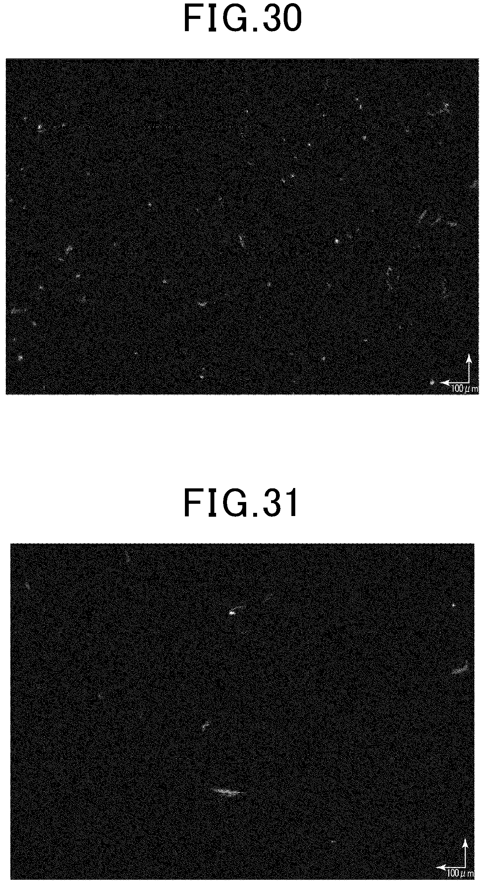

Fig. 30 is an image of a reflective layer 14 obtained when a transfer foil 10 containing a filler 18 in the adhesive layer 17 is subjected to hot press transfer.

As indicated by the white dots in the image shown in Fig. 30, the pinholes are randomly formed. The pinholes are very small, with an outer diameter of, for example, 10 to 30 μm. Therefore, they cannot be recognized with the naked eye and the transfer article 90 appears uniform, so there is no problem in terms of the appearance quality.

In addition, because the position, shape, size, number, and total area of the pinholes that are generated are determined completely randomly and cannot be reproduced, it becomes feature information that is unique for each transfer article 30.

On the other hand, Fig. 31 is an image of a reflective layer 14 obtained when a transfer foil 10 not containing a filler 18 in the adhesive layer 17 is subjected to hot press transfer.

As shown in Fig. 31, when a transfer foil 10 in which the adhesive layer 17 does not contain the filler 18 is subjected to hot press transfer, although some pinholes are formed, only a very small number of pinholes are formed compared to the image in Fig. 30, and they cannot be used for individual authentication.

As described above, in the transfer foil 10 according to the third embodiment, it is possible to form random pinholes in the reflective layer 14 at the time of hot press transfer while performing a control to not affect the appearance quality of the transfer article 90. Further, because the feature information of the pinholes is unique to each transfer article 90 and cannot be reproduced, it can be used for individual authentication of each transfer article 90.

Next, an individual authentication method according to the third embodiment will be described.

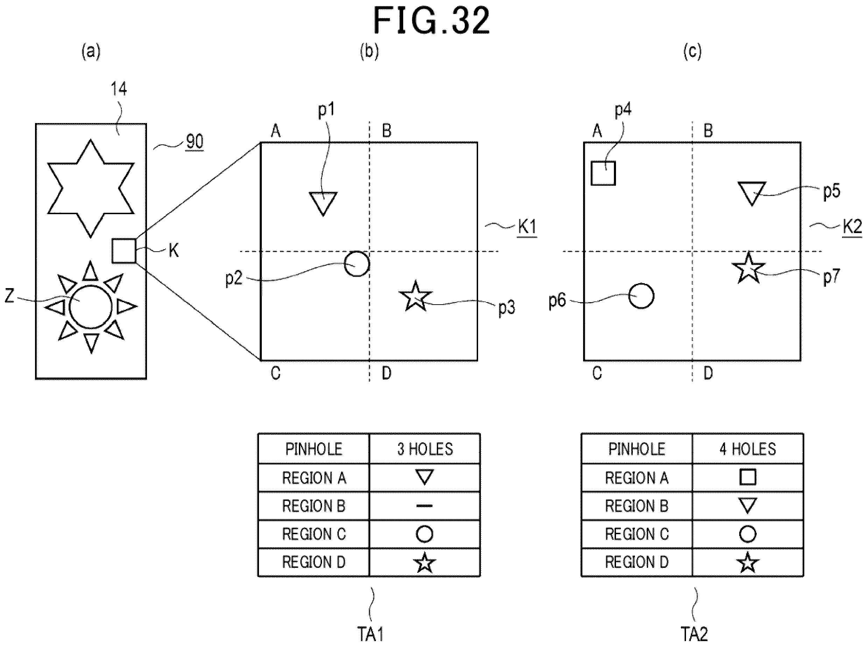

Fig. 32 is a conceptual diagram for describing an individual authentication method according to the third embodiment.

Fig. 32(a) is a plan view schematically showing a transfer article 30 to which the reflective layer 14 of the transfer foil 10 according to the third embodiment has been transferred.

When individual authentication of the transfer article 90 is performed, a specified region K for use in the detection of the feature information is provided in a predetermined location of the reflective layer 14 excluding a demetallized portion Z in which a desired pattern has been formed. This location is the same for all transfer articles 90. Although only one specified region K is shown in Fig. 32(a), a plurality of specified regions K may be provided.

Figs. 32(b) and 32(c) are enlarged views of a specified region K. However, Fig. 32(b) is an enlarged view of a specified region K1 of a first transfer article 90, and Fig. 32(c) is an enlarged view of a specified region K2 of a second transfer article 90 that is separate to the first transfer article 90, and both of the specified regions K are shown equally divided into the four regions A, B, C and D. Furthermore, pinholes p (p1 to p7) formed inside the specified region K are also shown.

According to the enlarged view of the specified region K1 shown in Fig. 32(b), the first transfer article 90 is formed having an inverted triangular pinhole p1 in the region A, a circular pinhole p2 in the region C, and a star-shaped pinhole p3 in the region D.

Table TA1 shown below the enlarged view of the specified region K1 in Fig. 32(b) is an example of a table that summarizes the feature information of the pinholes p (p1 to p3) formed in the specified region K1 so that it can be easily visually grasped.

Table TA1 shows the number of pinholes (three) present inside the specified region K1 in the first row, and the second and subsequent rows indicate, for each of the regions A to D, a symbol that represents the shape of the pinhole p that is present. As a result of such a presentation, it can be visually grasped that the region A has one inverted triangular pinhole p1, the region B has no pinholes p, the region C has one circular pinhole p2, and the region D has one star-shaped pinhole p3.

Note that a plurality of pinholes p may be formed in one region. For example, in the region A, a circular pinhole can sometimes be formed in addition to the inverted triangular pinhole p1. In such a case, in the listing for the region A in the second row of table TA1, the symbol ○ representing a circular pinhole is added to the symbol ∇ representing the inverted triangular pinhole p1, and is denoted as ∇○.

According to the enlarged view of the specified region K2 shown in Fig. 32(c), the second transfer article 90 is formed having a square pinhole p4 in the region A, an inverted triangular pinhole p5 in the region B, a circular pinhole p6 in the region C, and a star-shaped pinhole p7 in the region D.

Table TA2 shown below the enlarged view of the specified region K2 in Fig. 32(c), like table TA1, is an example of a table that summarizes the feature information of the pinholes p (p4 to p7) formed in the specified region K2 so that it can be easily visually grasped.

As a result of managing such tables TA as feature information in association with the corresponding transfer article 90, it becomes possible to easily perform individual authentication of the transfer article 90.

Of course, if the feature information is extremely similar, strict comparison using image processing or the like is required. However, for transfer articles with clearly different feature information, it is convenient to be able to recognize the differences through such simple confirmation without the need for strict individual authentication.

As described above, according to the present embodiment, it is possible to provide an individual authentication method that uses the characteristics of the pinholes formed in a transfer foil in individual authentication of a transfer article. Furthermore, it is possible to provide a transfer foil in which it is possible to form pinholes that can be used in individual authentication while performing a control that prevents the appearance quality of the transfer article from being affected. In addition, it is possible to provide a transfer article formed by transferring such a transfer foil.

Example of Third Embodiment

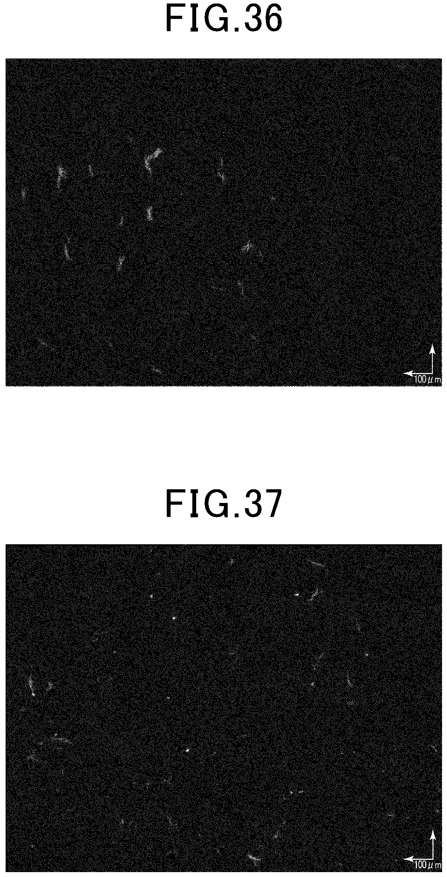

An example of the third embodiment will now be described.
Here, a transfer experiment was actually performed using the transfer foil 10, and the pinholes p formed in the reflective layer 14 were observed.
As the adhesive layer 17 of the transfer foil 10 used in the transfer experiments, an acrylic material having a thickness of 4 μm was used, and the cushion layer 16 was made of crystalline polyester having a thickness of 0.7 to 0.8 μm.
The transfer was performed using a 26 mm × 18 mm plate and a transfer foil 10 with a size of 26 mm × 12 mm under the conditions of a temperature of 115°C, a pressure of 2 t, and a time of 0 seconds.

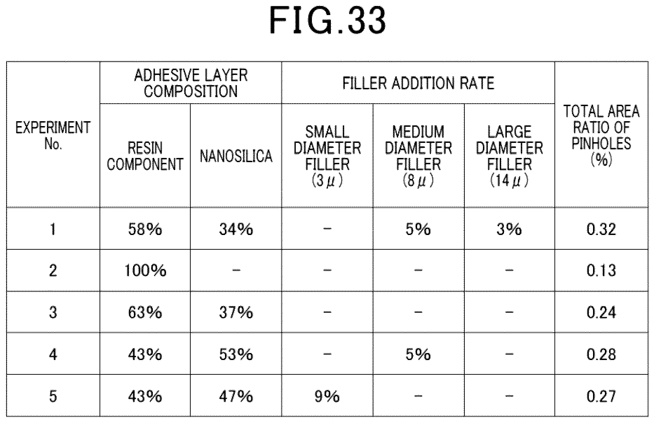

Fig. 33 is a table summarizing the conditions and results of transfer experiments performed in the examples of the third embodiment.
As indicated by Experiments 1 to 5 in Fig. 33, the transfer experiments were performed for five cases using different compositions of the adhesive layer 17 (resin content/nanosilica) and addition conditions of the filler 18. Three types of the filler 18 were prepared, namely a small diameter filler with an outer diameter of 3 μm, a medium diameter filler with an outer diameter of 8 μm, and a large diameter filler with an outer diameter of 14 μm, and the addition ratio (weight ratio with respect to the adhesive layer 17) of each filler was changed for each experiment.

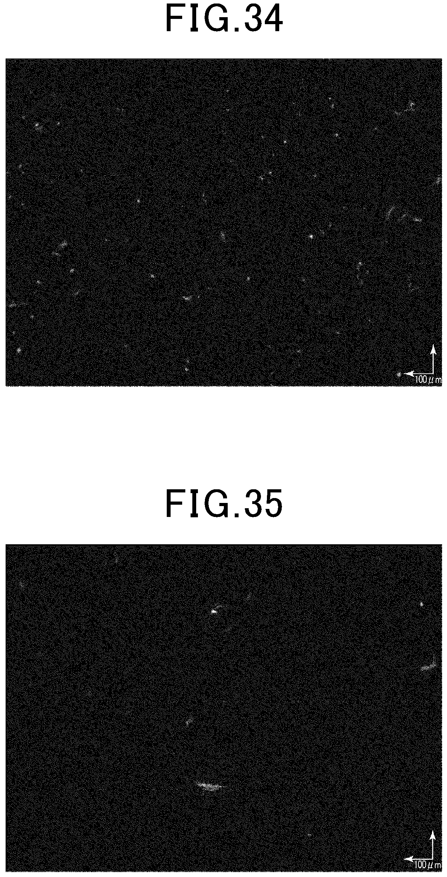

Figs. 34 to 38 are enlarged images showing the pinholes formed in the reflective layer 14 as a result of transfer under the conditions of Experiments 1 to 5. The scale is 1/100.
In the enlarged images shown in Figs. 34 to 38, the white dots are pinholes.
As shown in Figs. 35 and 36, because no filler 18 was added to the adhesive layer 17 in Experiments 2 and 3, it was confirmed that not many pinholes were formed. As shown in Fig. 33, in Experiment 2, the total area of the pinholes formed was 0.13% of the total area of the image, and in Experiment 3, although slightly higher than the case of Experiment 2, the total area was 0.24% of the total area of the image.
On the other hand, as shown in Figs. 34, 37, and 38, in Experiments 1, 4, and 5 in which the filler 18 was added to the adhesive layer 17, it was confirmed that a larger number of pinholes were formed than in Figs. 35 and 36. As shown in Fig. 33, in Experiment 1, the total area of the pinholes formed was 0.32% of the total area of the image, in Experiment 4, the total area was 0.28% of the total area of the image, and in Experiment 5, the total area was 0.27% of the total area of the image, which were each higher than in Experiments 2 and 3 in which the filler 18 was not added, and it was confirmed that a larger number of pinholes can be formed.
In addition, although these pinholes can be observed in the enlarged images such as Figs. 34, 37 and 38, they cannot be observed with the naked eye, and it was confirmed that the appearance quality of the reflective layer 14 was not reduced.
Further, as can be seen in Figs. 34, 37, and 38, it was confirmed that, because the pinholes are randomly formed, the feature information of the pinholes can be used in individual authentication of the transfer article 90.
While the best mode for carrying out the present invention has been described with reference to the accompanying drawings, the present invention is not limited to such a configuration. It is understood that various changes and modifications can be made by those skilled in the art within the scope of the technical idea disclosed in the appended claims, and these changes and modifications also belong to the technical scope of the present invention.

[Reference Signs List]

| | |
|---|---|
| 1, 10 | Transfer foil |
| 1 1 | Support body |
| 12 | Surface protective layer |
| 13 | Optical formation layer |
| 14 | Reflective layer |
| 15 | Lower protective layer |
| 16 | Cushion layer |
| 17 | Adhesive layer |
| 18 | Filler |
| 19 | Functional layer |
| 20 | Transfer material layer |
| 21 | Certification code |
| 22 | Sticker |

| 30 | Display (personal authentication medium) |
|---|---|
| 31 | First region |
| 32 | Second region |
| 33 | Substrate |
| 39 | Non-edge portion |
| 40, 40a, 40b | Edge portion |
| 41 | White core substrate |
| 42 | Laser colorable substrate |
| 43 | Transparent substrate |
| 50 | Hot stamping machine |
| 52 | Square tube mold plate |
| 54 | Rounded rectangular mold plate |
| 60 | Burr detection device |
| 62 | Burr detection device |
| 62a | Detection unit |
| 62b | Light-emitting unit |
| 70 | Enclosing region |
| 71 | Edge portion region |
| 72, 73, 74, 75 | Cell |
| 76 | Subcell |
| 80 | Light region |
| 81 | Dark region |
| 82 | White line |
| 90 | Transfer article |
| 100, 100A, 100B, 100C | Authentication verification device |
| 101 | Bus |
| 102 | Arithmetic circuit |
| 103 | Camera |
| 104 | Light source |
| 105 | Power source |
| 106 | Communication interface |
| 107 | ROM |
| 108 | RAM |
| 109 | Input device |
| 110 | Storage device |
| 101 | Database |
| 121 | Cutting program |
| 122 | Reading program |
| 123 | Detection program |
| 124 | Partitioning program |
| 125 | Extraction program |
| 126 | Matching program |
| 127 | Registration program |
| 130 | Housing |
| 131 | Slit |
| 200 | Smartphone |
| 201 | Display |
| 300 | Communication network |
| A, B, C, D | Region |
| F | Facial photograph |
| J1 | First individual information |
| J2 | Second individual information |
| K | Specified region |
| K1 | Enlarged view of specified region |
| K2 | Enlarged view of specified region |
| L | Inspection light |
| M | Text |
| S | Transfer region |

| T | Transmitted light |
| T1, T2, T3 | Dotted line |
| T4 | Capture data |
| T5 | Dividing line |
| TA1 | Table |
| TA2 | Table |
| W | Burr |
| Z | Demetallized portion |
| a | Capture data |
| b | Verification record |
| k | Identifier |
| p | Pinhole |
| s | Feature amount |

**Claims**

1. A transfer foil formed by laminating a transfer material layer and a support body for releasably supporting the transfer material layer, wherein

   a first release strength at a first temperature when the transfer material layer is released from the support body is 0.1 gf/mm or more and 0.3 gf/mm or less, and
   a difference between the first release strength and a second release strength at a second temperature that is higher than the first temperature and lower than a transfer temperature when the transfer material layer is released from the support body is 0.05 gf/mm or more and 0.2 gf/mm or less.

2. The transfer foil according to claim 1, wherein
   the transfer material layer is composed of a multilayer structure in which a surface protective layer, an optical formation layer, a reflective layer, a lower protective layer, a cushion layer, and an adhesive layer are laminated from the support body side.

3. The transfer foil according to claim 2, wherein
   the optical formation layer is a urethane resin having a thickness of 0.5 $\mu$m or more and 2.0 $\mu$m or less.

4. The transfer foil according to claim 2 or 3, wherein
   the reflective layer has a thickness of 30 nm or more and 200 nm or less.

5. The transfer foil according to claim 1, wherein
   a breaking elongation at room temperature is 1% or more and 30% or less.

6. The transfer foil according to claim 1, wherein
   the first temperature is room temperature.

7. The transfer foil according to claim 1, wherein
   the second temperature is 70°C.

8. A display comprising a first region containing individual information, and a second region in which unique information is recorded as a unique outer shape of an individual authentication sticker, wherein
   the individual information and the unique outer shape are used for individually verifying authenticity of the display.

9. The display according to claim 8, wherein
   the individual authentication sticker is disposed at an interface of a substrate forming the display.

10. The display according to claim 9, wherein
    the individual authentication sticker is embedded inside the substrate.

11. The display according to claim 9, wherein
    the individual information is an identification number of the substrate.

**12.** The display according to claim 8, wherein

the individual authentication sticker, after being transferred onto the transfer foil according to claim 1, is formed on the transfer material layer that has been released from the support body, and
at least a portion of an outline is formed by burrs remaining on the transfer material layer at the time of the release.

**13.** The display according to claim 8, wherein
at least part of the first region and the second region are disposed so as to overlap each other.

**14.** A method for verifying authenticity of the display according to claim 8, comprising:

registering an association between the individual information and the unique information in advance in a database;
acquiring the individual information and the unique information from the display; and
determining that the display is authentic when an association between the acquired individual information and unique information matches an association registered in the database, and determining that the display is not authentic when there is no match.

**15.** An authentication verification device that verifies authenticity of a display, wherein

the display includes a first region and a second region,
a certification code is formed in the first region, and a sticker is attached to the second region,
the certification code includes an identifier,
a feature amount obtained from feature information of the sticker can be referenced from the certification code, and
the authentication verification device comprises
a camera that captures the display,
a cutting circuit that cuts out image data of the first region and image data of the second region from capture data of the captured display,
a reading circuit that reads the certification code from the first region that has been cut out,
an acquisition circuit that acquires the feature information from the second region that has been cut out, and
a matching circuit that performs authenticity verification of a display, being a target of the authenticity verification, by acquiring a feature amount from the certification code that has been read by the reading circuit, and matching the acquired feature amount and a feature amount generated from the feature information that has been acquired by the acquisition circuit.

**16.** The authentication verification device according to claim 15, further comprising
a detection circuit that detects an edge portion of the second region that has been cut out, and extracts an edge portion region containing the edge portion.

**17.** The authentication verification device according to claim 16, wherein
the acquisition circuit acquires, as the feature information, an area ratio of a light region and a dark region determined from grayscale binarization processing of the edge portion region.

**18.** The authentication verification device according to claim 16, wherein
the acquisition circuit acquires, as the feature information, a shape formed by the edge portion.

**19.** The authentication verification device according to claim 16, wherein
the acquisition circuit acquires, as the feature information, a line segment length of the edge portion.

**20.** The authentication verification device according to claim 16, wherein
the acquisition circuit acquires, as the feature information, an area ratio of the edge portion region that is inside and outside the edge portion.

**21.** The authentication verification device according to claim 16, further comprising a partitioning circuit that divides the edge portion region into a plurality of cells.

**22.** The authentication verification device according to claim 21, wherein

a size of a cell obtained from partitioning by the partitioning circuit and a shape of the cell are randomly determined.

23. The authentication verification device according to claim 21, wherein
a size of a cell obtained from partitioning by the partitioning circuit and a shape of the cell are determined in advance.

24. The authentication verification device according to claim 15, further comprising

a database that stores a pair consisting of the certification code and the feature information of the sticker when the display is manufactured, wherein
the feature information stored in the database includes image data of the second region.

25. The authentication verification device according to claim 15, further comprising

a database that stores a pair consisting of the certification code and the feature information of the sticker when the display is manufactured, wherein
the feature information stored in the database does not include image data of the second region.

26. The authentication verification device according to claim 21, wherein
the acquisition circuit acquires, as the feature information, an area ratio of a light region and a dark region determined from grayscale binarization processing of at least one cell among a plurality of cells divided by the partitioning circuit.

27. The authentication verification device according to claim 21, wherein
the acquisition circuit acquires, as the feature information, a shape formed by the edge portion in at least one cell among a plurality of cells divided by the partitioning circuit.

28. The authentication verification device according to claim 21, wherein
the acquisition circuit acquires, as the feature information, a line segment length of the edge portion in at least one cell among a plurality of cells divided by the partitioning circuit.

29. The authentication verification device according to claim 21, wherein
the acquisition circuit acquires, as the feature information, an area ratio of at least one cell among a plurality of cells divided by the partitioning circuit that is inside and outside the edge portion.

30. The authentication verification device according to claim 21, wherein

the partitioning circuit divides at least one cell among the plurality of cells into a plurality of subcells, and
the acquisition circuit acquires, as the feature information, an area ratio of a light region and a dark region determined from grayscale binarization processing of at least one subcell among a plurality of subcells divided by the partitioning circuit.

31. A method for verifying authenticity for performing authenticity verification of a display, wherein

the display includes a first region and a second region,
a certification code is formed in the first region, and a sticker is attached to the second region, and
an arithmetic circuit
causes a pair consisting of a certification code read from the first region and a verification record obtained by capturing feature information of the second region to be stored in a database,
causes a camera to capture a display, being a target of authenticity verification,
cuts out the first region,
reads the certification code of the first region that has been cut out,
causes the feature information of the second region that has been captured by the camera using specified capture conditions to be acquired, and
performs authenticity verification of a display, being a target of the authenticity verification, by matching the certification code that has been read and the feature information that has been obtained with the verification record obtained by referring to the database using the certification code.

32. An individual authentication method for performing individual authentication of a transfer article that is formed by transferring a foil based on feature information of pinholes formed in the foil at the time of transfer.

33. The individual authentication method according to claim 32, wherein
the feature information includes at least one of a location, a shape, a size, a number, and a total area of the pinholes.

34. The individual authentication method according to claim 32, wherein
the feature information includes at least one of a shape, a size, a number, and a total area of the pinholes in a specified region of the foil.

35. The individual authentication method according to claim 34, wherein
there exists a plurality of the specified regions.

36. The individual authentication method according to claim 34, wherein
the specified region is not demetallized.

37. A transfer foil that is formed by laminating at least a reflective layer and an adhesive layer, wherein

the adhesive layer contains a filler, and
random pinholes are formed in the reflective layer due to the filler when a transfer article is transferred.

38. The transfer foil according to claim 37, wherein
the filler is patterned and is included in the adhesive layer.

39. The transfer foil according to claim 37, wherein
the filler consists of a plurality of types of fillers having different particle sizes.

40. The transfer foil according to claim 39, wherein
the plurality of types of fillers consists of three types of fillers, being a large diameter filler, a medium diameter filler, and a small diameter filler.

41. The transfer foil according to claim 37, wherein
the filler has a particle size of 2 to 15 $\mu$m, and a concentration in the adhesive layer of 3 to 10% by weight.

42. The transfer foil according to claim 37, wherein
feature information of the random pinholes is unique for each transfer article.

43. The transfer foil according to claim 42, wherein
the feature information includes at least one of a location, a shape, a size, a number, and a total area of the pinholes.

44. The transfer foil according to claim 42, wherein
the feature information is used for individual authentication of each transfer article.

45. A transfer article formed by transferring a foil formed having random pinholes.

46. The transfer article according to claim 45, wherein
feature information of the random pinholes is unique for each transfer article.

47. The transfer article according to claim 46, wherein
the feature information includes at least one of a location, a shape, a size, a number, and a total area of the pinholes.

48. The transfer article according to claim 46, wherein
the feature information is used for individual authentication of each transfer article.

49. A verification device that performs authenticity verification of a display,

the display including a first region and a second region,
the first region being formed with a certification code or a chip module provided with a terminal or an antenna storing the certification code,
the second region having a sticker attached thereto that encloses a trace recording layer having feature information caused by a defect, a fluctuations, or an error at the time of manufacturing, in which the trace recording layer is any one of an aliphatic compound, an aromatic compound, a metal, a glass, a crystal, or a composite thereof, and
the certification code includes an identifier that is capable of querying the feature information, ciphertext obtained by encrypting a hash value of the feature information with a private key, or both,
the verification device comprising:

a camera that captures the display;
a cutting circuit that cuts out image data of the first region and image data of the second region from capture data of the display that has been captured by the camera;
a reading circuit that reads the certification code from capture data of the first region that has been cut out, or electrically reads the certification code using a contact point of the chip module or by electromagnetic wave communication;
an acquisition circuit that acquires capture data of the trace recording layer from capture data of the second region that has been cut out; and
a matching circuit that performs authenticity verification of a display, being a target of the authenticity verification, by querying the feature information stored in a server with the identifier of the certification code read by the reading circuit and acquiring feature data under a set verification condition, or decrypting ciphertext of the certification code using a public key, and matching the feature information acquired from capture data of the trace recording layer acquired by the acquisition circuit.

50. A verification method performed by the verification device according to claim 49, wherein

the certification code includes an identifier capable of querying the feature information, the identifier includes a token that records identification information of an owner of the display, and
the matching circuit certifies authenticity of the display by acquiring verification data corresponding to identification information recorded in the token from an authenticity certification database, referring to the identification information of the owner that is recorded in the token, and receiving a verification result for the owner of the display.

# FIG.1

# FIG.2

# FIG.3

# FIG.4

# FIG.5

# FIG.6

30

33

31

NATIONALITY:
NAME:
BIRTH:
NUMBER:

31

J1    J2    32    J1

# FIG.7

52

# FIG.8

43
42
10
41

# FIG.9A

60
L
30
10

# FIG.9B

T    62a
10
33
62
62b

# FIG.10

# FIG.11

# FIG.12

# FIG.13

```
      ┌─────────────┐
      │    START    │
      └──────┬──────┘
             │
             ▼
 ┌───────────────────────┐
 │    CAPTURE DISPLAY     │───S1
 └───────────┬───────────┘
             │
             ▼
 ┌───────────────────────┐
 │ READ INDIVIDUAL INFORMATION │───S2
 └───────────┬───────────┘
             │
             ▼
 ┌─────────────────────────────────┐
 │ ACQUIRE IMAGE OF OUTLINE SHAPE OF BURRS │───S3
 └───────────┬─────────────────────┘
             │
             ▼
 ┌─────────────────────────────────┐
 │ REGISTER ASSOCIATION IN DATABASE │───S4
 └───────────┬─────────────────────┘
             │
             ▼
      ┌─────────────┐
      │     END     │
      └─────────────┘
```

# FIG.14

```
                    ┌──────────┐
                    │  START   │
                    └────┬─────┘
                         │
                         ▼
        ┌─────────────────────────────┐
        │      CAPTURE DISPLAY        │──── S11
        └─────────────┬───────────────┘
                      │
                      ▼
        ┌─────────────────────────────┐
        │  READ INDIVIDUAL INFORMATION │──── S12
        └─────────────┬───────────────┘
                      │
                      ▼
        ┌─────────────────────────────┐
        │      ACQUIRE IMAGE OF       │──── S13
        │   OUTLINE SHAPE OF BURRS    │
        └─────────────┬───────────────┘
                      │
                      ▼
        ┌─────────────────────────────┐
        │ ACQUIRE IMAGE ASSOCIATED WITH │──── S14
        │ INDIVIDUAL INFORMATION FROM │
        │          DATABASE           │
        └─────────────┬───────────────┘
                      │
                      ▼
        ┌─────────────────────────────┐
        │ COMPARE ACQUIRED IMAGE WITH │──── S15
        │  IMAGE ACQUIRED IN STEP S13 │
        └─────────────┬───────────────┘
                      │          S16
                      ▼
               ◇─────────────◇      NO
              < DO IMAGES MATCH? >────────────┐
               ◇─────────────◇                │
                      │ YES                    │
                      ▼                        ▼
        ┌──────────────────┐         ┌──────────────────┐
        │    AUTHENTIC     │ S17     │   NOT AUTHENTIC  │ S18
        └────────┬─────────┘         └─────────┬────────┘
                 │                              │
                 ▼◄─────────────────────────────┘
          ┌──────────┐
          │   END    │
          └──────────┘
```

# FIG.15

# FIG.16

# FIG.17

107
ROM

| CUTTING PROGRAM | ~ 121 |
| READING PROGRAM | ~ 122 |
| DETECTION PROGRAM | ~ 123 |
| PARTITIONING PROGRAM | ~ 124 |
| EXTRACTION PROGRAM | ~ 125 |
| MATCHING PROGRAM | ~ 126 |
| REGISTRATION PROGRAM | ~ 127 |

# FIG.18

100A

103
130
STORAGE DEVICE — 110
DATABASE — 111
131
b
30

# FIG.19

# FIG.20

EP 4 397 480 A1

# FIG.21A

```
          ┌─────────────┐
          │    START    │
          └─────────────┘
                 │
                 ▼
   ┌──────────────────────────┐        S700
   │     ACQUIRE IDENTIFIER    │
   └──────────────────────────┘
                 │
                 ▼
   ┌──────────────────────────┐        S701
   │     ENCRYPT IDENTIFIER    │
   └──────────────────────────┘
                 │
                 ▼
   ┌──────────────────────────┐        S702
   │     OUTPUT IDENTIFIER     │
   └──────────────────────────┘
                 │
                 ▼
   ┌──────────────────────────┐        S703
   │    DETECT EDGE PORTION    │
   └──────────────────────────┘
                 │
                 ▼
   ┌──────────────────────────┐        S704
   │  ACQUIRE FEATURE AMOUNT   │
   └──────────────────────────┘
                 │
                 ▼
   ┌──────────────────────────┐        S705
   │ REGISTER VERIFICATION RECORD │
   └──────────────────────────┘
                 │
                 ▼
          ┌─────────────┐
          │     END     │
          └─────────────┘
```

# FIG.21B

```
        START
          │
          ▼
┌──────────────────────┐
│  ACQUIRE IDENTIFIER   │──── S700
└──────────────────────┘
          │
          ▼
┌──────────────────────┐
│  DETECT EDGE PORTION  │──── S703
└──────────────────────┘
          │
          ▼
┌──────────────────────┐
│ ACQUIRE FEATURE AMOUNT│──── S704
└──────────────────────┘
          │
          ▼
┌──────────────────────┐
│  FORM HASH FUNCTION   │──── S706
└──────────────────────┘
          │
          ▼
┌──────────────────────┐
│  ENCRYPT IDENTIFIER   │──── S701
└──────────────────────┘
          │
          ▼
┌──────────────────────┐
│   OUTPUT IDENTIFIER   │──── S702
└──────────────────────┘
          │
          ▼
┌──────────────────────────┐
│ REGISTER VERIFICATION    │──── S705
│        RECORD            │
└──────────────────────────┘
          │
          ▼
         END
```

# FIG.22

32

40,22

T1

39

# FIG.23

32

40a

T2

T3

40b

39

# FIG.24

# FIG.25A

# FIG.25B

71

80    81

# FIG.25C

71

82

# FIG.25D

# FIG.26A

# FIG.26B

# FIG.26C

# FIG.26D

# FIG.27

START

CAPTURE DISPLAY — S1300

CUT OUT CAPTURE DATA — S1301

S1302

IS CERTIFICATION CODE PRESENT ?  — NO

YES

READ CERTIFICATION CODE — S1303

DETECT EDGE PORTION REGION — S1304

ACQUIRE FEATURE INFORMATION — S1305

S1306

COMPARE IDENTIFIER AND FEATURE AMOUNT PAIR WITH VERIFICATION RECORD ?  — NG

OK

AUTHENTIC ARTICLE — S1307          COUNTERFEIT ARTICLE — S1308

END

# FIG.28

(a)

HOT PRESS
TRANSFER

(b)

EP 4 397 480 A1

# FIG.29A

REFLECTION CAPTURE EXAMPLE WITH OPTICAL MICROSCOPE (150X) OF
TRANSFER FOIL WITH ETCHED REFLECTIVE LAYER

# FIG.29B

REFLECTION CAPTURE EXAMPLE WITH OPTICAL MICROSCOPE (150X) OF
TRANSFER FOIL WITH ETCHED REFLECTIVE LAYER

# FIG.30

# FIG.31

FIG.32

# FIG.33

| EXPERIMENT No. | ADHESIVE LAYER COMPOSITION | | FILLER ADDITION RATE | | | TOTAL AREA RATIO OF PINHOLES (%) |
|---|---|---|---|---|---|---|
| | RESIN COMPONENT | NANOSILICA | SMALL DIAMETER FILLER $(3\mu)$ | MEDIUM DIAMETER FILLER $(8\mu)$ | LARGE DIAMETER FILLER $(14\mu)$ | |
| 1 | 58% | 34% | − | 5% | 3% | 0.32 |
| 2 | 100% | − | − | − | − | 0.13 |
| 3 | 63% | 37% | − | − | − | 0.24 |
| 4 | 43% | 53% | − | 5% | − | 0.28 |
| 5 | 43% | 47% | 9% | − | − | 0.27 |

# FIG.34

# FIG.35

# FIG.36

# FIG.37

# FIG.38

# FIG.39

## INTERNATIONAL SEARCH REPORT

| International application No. |
|---|
| **PCT/JP2022/032610** |

**A. CLASSIFICATION OF SUBJECT MATTER**

***B32B 7/06***(2019.01)i; ***B32B 27/20***(2006.01)i; ***B42D 25/30***(2014.01)i; ***B44C 1/17***(2006.01)i; ***G06K 19/06***(2006.01)i;
***G06K 19/14***(2006.01)i; ***G07D 7/2033***(2016.01)i; ***H04L 9/32***(2006.01)i; *G06F 21/64*(2013.01)n; *G06F 21/73*(2013.01)n
FI: B32B7/06; H04L9/32 200B; B42D25/30; G06K19/06 178; B44C1/17 N; B32B27/20 Z; G07D7/2033; G06K19/14 050;
G06F21/73; G06F21/64

According to International Patent Classification (IPC) or to both national classification and IPC

**B. FIELDS SEARCHED**

Minimum documentation searched (classification system followed by classification symbols)

B32B7/06; B32B27/20; B42D25/30; B44C1/17; G06K19/06; G06K19/14; G07D7/2033; H04L9/32; G06F21/64; G06F21/73

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2013-7887 A (FUJIFILM CORPORATION) 10 January 2013 (2013-01-10) claims, paragraph [0020]-[0047], [0083]-[0169], fig. 1-20 | 1, 6, 7 |
| Y | | 2-5, 12 |
| Y | JP 2009-134398 A (TOPPAN PRINTING CO., LTD.) 18 June 2009 (2009-06-18) claims, paragraph [0022]-[0063], fig. 3-5 | 2-4 |
| Y | JP 2014-16422 A (DAINIPPON PRINTING CO., LTD.) 30 January 2014 (2014-01-30) claims, paragraphs [0028]-[0031], [0095], [0121]-[0123], [0128] | 5 |
| Y | WO 2006/075470 A1 (KONICA MINOLTA PHOTO IMAGING, INC.) 20 July 2006 (2006-07-20) paragraphs [0076]-[0077] | 5 |
| X | WO 2013/137223 A1 (HITACHI, LTD.) 19 September 2013 (2013-09-19) claims, paragraphs [0018]-[0121], [0133]-[0160], [0169]-[0192], fig. 1-10 | 8-11,14-31, 49, 50 |
| Y | | 12 |

☑ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 November 2022** | **15 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
|---|
| **PCT/JP2022/032610** |

**C.    DOCUMENTS CONSIDERED TO BE RELEVANT**

| Category* | Citation of document, with indication, where appropriate, of the relevant passages | Relevant to claim No. |
|---|---|---|
| X | JP 2021-506622 A (CRANE & CO., INC.) 22 February 2021 (2021-02-22) claims, paragraphs [0001]-[0054], fig. 1-12B | 8-10, 13, 14 |
| Y | | 12 |
| X | JP 2002-140682 A (DAINIPPON PRINTING CO., LTD.) 17 May 2002 (2002-05-17) claims, paragraph [0013]-[0037], fig. 1-5 | 8-11, 13, 14, 32-36 |
| Y | | 12 |
| X | WO 2008/035859 A1 (KIM, Myung-Sook) 27 March 2008 (2008-03-27) claims, p. 2, line 21 to p. 12, bottom line, fig. 1-5 | 32-36, 45-48 |
| A | WO 2020/030372 A1 (IAI INDUSTRIAL SYSTEMS B.V.) 13 February 2020 (2020-02-13) entire text | 1-50 |
| A | JP 2008-265248 A (NATIONAL PRINTING BUREAU) 06 November 2008 (2008-11-06) entire text | 1-50 |
| A | JP 2008-80504 A (TOPPAN PRINTING COMPANY, LIMITED) 10 April 2008 (2008-04-10) entire text | 1-50 |
| A | US 2013/0239828 A1 (HAINAN YAYUAN ANTI-FRAUD TECHNIQUE INSTITUTE) 19 September 2013 (2013-09-19) entire text | 1-50 |
| A | JP 2001-1672 A (KONICA CORP.) 09 January 2001 (2001-01-09) entire text | 1-50 |
| A | WO 2017/170963 A1 (DAINIPPON PRINTING CO., LTD.) 05 October 2017 (2017-10-05) entire text | 1-50 |

Form PCT/ISA/210 (second sheet) (January 2015)

**INTERNATIONAL SEARCH REPORT**

| International application No. |
| --- |
| **PCT/JP2022/032610** |

**Box No. III        Observations where unity of invention is lacking (Continuation of item 3 of first sheet)**

This International Searching Authority found multiple inventions in this international application, as follows:

(i) The number of inventions described in the following claims of the international application is four.
Invention 1: Claims 1-7
Invention 2: Claims 8-14 and 31
Invention 3: Claims 15-30 and 49-50
Invention 4: Claims 32-48

(ii) For the reasons indicated below, this international application does not satisfy the requirement of unity of invention (Regulations under the PCT, Rule 13 (PCT Rules 13.1, 13.2, and 13.3)).

1. Determination of main invention
    The STF of the invention as in claim 1 is "the first peeling strength, which is the peeling strength when peeling the transfer material layer from the support body at a first temperature, is 0.1-0.3 gf/mm, and the difference between the first peeling strength and a second peeling strength, which is the peeling strength when peeling the transfer material layer from the support body at a second temperature which is higher than the first temperature and lower than a transfer temperature, is 0.05-0.2 gf/mm."
    Claims 2-7 have the same STF as the aforementioned STF, and thus are classified as the main invention.
    Claims 8-50 do not have the same or corresponding STF with respect to the aforementioned STF, and are not an invention that is substantially identical to or similarly closely related to the aforementioned STF. Therefore, claims 8-50 are not classified as the main invention.

2. Additional invention 1
    With regard to claims 8-50 excluding the inventions in the claims classified as the main invention, assessment for additional invention 1 is provided below.
    The STF of the invention as in claim 8 is "a display body and an authentication method, the display body including a first area including individual information, and a second area in which unique information is recorded as a unique external shape of an individual authentication sticker, wherein the individual information and the unique external shape are used in order to individually verify the authenticity of the display body."
    Claims 9-14 are classified as additional invention 1 as a result of having the same STF as the STF of claim 8.
    Here, claim 15 comprises first and second areas, affixes a sticker to the second area, and performs verification of authenticity, but is "a reading circuit that reads the test code from the segmented first area, an acquisition circuit that acquires the feature information from the segmented second area, and a configuration that acquires a feature amount from the test code read by the reading circuit, and collates the acquired feature amount with a feature amount generated from the feature information acquired by the acquisition circuit," and the feature information is a generated feature amount, rather than recorded as the unique external shape of an individual authentication sticker.
    Furthermore, claim 15 also does not identify whether "the association between acquired individual information and unique information matches the association registered in the database" such as indicated in claim 14 citing claim 8, but instead "acquires a feature amount from the test code, and collates the acquired feature amount with the feature amount generated from the feature information acquired by the acquisition circuit," where the data to be collated are different.
(Note that claims 24 and 25 citing claim 15 indicate that a database is provided, but do not specify that the database is used for collation.)
    Therefore, claims 15-30 and 32-50 do not have the same or corresponding STF with respect to the STF of claim 8, and are also not inventions that are substantially identical to or similarly closely related to the STF of claim 8.
    Furthermore, claims 32-50 do not have the same or corresponding STF with respect to the STF of claim 8, and are clearly also not an invention that is substantially identical to or similarly closely related to the STF of claim 8.
    Meanwhile, in claim 31, describing a configuration that comprises first and second areas, affixes a sticker to the second area, and performs verification of the authenticity, wherein "a pair of a test code read from the first area and a verification recorded obtained by imaging feature information of the second area is stored in a database," "the read test code and the acquired feature information are collated with the verification record obtained by reference to the database by the test code, and set as the target of verification of the authenticity" is considered to be at least substantially identical to or similarly closely related to feature in claim 8 of "a reading circuit that reads the test code from the segmented first area, an acquisition circuit that acquires the feature information from the segmented second area, and a configuration that acquires a feature amount from the test code read by the reading circuit, and

Form PCT/ISA/210 (continuation of first sheet) (January 2015)

**INTERNATIONAL SEARCH REPORT**

| International application No. |
| --- |
| **PCT/JP2022/032610** |

| Box No. III    Observations where unity of invention is lacking (Continuation of item 3 of first sheet) |
| --- |

collates the acquired feature amount with a feature amount generated from the feature information acquired by the acquisition circuit."

Therefore, claim 31 is an invention having an STF corresponding to the STF of claim 8, or at least not an invention substantially identical or similarly closely related. Thus, claim 31 is classified as additional invention 1.

Furthermore, claims 15-30 and 32-50 do not share the same or corresponding STF with respect to the STF of claim 8, and are also not an invention that is substantially identical to or similarly closely related to the STF of claim 8. Thus, claims 15-30 and 32-50 are not classified as additional invention 1.

3. Additional invention 2

With regard to claims 15-30 and 32-50 excluding the inventions in the claims classified as the main invention and additional invention 1, assessment of additional invention 2 is provided below.

The STF of the invention as in claim 15 is "an authenticity verification device, comprising: a reading circuit that reads the test code from the segmented first area; an acquisition circuit that acquires the feature information from the segmented second area; and a collation circuit that acquires a feature amount from the test code read by the reading circuit, and collates the acquired feature amount with a feature amount generated from the feature information acquired by the acquisition circuit, the collation circuit verifying the authenticity of a display device subjected to verification of the authenticity thereof."

Claims 16-30 have the same STF as the STF of claim 15, and thus are classified as additional invention 2.

Claim 49 is a device that comprises first and second areas, affixes a sticker to the second area, and performs verification of authenticity, wherein the sticker is "a sticker including a trace recording layer," and "a reading circuit that reads the test code from imaging data of the segmented first area, or electrically reads the test code by a contact or electromagnetic wave communication of the chip module; an acquisition circuit that acquires imaging data of the trace recording layer from imaging data of the segmented second area; and a configuration that acquires feature data under a verification condition set by referring to the feature information stored in the server as the identifier of the test code read by the reading circuit, or decodes ciphertext of the test code with a public key, and collates the same with the feature information acquired from the imaging data of the trace recording layer acquired by the acquisition circuit." Therefore, in terms of performing verification of authenticity by comparing a feature amount (information about the second area) referred to from information about the first area with a feature amount acquired from information about the second area, claim 49 is not an invention having an STF corresponding to the STF of claim 15, and is also not an invention at least substantially identical or similarly closely related, and thus is classified as additional invention 2.

Claim 50 has the same STF as the STF of claim 49, and thus is classified as additional invention 2.

Claims 32-48 do not have the same or corresponding STF with respect to the STF of claim 15 and are not an invention that is substantially identical to or similarly closely related to the STF of claim 15. Therefore, claims 32-48 cannot be classified as additional invention 2.

4. Additional invention 3

With regard to claims 32-48 excluding the inventions in the claims classified as the main invention, additional invention 1, and additional invention 2, assessment of additional invention 3 is provided below.

The STF of the invention as in claim 32 is "an individual authentication method for performing individual authentication of transferred matter obtained by a foil being transferred on the basis of feature information about a pinhole formed in the foil during transferring."

Claims 33-36 have the same STF as the STF of claim 32, and thus are classified as additional invention 3.

Claim 44 citing claim 37 and claim 48 citing claim 45 indicate that transfer foil or transferred matter obtained by foil being transferred is used for individual authentication, and thus have the same STF as the STF of claim 32. Thus, these claims are classified as additional invention 3.

The transferred matter set forth in claims 37-43 and claims 45-47 is an invention having the same or corresponding STF with respect to the invention as in claim 32 among the inventions as in the claims depending from the independent claim, when taking into consideration the benefit of the applicant. Therefore, these claims are classified as additional invention 3.

5. The number of inventions

In the light of the above, the number of additional inventions is three, and four, which is obtained by adding one, i.e., the number of main inventions, to the number of additional inventions, is calculated as the number of inventions included in the claims.

Form PCT/ISA/210 (continuation of first sheet) (January 2015)

**INTERNATIONAL SEARCH REPORT**

International application No.

**PCT/JP2022/032610**

| Box No. III | Observations where unity of invention is lacking (Continuation of item 3 of first sheet) |

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (January 2015)

EP 4 397 480 A1

## INTERNATIONAL SEARCH REPORT
### Information on patent family members

| International application No. |
|---|
| **PCT/JP2022/032610** |

| Patent document cited in search report | | | Publication date (day/month/year) | Patent family member(s) | | | Publication date (day/month/year) |
|---|---|---|---|---|---|---|---|
| JP | 2013-7887 | A | 10 January 2013 | (Family: none) | | | |
| JP | 2009-134398 | A | 18 June 2009 | (Family: none) | | | |
| JP | 2014-16422 | A | 30 January 2014 | (Family: none) | | | |
| WO | 2006/075470 | A1 | 20 July 2006 | (Family: none) | | | |
| WO | 2013/137223 | A1 | 19 September 2013 | JP | 2013-190478 | A | |
| JP | 2021-506622 | A | 22 February 2021 | US | 2018/0104976 | A1 | |
| | | | | claims, paragraphs [0001]-[0070], fig. 1-12B | | | |
| | | | | WO | 2019/118904 | A1 | |
| | | | | EP | 3723996 | A1 | |
| | | | | KR | 10-2020-0096544 | A | |
| | | | | CN | 111511572 | A | |
| JP | 2002-140682 | A | 17 May 2002 | (Family: none) | | | |
| WO | 2008/035859 | A1 | 27 March 2008 | EP | 2071489 | A1 | |
| | | | | KR | 10-2008-0026829 | A | |
| | | | | CA | 2664074 | A | |
| WO | 2020/030372 | A1 | 13 February 2020 | US | 2021/0309039 | A1 | |
| | | | | JP | 2021-533013 | A | |
| | | | | EP | 3608121 | A1 | |
| | | | | EP | 4000944 | A1 | |
| | | | | CN | 112672889 | A | |
| JP | 2008-265248 | A | 06 November 2008 | (Family: none) | | | |
| JP | 2008-80504 | A | 10 April 2008 | (Family: none) | | | |
| US | 2013/0239828 | A1 | 19 September 2013 | WO | 2012/055270 | A1 | |
| | | | | EP | 2634761 | A1 | |
| | | | | CN | 102394029 | A | |
| | | | | AU | 2011320299 | A | |
| | | | | RU | 2013122585 | A | |
| | | | | BR | 112013009868 | A | |
| | | | | CN | 102682659 | A | |
| JP | 2001-1672 | A | 09 January 2001 | (Family: none) | | | |
| WO | 2017/170963 | A1 | 05 October 2017 | US | 2019/0143641 | A1 | |
| | | | | EP | 3434495 | A1 | |
| | | | | CN | 108883649 | A | |
| | | | | KR | 10-2018-0120237 | A | |
| | | | | TW | 201808611 | A | |

Form PCT/ISA/210 (patent family annex) (January 2015)

78

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018183991 A
- JP 2018183992 A
- WO 2018194178 A

- JP H667592 A
- JP 4677683 B